(19) Europäisches Patentamt
European Patent Office
Office européen des brevets

(11) EP 3 788 305 B1

(12) EUROPEAN PATENT SPECIFICATION

(45) Date of publication and mention of the grant of the patent:
**03.06.2026 Bulletin 2026/23**

(21) Application number: **19793935.8**

(22) Date of filing: **29.04.2019**

(51) International Patent Classification (IPC):
***F23D 1/06*** (2006.01) ***F03D 7/02*** (2006.01)

(52) Cooperative Patent Classification (CPC):
(C-Sets available)
**B22F 5/04; F03D 1/0675; F03D 7/02; F03D 7/022;**
B22F 10/18; B22F 10/31; B22F 12/222;
B22F 2998/10; B33Y 40/00; B33Y 80/00;
F03D 1/0633; F05B 2230/30; F05B 2230/31;
F05B 2230/50; F05B 2240/31; (Cont.)

(86) International application number:
**PCT/US2019/029755**

(87) International publication number:
**WO 2019/210330 (31.10.2019 Gazette 2019/44)**

# (54) FLEXIBLE WIND TURBINE BLADE WITH ACTIVELY VARIABLE TWIST DISTRIBUTION

FLEXIBLE WINDTURBINENSCHAUFEL MIT AKTIV VARIABLER DRALLVERTEILUNG

PALE FLEXIBLE D'ÉOLIENNE, À RÉPARTITION DE TORSION ACTIVEMENT VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2018 US 201862664138 P**

(43) Date of publication of application:
**10.03.2021 Bulletin 2021/10**

(73) Proprietor: **The Research Foundation for the State University of New York**
**Buffalo, NY 14228-2567 (US)**

(72) Inventors:
- **HALL, John**
  **Clarence Center, NY 14032 (US)**
- **KHAKPOUR NEJADKHAKI, Hamid**
  **Amherst, NY 14228 (US)**

(74) Representative: **Kramer, Dani et al**
**Mathys & Squire**
**The Shard**
**32 London Bridge Street**
**London SE1 9SG (GB)**

(56) References cited:

| | |
|---|---|
| **WO-A1-2017/198267** | **WO-A2-2012/103891** |
| **GB-A- 2 525 900** | **US-A- 5 681 014** |
| **US-A1- 2012 169 060** | **US-A1- 2014 037 455** |
| **US-A1- 2014 037 455** | **US-A1- 2015 300 036** |
| **US-A1- 2015 354 536** | **US-B2- 7 118 338** |
| **US-B2- 7 118 338** | **US-B2- 7 360 996** |
| **US-B2- 7 364 407** | **US-B2- 9 784 240** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
Y02E 10/72; Y02P 10/25; Y02P 70/50

C-Sets
B22F 2998/10, B22F 10/18, B22F 3/10

## Description

### Cross-Reference to Related Applications

This application claims priority to U.S. Provisional Application No. 62/644,138, filed on April 28, 2018.

### Field of the Disclosure

The present disclosure generally relates to a flexible wind turbine blade which actively twists during operation to maximize efficiency.

### Background of the Disclosure

Wind power is the largest source of new renewable energy. In a two year period that spanned from 2015 to 2016, the global capacity of wind energy grew from 370 to 487 GW. Recent concerns about climate change and the volatile cost of fossil fuels have likely revived interest in renewable energy, and wind energy continues to attract attention as its costs decrease. The reduced costs can be attributed to new technology. It has enabled a class of wind turbines that produce energy more effectively and at a lower cost. Examples of research innovation include variable rotor speed ("VRS") enabled by power conversion equipment and novel gearbox designs that increase wind capture. VRS increases the amount of wind converted to electrical power during partial load operation. VRS can be achieved by controlling the generator torque through the power conditioning equipment. It can also be realized through a variable ratio gearbox or continuously variable transmission ("CVT").

To maximize the benefits of VRS capability, it is beneficial to control the rotor speed in relation to the wind speed. Some researchers have worked on a universal maximum power point tracking ("MPPT") controller for small wind turbines. The MPPT controller can track the optimum point without using wind turbine characteristics. These researchers used an adaptive filter with a fuzzy logic based MPPT controller. Other researchers controlled a doubly-fed induction generator ("DFIG") using references given by an MPPT. These researchers used a second-order sliding mode to track the DFIG torque to reach the maximum power. This work suggests that this method is more accurate than tracking control currents. Still others achieved maximum performance by controlling power converters on both the grid and generator side. This works through the generator to control rotor speed for maximum power production. On the grid side, the active and reactive power are controlled by the current in the direct and quadrature axes. Some researchers used the MPPT in a turbine with a permanent magnet synchronous generator ("PMSG") to extract the maximum power. Their system senses only DC link power for this goal. Other researchers proposed a control strategy to improve the MPPT efficiency. The method is based on the Radial Basis Function ("RBF") neural network and adjusts the torque output with changes in wind speed. Still others combined MPPT control with blade pitch control to maximize the extracted wind power. In this arrangement, only one controller was used to reduce system complexity and cost.

Aerodynamic efficiency has also been improved through the pitch control and blade deformation. Aerodynamic performance is dependent upon the selected airfoil, tapering, and twist distribution of the blade.

The application of control to the blade pitch angle and generator torque has also increased wind turbine performance. Another way to improve aerodynamic efficiency is through blade design, including the introduction of smart blades that deform during operation. The importance of wind turbine blade design was recognized by the International Energy Agency ("IEA") as part of its midterm plan. The IEA pointed to a need for novel rotor architecture that will improve efficiency and facilitate on-site production.

Most current turbine blades have a fixed geometry. These blades are not optimal across the range of operational wind speed. Recently, a new generation of morphing blades has been the focus of research. These morphing blades passively change shape in response to applied forces. By changing shape, the blades can increase efficiency and reduce vibration in comparison to existing rigid blades. This type of blade is also less vulnerable to stall and improves lift to drag ratio. Morphing blades can also capture wind at lower wind speeds, and also reduce force acting on the rotor in extreme winds. Other research has focused on a wind turbine blade with a flexible flap assembly. This concept was found to significantly increase lift force, and also helped in drag reduction and power regulation. In another study, pitch control was combined with control of the trailing edge flap to reduce aerodynamic loads.

There has been a limited amount of work on blades with provisions to change the angle of twist during operation. One study offered a morphing segmented concept. In this work, blade segments are connected by screw sockets and a tension cable. The equivalent force between the cable tension and the centrifugal loads determines the effective angle of attack. Blade twist variation has also been the focus of research and development related to helicopter and tiltrotor blades. The latter features a versatile rotor design that allows an aircraft to operate as either a helicopter or an airplane. Each mode is associated with a unique twist angle distribution for maximum efficiency. Others have worked on the active control of the twist angle for a tiltrotor blade. After analyzing various approaches, they found the torque tube actuation concept to be the most practical, and tested it under loaded and unloaded conditions. Even others have studied a composite matrix with shape memory alloy wires that adjust the proprotor twist distribution. Still others have offered and tested a warp-twist concept for helicopter and tiltrotor blade. The design has a tubular spar with rotating ribs attached to the blade skin. By warping the skin, different twist angles could be obtained. Other researchers have focused on a mechanism that shifts the shear center of the profile to vary the twist distribution. These researchers used a clutch-like device to adjust thin internal walls to change the bending and torsional shear stresses distribution.

Additionally, the size of wind turbines has continued to increase in recent years with some systems having blades up to 75 m long. Blade size will continue to grow as large wind turbines produce energy at the lowest cost per watt. However, the large size presents challenges in manufacturing and transportation. The expense to move large blades from the manufacturing facility to the installation site can cost up to 5% of the total cost of an installed turbine. There are also several constraints on the trailers on public roadways in the United States, including overall dimensions and weight of the vehicle and load. Currently, the maximum blade length that can be transported on highways is 62 m. These constraints have driven designers to look for other design concepts and manufacturing techniques. Potential solutions include the modularization of blades and efforts to manufacture blades at the installation site. A first company uses a space frame design to make a modular blade. This blade includes three spars connected by ribs and non-structural skin. This company claims its new design results in a 7% increase in average annual energy, a 75% decrease in transportation costs, and a 50% increase in service life, compared to the current blades. A second company is also working on a 78 m modular blade with four sections. This blade has carbon spar boxes. Although this blade is three meters longer than Siemens B75, it has 10% lower mass. Despite the high price of carbon, the design results in a 3-5% reduction in the cost of energy.

Accordingly, there is a critical, long-felt need for a flexible, modular, wind turbine blade with actively variable twist distribution.

**Brief Summary of the Disclosure**

In an aspect of the present disclosure, a blade for a wind turbine is presented. The blade includes a spar and a blade arranged around the spar. The blade may include a root, a tip, and one or more sections, each section having a length, a stiffness ratio, and one or more ribs. Each rib may be configured to engage an actuator. Each section may further include one or more flexible segments, each flexible segment having a stiffness. The sections may be carbon-reinforced nylon. The spar may be rigid.

The blade may further include a plurality of boundary actuators, each boundary actuator positioned at a boundary formed by a pair of adjacent sections, wherein each boundary actuator is configured to engage the one or more ribs of the sections, and is further configured to twist the pair of adjacent sections forming the boundary.

The blade may further include a flexible skin arranged on the blade.

The blade may further include a pitch actuator configured to rotate the blade.

The blade may further include a root actuator configured to twist the section positioned at the root of the blade. The blade may further include a tip actuator configured to twist the section positioned at the tip of the blade.

The length and stiffness ratio of each section may be optimized for maximum efficiency during Region 2 operation. The boundary actuators may be configured to twist the blade into an optimized free shape. The free shape of the blade is the geometry of the blade when actuation is not applied during operation.

US20120169060A1 relates to a wind turbine blade is described, which extends in a spanwise direction from a root end to a tip end and defines an aerodynamic airfoil cross-section between a leading edge and a trailing edge in a chordwise direction transverse to the spanwise direction. The blade has a camber in the chordwise direction and includes a blade body and a moveable flap. The flap is moveable relative to the blade body to vary the camber of the blade. A deformable panel is located between the blade body and the moveable flap. The panel has an undulating profile comprising an alternating succession of ridges and troughs, which each extend in a first direction. The panel is formed of a material having anisotropic intrinsic stiffness with maximum anisotropic intrinsic stiffness being transverse to the first direction. In a preferred embodiment, the deformable panel is corrugated.

GB2525900A relates to a device such as a UAV, drone or quad-copter capable of controlled flight and dispensing a curable substance including an adhesive or foam on to a target. This may fix an object to the target and be repeated with further objects held by the device to be fixed to the same or other targets. The device has a processor 43 that may process sensor data to control its flight and locate the target site. The object may be a flexible elongate member and conductive, and a portion affixed to targets to create webbing. The adhesive may be UV curing, a cyanoacrylate, a two-part epoxy or a two-part ceramic. The device may pick up and retain objects in succession. Dispensing may be part of a three-dimensional printing process. Another invention relates to a dispensing assembly for use with the device having two reservoirs, a mixing chamber, actuator and pump.

US7118338B2 relates to a method for controlling a wind turbine having twist bend coupled rotor blades on a rotor mechanically coupled to a generator includes determining a speed of a rotor blade tip of the wind turbine, measuring a current twist distribution and current blade loading, and adjusting a torque of a generator to change the speed of the rotor blade tip to thereby increase an energy capture power coefficient of the wind turbine.

US20140037455A1 relates to a wind turbine blade for a rotor has a longitudinal direction extending from a root region to a blade region. The wind turbine blade is formed of a fibre-reinforced polymer material comprising a polymer matrix and a first and a second reinforcement fibre material being embedded in the polymer matrix. The wind turbine blade further comprises a first region being reinforced predominantly with the first reinforcement fibre material, a second region being reinforced predominantly with the second reinforcement fibre material, and a transition region between the first and the second region. The first region extends in the root region and the first reinforcement fibre material is a metal.

WO2012103891A2 relates to a wind turbine blade defining an aerodynamic airfoil cross-section between a leading edge and a trailing edge, the blade comprising a blade body; a flap moveable relative to the blade body, the flap comprising a pressure skin, a suction skin and a core disposed between the pressure skin and the suction skin; wherein the core comprises an anisotropic material.

US20150354536A1 relates to a wind turbine blade comprising at least one deformable trailing edge section having a plurality of actuators consecutively arranged substantially downstream from one another and a control system for controlling the actuators, wherein a downstream end of one actuator is connected by a substantially rigid link with an upstream end of the next actuator and the plurality of actuators comprises an upper actuator being mounted above a chord line of the blade section and a lower actuator being mounted below a chord line of the blade section. Wind turbines comprising such a blade and methods of controlling loads on a wind turbine blade are also described.

**Description of the Drawings**

For a fuller understanding of the nature and objects of the disclosure, reference should be made to the following detailed description taken in conjunction with the accompanying drawings, in which:

Figure 1 shows an embodiment of the presently disclosed wind turbine blade;
Figure 2 illustrates turbine blade properties on a model blade;
Figure 3 illustrates additional turbine blade properties on a model blade;
Figure 4 is a flow chart of a method for designing a blade;
Figure 5 is a flow chart of iterative calculations for Blade Element/Momentum optimization;
Figure 6 is a flow chart of an iterative process for twist optimization of a blade cross-section;
Figure 7 is a graph showing the search boundary for the optimal twist angle configuration design algorithm;
Figure 8 shows another embodiment of the presently disclosed blade;
Figure 9 is a graph showing an optimized blade assembly twist angle as a function of distance from the blade root relative to stiffness ratio;
Figure 10 is a flow chart of the iterative process to minimize the area between ideal and mechanical Twist Angle Distribution curves;
Figure 11 is a graph showing the difference between ideal and mechanically possible Twist Angle Distribution curves;
Figure 12 is a graph showing blade twist angle as a function of section stiffness ratio, section length, and actuator location;
Figure 13 is a flow chart illustrating an algorithm to determine an advantageous shape of a blade;
Figure 14 is a graph showing original and optimized TAD values for different wind speeds; and
Figure 15 is a graph showing the search range created by the original blade TAD.
Figure 16: Range of transformation with respect to free position.
Figure 17: Power curve based on variable twist distribution blade.
Figure 18: Framework for active blade twist angle distribution.
Figure 19: Actuation energy required to reach from position "a" to position "b".
Figure 20: Finding the optimum free shape to minimize the required actuation energy for a specific installation site.
Figure 21: Model showing drivetrain with blade control.
Figure 22: Actuators position assuming that optimal twist distribution for 5 m/s is free-shape twist.
Figure 23: Structure for blade control.
Figure 24: Comparison of produced power during 24 hours by original and modified twist distributions.
Figure 25: Actuators position in a blade with 9 m/s twist for free shape.
Figure 26: Adaptively compliant wind turbine blade with out-of-plane twisting capability.
Figure 27: Development environment for an aerodynamic adaptive structure.
Figure 28: Definition of the absolute twist angle, $\Psi_\alpha$, at distance, r, from blade root.
Figure 29: A modular blade with flexible sections composed of two stiffness regions.
Figure 30: Two blade segments with torsional stiffness $k_1$ and $k_2$ connected in series. An actuator provides a torque, T, to twist the segments.
Figure 31: Variation of twist within blade section. By varying the stiffness ratio, R, the actual twist angle (dotted line) can be optimized to approach the ideal twist angle (solid curve).
Figure 32: Flowchart for optimization of actuator locations, *P*, and stiffness ratios, R.
Figure 33: Ideal twist angle distributions, measured with respect to the rotator plane.
Figure 34: Ideal and actual twist angle distributions using different weighting schemes. Optimal actuator locations are specified by markers.
Figure 35: Squared twist angle error, summed over all wind speeds, as a function of distance from the blade root.
Figure 36: Percent improvement in $C_p$ as a function of wind speed, for all weighting schemes.
Figure 37: Wind turbine blades featuring (a) monolithic skin monocoque, (b) single-shear web, (c) double-shear web (box spar), and (d) rib and bulkhead design.
Figure 38: (a) small scale 3D printed blade for testing and (b) The modular blade concept using additively manufactured shells.
Figure 39: 3D model of the segment.
Figure 40: Computational framework for design and analysis.
Figure 41: Definition of twist angle, $\psi$, at distance, *d*.
Figure 42: The classical BEM iterative calculations flowchart.
Figure 43: The design space exploration algorithm.
Figure 44: Schematic for a one way FSI simulation.
Figure 45: Air volume surrounding the blade segment.
Figure 46: Pressure distribution over the blade segment.
Figure 47: Plots showing the minimum, maximum and free positions of the flexible blade.
Figure 48: The free-shape cross-section (-.-) compared to the twisted section (X), (a) as it occurs, (b) with the chord lines aligned.
Figure 49:
Figure 50:

## Detailed Description of the Disclosure

Although claimed subject matter will be described in terms of certain embodiments, other embodiments, including embodiments that do not provide all of the benefits and features set forth herein, are also within the scope of this disclosure. Various structural, logical, process step, and electronic changes may be made without departing from the scope of the disclosure.

In an aspect of the present disclosure, a blade **100** for a wind turbine is presented. The blade **100** includes a spar **110.** The spar **110** has a blade axis along a longitudinal length from a root end **112** (a proximal end-at or near the hub of a turbine) to a tip end **114** (e.g., a distal end-at or near an outer circumference of the turbine). The spar **110** may be rigid. The rigidity of the spar **110** may be dependent upon the mass and scale of the blade **100,** or the mass and scale of any combination of the components of the blade **100.** The spar **110** provides the required strength to prevent structural failure of the blade **100.** The spar **110** may be formed from fiber-reinforced composites having, for example, s-glass and h-glass fibers and thermoset matrices (such as, for example, epoxies, polyesters, and vinyl esthers). Other suitable materials can be used and will be apparent to one having skill in the art in light of the present disclosure. In some embodiments, the spar **110** may be tapered along its length. For example, a spar **110** may have a cross-sectional area which becomes smaller towards an outer (tip) end **114** of the spar **110.**

The blade **100** includes a blade body **120** arranged around the spar **110.** The blade body **120** may form an airfoil shape of the blade **100**-*i.e.,* the blade body **120** may have a cross-sectional shape (viewed at a point along the blade axis) so as to act as an airfoil. The blade body **120** has a body section **130** spanning a length along the blade axis between two boundary ends **133,134**. Each boundary end **133,134** is configured to engage with a corresponding boundary actuator. For example, two boundary actuators may be provided, each boundary actuator attached to a corresponding one of the boundary ends **133,134** of a body section **130.** In some embodiments, one or more of the boundary ends **133,134** may include a rib **135** and the rib(s) **135** may be configured to attach to a corresponding boundary actuator.

The body section **130** may have a first segment **131** extending along a first portion of the length, the first segment **131** having a first stiffness. The body section **130** may further include a second segment **132** attached to the first segment **131** and extending along a second portion of the length of the spar **110.** The second segment **132** has a second stiffness. The second stiffness may be the same or different from the first stiffness. In this way, the body section **130** may be said to have a stiffness ratio relating the first stiffness and the second stiffness. Each body section **130** may further include one or more segments **131,132**. Each segment **131** has a stiffness which may be the same or different from other segments **131.** In this way, for example, the stiffness ratio of a body section **130** having two segments **131,132** may be defined as the stiffness of the second segment **132** divided by the stiffness of the first segment **131.** The stiffness of each segment **131,132** may vary between 10 to 100 N/m based upon the segment **131** location and scale. However, the stiffness may be more than or less than this range. The area between two segments **131,132** within a single body section **130** may be further defined as a transition plane **150.** In some embodiments, a rib **135** is bonded to each segment **131** at the transition plane **150.** Such a rib at the transition plane may not be connected to an actuator (*e.g.*, the rib may be free to rotate about the spar **110).**

Some embodiments of a blade body **120** may include includes two or more body sections **130.** Each body section **130** has a section length along the primary axis. Adjacent boundary ends of adjacent body sections may engage with a common boundary actuator. In this way, a single boundary actuator may twist two adjacent body sections **130** at the adjacent boundary ends **133,134**. Each body section **130** has a stiffness which may be constant over the section length or may vary over the section length. Where the stiffness varies over the section length, the overall stiffness of the body section **130** may be represented as a stiffness ratio. For example, the stiffness ratio of a body section **130** may be defined as a stiffness at a distal boundary end **134** of the body section divided by a stiffness at a proximal boundary end **133** of the section. The body sections **130** may be made from plastics, for example, thermoplastics such as, for example, carbon-reinforced nylon. Other materials, either alone or in combination, may be suitable for the body section(s) and will be apparent to one having skill in the art in light of the present disclosure. The stiffness of the body section **130** may be defined by the material of the body section **130,** the overall shape of the body section **130,** and/or the internal structure of the body section **130,** etc. For example, the body section **130** may be solid or may have an internal structure including voids (internal volumes of air or other material different from the section material), and/or a regular or irregular framework of the section material. For example, the embodiment of Figure 1 includes a box-like or "waffle" framework. The body sections **130** may be made from fiber-reinforced composites comprising carbon or Kevlar fibers and thermoset matrices. The body sections **130** may be produced using Additive Manufacturing ("AM") techniques or otherwise.

In some embodiments, a rib **135** may be bonded to each end of a body section **130.** In some embodiments, the ribs **135** have a shape which matches the cross-sectional shape of the body section(s) **130** to which each rib **123** is bonded. In this way, the overall shape of the bladebody **120** may continue over its length without disruption at the rib(s) **135.** Where a rib **135** is located between two body sections **130,** the rib **135** may be bonded to each body section **130.** The rib(s) **135** may be rigid. The ribs **135** may be made of the same materials as the spar **110** or a different material. Each rib **135** may be movable, for example, rotatable. In particular, each rib **135** may be configured to be rotatable about the spar **110.** With reference to Figure 8, a blade **200** may include one or more boundary actuators **140.** Each boundary actuator **140** may be positioned at a boundary end **160.** As stated above, in some embodiments, a boundary actuator **140** may engage adjacent boundary ends **160** such as the boundary ends **160** formed by a pair of adjacent sections **170.** In some embodiments, a boundary actuator **140** may be configured to engage a rib **165** at a boundary end **160.** In some embodiments, a boundary actuator **140** may be configured to engage a rib between adjacent boundary ends **160.** In this way, each rib **165** may be moved (*e.g.*, rotated about the spar). Such movement may cause the corresponding body sections **170** to move. For example, where a rib **165** bonded to a distal end of a body section **170** is rotated more than a rib **165** bonded to a proximal end of the body section **170,** the body section **170** is caused to twist. The twist of the body section **170** may be uniform (for example, where the cross-sectional area and stiffness are constant over the section length) or non-uniform (for example, where the cross-sectional area and/or stiffness vary over the section length, for example, at different segments of a body section). In some embodiments, one or more ribs **165** of the blade **100** will be engaged with a boundary actuator **140,** while one or more other ribs **165** will not be engaged with a boundary actuator **140.**

The blade **100** may further include a deformable skin **180** arranged on the blade **120.** The deformable skin **180** may be nonstructural (*i.e.,* does not contribute significantly to the strength of the blade). The deformable skin **180** may be made from any suitable material, such as, for example, neoprene, graphene, or polyurethane.

The blade **100** may further include a pitch actuator configured to rotate the blade **100.** The pitch actuator may be located at the root end **121** and connected to a hub. For example, the spar **110** may be connected to the pitch actuator such that the pitch actuator may rotate the spar around its primary longitudinal axis, thereby rotating the blade **100.**

The blade may further include a root actuator configured to twist the section positioned at the root of the blade. The blade may further include a tip actuator configured to twist the section positioned at the tip of the blade. In some embodiments, the root actuator and/or the tip actuator may be boundary actuators.

The length and stiffness ratio of each body section **130** may be enhanced for improved efficiency during Region 2 operation (the operation mode below the rated speed of the turbine, where it is desirable to maximize the power extracted from the wind). The boundary actuators **140** may be configured to actively twist the blade body **120** during Region 2 operation to optimize the Twist Angle Distribution ("TAD") of the blade **120.** The TAD describes the twist angle of the blade **120** as a function of blade length. The TAD may be defined for discrete points along the length of the blade **120.** The TAD may vary as a function of wind speed. Techniques for designing and controlling a blade with advantageous TAD and other blade parameters are provided below and in the attachments.

## EXAMPLE 1

This non-limiting example provides a description of the function, composition, and methods of design and manufacture of an exemplary flexible blade with actively variable twist distribution according to an embodiment of the present disclosure.

The exemplary blade uses an additive manufacturing ("AM") process to make the blade segments that will be incorporated into the modular design. The exemplary design has multiple benefits that support the International Energy Agency ("IEA") vision. It can facilitate the production of blades needed for a new generation of large wind turbines. Implementation of this free-form process will eliminate the need for large molds and the associated blade production facility. As further described below in Section F, in some embodiments, blades may be manufactured at the installation site. AM also provides new capabilities in blade design. It can create complex geometries and components with directional properties. In some embodiments, the present disclosure provides structures with a low torsion-to-flexural stiffness ratio. This gives rise to the implementation of a flexible blade with an actively variable TAD. The TAD describes the twist angle of the blade as a function of blade length. It can be set through the placement of the actuators and the design of AM blade sections/segments with a desired stiffness. This capability can mitigate system vibration, facilitate the removal of blade ice, and increase aerodynamic efficiency. The development of this technology is the major focus of this disclosure. However, the work in this disclosure also provides a design methodology for an active variable TAD that increases Region 2 efficiency. It includes (1) an aerodynamic analysis that establishes the TAD of the blade, (2) a mechanical design technique that defines the placement of blade actuators and the relative stiffness of the blade sections, and (3) a method of establishing the free-shape of the blade-the shape when no actuation is applied.

**Flexible Blade Concept**

A modular blade has been devised as shown in Fig. 1. In some embodiments, the primary components include a spar, surrounding segments, and a non-structural skin. The spar is rigid, while the body segments and skin are flexible. These segments may work together in pairs to form sections, which are mounted onto the spar in series. Actuators are used to *twist* the blade into the desired TAD. A pitch actuator performs gross adjustment by rotating the spar. The remaining actuators are mounted at the section boundaries to provide fine adjustment to the TAD along the length of the blade. The placement of actuators, length of the sections, and compliance of the segments are crucial in obtaining the required TAD. The proposed framework selects the optimal values for these parameters to maximize energy production.

**Twist Angle Distribution**

The spar is connected to the hub through a pitch motor that grossly adjusts the blade angle. The angle of rotation for the spar, $\varphi_p$, is the same as the conventional pitch angle as shown in Fig. 3. It has an axis at the hub connection and is measured relative to the rotor plane of motion. Along the length, r, of the blade the local twist angle, $\varphi_b$, is measured relative to the blade root axis. Since the blade root moves with pitch actuation, the absolute local twist angle is measured using,

$$\varphi(r) = \varphi_p + \varphi_b(r) \quad (1)$$

where $\varphi$ represents the angle of twist measured relative to the rotor plane of motion at length, r, from the hub center.

**Methodology**

In some embodiments, the framework utilizes three main blocks shown in Figure 4. The process commences using a given blade design of known geometry and aerodynamic performance. The aerodynamic design establishes the TAD for discrete points of wind data that span Region 2. Each selection represents the TAD that provides maximum aerodynamic efficiency at the given wind speed. The mechanical design locates the actuators and establishes the stiffness ratio between the blade segments in each section. These parameters determine the shape of the blade as it is deformed. An optimization procedure identifies values that create the TADs found in the aerodynamic design. The last step of the procedure determines the free shape of the blade. This is the geometry of the blade when it is not deformed. Computational tools are employed in the framework to conduct the procedure. These include the National Renewable Energy Laboratory (NREL) Aerodyn software, a genetic algorithm, and a parallel computing network. The steps of the framework are described in detail in subsequent paragraphs.

**Case Study**

A case study has been conducted to demonstrate the proposed optimization method. It is based on a 20 kW wind turbine that was used in the National Renewable Energy Lab (NREL) *Unsteady Aerodynamics Experiment Phase VI* experiment. This is a fixed-speed horizontal axis system with two blades. Each blade has a length of 4.6 m with a maximum chord length of 0.714 m. It has a rotor speed of 72 RPM that achieves a torque of 2650 *Nm* at a rated speed of 13.5 m/s. This simple system was a good starting point for studying of the blade twist angle. The performance data for this blade has also been certified by NREL. It is used to characterize the aerodynamic performance of the blade with respect to the TAD. An analysis is also conducted on the original (rigid) blade to establish a baseline for the performance.

**Aerodynamic Design**

The aerodynamic design procedure determines the appropriate TAD of the blade as it varies in relation to wind speed. The objective is to maximize the efficiency of the wind turbine blade in Region 2. This is measured in terms of the power coefficient, $c_p$. The efficiency is maximized as a function of the pitch angle, twist angle configuration, and wind speed, $v$, such that:

$$c_p = f(\varphi, v) \qquad (2)$$

In the aerodynamic design the twist angle, $\varphi$ is analyzed at discrete points along the blade. The variable $\varphi_a$. represents the angle of twist with respect to the rotor plane at these points:

$$\varphi_a(i) = [\varphi_a(1), \varphi_a(2), \dots \varphi_a(N_a)] \qquad (3)$$

The aerodynamic portion of the framework includes a solver tool and aerodynamic model. This arrangement is used to evaluate the performance of various twist angle configurations.

**Aerodynamic Model**

AeroDyn was used to study the aerodynamic performance of the blade. It is a time-domain module that can compute the aerodynamic response of wind turbine blades. It requires an iterative nonlinear solution. In our model, it simulates the steady loads on the blades. These loads can be used to determine the amount of torque that is produced by the rotor. The approach is based on the quasi-steady Blade-Element/Momentum ("BEM") theory. The BEM method is known for efficiency and the ability to provide reliable blade load results. It equates the terms for thrust force and torque from momentum theory and blade element theory. It then solves the equations for the axial and angular induction factors:

$$a = \frac{1}{\frac{4Q\cos^2\emptyset}{\sigma'(C_l \sin\emptyset + C_d \cos\emptyset)} + 1} \qquad (4)$$

$$a' = \frac{1}{\frac{4Q\sin\emptyset\cos\emptyset}{\sigma'(C_l \cos\emptyset - C_d \sin\emptyset)} + 1} \qquad (5)$$

These equations are used for each blade element in the iterative process, which is illustrated in Fig. 5. The BEM technique analyzes the the blade as individual elements. The iterative process is used on each element to calculate the aerodynamic loads. Ultimately, the results are combined to provide the aerodynamic loads on the blade and rotor. In the case study, the blade cross-section was evaluated at 19 points along the length.

**Search Algorithm**

In Region 2, the optimal twist angle configuration may be found by maximizing the power coefficient. The BEM model is coupled with an optimization tool to search for a twist angle configuration. The MATLAB environment is used to create this computing structure in the case study. It is used to find the optimal TAD for a discrete range of wind speed, $v$, in Region 2, such that,

$$v(j) = [v(1), v(2), \dots, v(N_v)] \qquad (6)$$

where the first and last points in the set correspond to the cut-in and rated speed, respectively.

The iterative search algorithm finds the twist angle that maximizes the power coefficient at each cross-section. The blade calculations are nonlinear and discontinuous, and the search procedure is computationally expensive. A Genetic Algorithm ("GA") solver is used as the search tool to identify optimal twist configurations. The calculation steps for finding the twist angle of a cross-section at a given wind speed are described by the flowchart shown in Fig. 6.

The GA has capabilities in solving problems with discontinuous, non-differentiable or highly nonlinear objective functions. Still, the process indicated that there were local minima. This makes it difficult for the GA solver to find the global minimum. However, the preliminary work demonstrated that the global minimum always existed within a band of values that surround the original twist angle. Hence, a range of values can be used to constrain the search as illustrated in Fig. 7. For each cross-section the procedure begins searching near the original design twist distribution. After that, the resulting solution for the twist angle may be used to form the search domain of next step. The constraint narrows the search domain and allows the GA to find the global solution more efficiently. This procedure is repeated until the power coefficient no longer increases. This corresponds to the optimum blade twist for the given wind speed.

## Mechanical Design

The previous section determined an ideal TAD to maximize the aerodynamic efficiency. This section presents a technique to obtain the selected TADs through mechanical design. The aim is to achieve a TAD in the actual application that matches that found in the aerodynamic design. During operation, the TAD will be actively controlled in relation to wind speed. The blade is coerced into the desired shape by internal actuators. The blade segments could be additively manufactured from a flexible material such as carbon-reinforced nylon. A design technique in which the component stiffness is defined by the AM process and internal geometry is currently being investigated. For this analysis, the stiffness is considered in relative terms, or as a ratio between consecutive segments. The mechanical design establishes the stiffness ratios for each blade section and location for the intermediate actuators. The calculations concern blade deformation and, therefore, is conducted with respect to the blade axis. Optimization principles are implemented into this process to leverage the capability of the mechanical design.

## Blade Model

The exemplary blade configuration for the design process is shown in Fig. 8. The blade is constructed through a series of flexible blade segments that are spliced together and mounted on the spar. Two consecutive segments form a section. The segments, $S_{\zeta\eta}$, in each section have different torsional stiffness values. Each segment has a stiffness of $k_{\zeta\eta}$, where $\zeta$ is the section number, and $\eta$ is the segment number. The latter subscript is either 1 or 2, for the first and second segments of each section, moving from root towards the tip. The boundary between these two segments in each section is denoted by the transition plane. This point is referred to as a transition plane since the stiffness value changes across this point. An actuator is located at the boundaries of each section which are identified by the actuator planes. A single actuator acts at each of these points to twist the respective ends of the sections into shape.

There are two types of design input variables for the optimization problem. One is the stiffness ratios, $R_k$, for each section, which is defined as:

$$R_k = \frac{k_{\zeta 2}}{k_{\zeta 1}} \qquad (7)$$

where $k_{\zeta 1}$ and $k_{\zeta 2}$ refer to the stiffness values for segments 1 and 2, respectively, in section $\zeta$. The other design input defines the length of each section $\zeta$, and hence, the locations, $r_P$, of the intermediate actuators at P = {3,5,...,$2N_\zeta$-1}. The first and the last actuators at $P = \{1, 2N_\zeta+1\}$, are fixed near the root and at the tip of the blade and are not part of the analysis. The section lengths and the relative stiffness between the segments are crucial in determining the TAD. The relationship between the design inputs and the TAD for a single section is illustrated in Fig. 9. An ideal TAD is described by the solid curve, while the possible mechanical design scenarios are indicated by the dotted lines. Twist angle of the corresponding transition plane can move along the dashed line depending on the stiffness ratio. Decreasing the stiffness shifts the mechanically achievable TAD curve upwards. Increasing the ratio has the opposite effect. The mechanical design can also be shifted to the left and right along the ideal curve by adjusting the segment length, and thus, actuator locations.

## Optimization Problem

The goal of the optimization process is to identify a mechanical design that closely matches the results found in the aerodynamic design. It works by minimizing the area between the respective TAD curves. Figure 10 illustrates how the objective function is applied to this problem.

The optimization process minimizes the total area for all of the sections across the range of wind speed in Region 2: This is stated through the objective function, f,

$$f = \sum_{j=1}^{N_v} A_v(j) \qquad (8)$$

where, $A_V$ is the area between the TAD curves of the theoretical and mechanical design as computed at wind speed, v(j). The total area, $A_v$ is computed for a given wind speed using,

$$A_v(j) = \int_{r(1)}^{r(N_p)} \left|\varphi_{b,a}(r,j) - \varphi_{b,m}(r,j)\right| \, dr \quad (9)$$

where $\varphi_{b,a}$ and $\varphi_{b,m}$ represent the ideal and mechanical design TAD, respectively, in the blade coordinate system, at distance, r, for wind speed *j*. Figure 11 illustrates an example of the area that is found between the two TAD curves. Ultimately, the area is measured over the active portion of the blade. This portion extends from the start of the first section, at $r_{(P=1)}$ through the end of the last section at a distance of $r_{(P=2\zeta+1)}$.

The twist values at the actuation planes are obtained from the theoretical TAD. The following relationship is used to compute the twist angle at the transition planes, where P = {2, 4,...,2ζ}

$$\varphi_{b,m}\left(r_{(P)}, j\right) = \frac{\varphi_{b,m}\left(r_{(P-1)}, j\right) + R_k \times \varphi_{b,m}\left(r_{(P+1)}, j\right)}{1+R_k} \quad (10)$$

Preliminary work demonstrates that the stiffness ratio, $R_k$, can always be found within a given range. Hence, a constraint was imposed to reduce the range of design inputs:

$$R_{k,min} \le R_k \le R_{k,max} \quad (11)$$

Constraining the lengths of segments in each section reduces the computational expense and also provides reasonable results for the analysis.

$$l_{\zeta 1} = l_{\zeta 2} \quad (12)$$

where *l* represents the lengths of segments in section $\zeta$.

The efficiency of the search algorithm can be further improved by establishing a search domain for the actuator location. The midpoints of the search domains are located at evenly spaced points along the active portion of the blade. These points are established by dividing the active portion of the blade into $N_\zeta$ section. The range for the individual domains is extended a distance of *b* to both sides of the respective starting point. The constraint placed upon the search domain is as following:

$$B_P - b \le r_P \le B_P + b, \qquad \text{for } P = \{3,5,\ldots,2N_\zeta\text{-}1\} \qquad (13)$$

where,

$$B_P = \frac{P-1}{2} \times \frac{r_{(P=2\zeta+1)} - r_{(P=1)}}{\zeta-1} + r_{(P=1)} \quad (14)$$

Once the constraints are applied, the value of the objective function is calculated for all possible combinations of design input parameters. It considers all of the discrete wind speed values, *v*, in Region 2. The values of $R_k$, and the lengths of the sections (as defined by the locations of intermediate actuators planes) are selected through this process. These inputs correspond to the design solution that minimizes the objective function.

In the case study, four sections were sufficient for creating the TAD. The stiffness ratio, $R_k$, was constrained between 0.5 and 2 with a step size of 0.1. The search domain, *b*, spanned 5% of the active length of the blade with a step size of 1% of the length. Five actuators are implemented to create the TAD. This arrangement created 87.3 million ($M^s N^{s-1}$) design scenarios to consider. Figure 12 shows how the parameters for a typical combination are implemented to acquire the TAD. The objective problem was analyzed through a parallel computing cluster, having 132 cores that took roughly 50 hours to process.

## Free Shape Selection

The final step in the design process is to select a TAD scenario for the free position. This will correspond to the geometry of the TAD when it is not deformed by the actuators, or when no load is applied. In this approach, the selected free position is the TAD that minimizes the maximum required twist change per length unit. Using this criterion reduces the required amount of travel and load applied by the actuator.

The process for finding the free shape TAD is illustrated in Fig. 13. Here the TAD at wind speed, *v(i),* is compared to each wind speed, *v*(*j*). The goal is to find the TAD at *v(i),* which requires the least amount of deflection with respect to the other wind speed TADs. Accordingly, the first step of the algorithm considers the TAD at *v(i)* as the free position, $\varphi_{b,m}(r_{(P)},i)$. Then, the amount of twist deformation, $\varphi_{b,m}(r_{(P)},j)$, to reach the TAD at all other wind speeds, *v*(*j*), is determined. This is calculated in terms of the two ends of each individual blade segment $S_{\zeta\eta}$, $\delta_{i,j}(s)$ and $\delta_{i,j}(s + 1)$, ($s = 2(\zeta - 1) + \eta$). The difference between required twist change for two ends of each segment is divided by the length of that segment, $r_{(P=s+1)} - r_{(P=s)}$. The result is the required twist change per length unit for that segment, $\delta'_{\zeta\eta}$ :

$$\delta'_{i,j}(s) = \frac{\delta_{i,j}(s+1)-\delta_{i,j}(s)}{r(P=s+1)-r(P=s)} \qquad (15)$$

where,

$$\delta_{i,j}(s) = \varphi_{b,m}\left(r_{(P)}, i\right) - \varphi_{b,m}\left(r_{(P)}, j\right) \qquad i,j \in [1,2, \ldots, N_v], j \neq j \ (16)$$

The difference, $\delta'_{\zeta\eta}$ is computed for all wind speeds. The segment with the maximum absolute value of $\delta'$ is picked as the most critical one for this assumption. This process is repeated until *i* spans the whole discrete range of wind speed, *v*, in Region 2. It results in a list of assumed free shapes (assigned to each wind speed) and a corresponding maximum absolute values of $\delta'$. Finally the assumed free shape with the smallest maximum absolute values of $\delta'$ is selected as the optimum free shape.

## Results

The design methodology for the flexible blade was demonstrated through a case study. Blade performance data was obtained from the NREL *Unsteady Aerodynamics Experiment Phase VI* experiment. The aerodynamic analysis combined the NREL Aerodyn software with a genetic algorithm to establish the TAD. This was done for a discrete set of wind speed that ranged from cut-in to rated speed (Region 2). At each point a genetic algorithm identified the TAD that maximized the power coefficient. Constrained optimization was subsequently used in the mechanical design. It established the actuator locations and stiffness ratios of the segments in each section. The design objective was to match the TAD curve found in the aerodynamic design. The performance of the TAD created by the mechanical design was compared to that of the aerodynamic design. The difference in efficiency was approximately 0.08%. The small amount of loss suggests that the mechanical design strategy was effective.

**Table 1:** Optimal locations for actuators

| **Actuator points, *P*** | $P_1$ | $P_3$ | $P_5$ | $P_7$ | $P_9$ |
|---|---|---|---|---|---|
| **Location, r [*m*]** | 1.23 | 2.24 | 2.94 | 4.10 | 5.02 |

**Table 2:** Optimal stiffness ratios

| **Section, $\zeta$** | 1 | 2 | 3 | 4 |
|---|---|---|---|---|
| **Stiffness ratio, $\boldsymbol{R_k}\left[\frac{N/m}{N/m}\right]$** | 1.1 | 2 | 1.5 | 0.7 |

The actuators locations and relative stiffness values are given in Tables 1 and 2, respectively. The ratios that are closest to unity will have a twist distribution that is more linear between the respective actuators. Conversely, the ratios away from unity represent sections where the change in the twist angle is less linear. The mechanical design results for the TAD were used to find the best free shape for the blade. The selection procedure found that the free shape should be the same as the TAD that is used when the wind speed is near 9 m/s. For this TAD the maximum change in twist occurs in

segment $S_{21}$. It only necessitates a range of ±1.96 degrees about the free-shape TAD. Recall that the pitch actuator is used for corse positioning of the blade. Therefore, the blade deformation that tweaks the TAD only occurs with respect to the blade axis. This technique reduces the required amount of rotational deflection.

Figure 14 shows the selected TAD for various points of wind speed in Region 2. The values correspond to the TAD as measured with respect to the hub axis. Each TAD in the plot achieves the maximum aerodynamic efficiency for the given wind speed. In the plot it is observable that the greatest amount of required variation occurs nearest the blade root. The amount of difference emphasizes the significance of the actively variable capability.

**Table 3:** Maximum power coefficients for the original and modified TADs

| $v_w$ [m/s] | 5 | 6 | 7 | 8 | 9 | 10 | 11 | 12 | 13 |
|---|---|---|---|---|---|---|---|---|---|
| $c_{po}$ [-] | 0.447 | 0.484 | 0.435 | 0.370 | 0.314 | 0.268 | 0.231 | 0.200 | 0.174 |
| $c_{pt}$ [-] | 0.464 | 0.489 | 0.440 | 0.377 | 0.315 | 0.270 | 0.233 | 0.204 | 0.180 |
| **Increase [%]** | 3.83 | 1.05 | 1.13 | 1.76 | 0.13 | 0.63 | 1.08 | 1.90 | 3.27 |

The performance of the original blade was also characterized. In this case the power coefficient was maximized by adjusting the pitch angle. The results for the original blade are used to establish a baseline for the performance of the NREL blade. Table 3 compares the efficiency, $c_{pt}$, of the proposed blade design to that of the original, $c_{po}$. The flexible blade with an active variable twist angle provides the greatest benefits near cut-in and rated speed, where the power coefficient increased by 3.83 and 3.27%, respectively. The amount of increase becomes less pronounced around the wind speed of 9 m/s. This is likely near the design speed of the original blade. It is reasonable to expect the TAD to already be optimal at this point. The AeroDyn computations also revealed that the flexible blade also has a lower cut-in and rated speed than that of the original blade. By actuating the blade it is possible to reduce the cut-in speed from 13.5 to 13.2 m/s, while the rated speed drops from 5 to 4.9 m/s.

**Conclusion**

A methodology was presented for designing a flexible blade with an actively variable twist angle. It enables the blade twist angle to be adjusted, which maximizes the aerodynamic efficiency in Region 2. The exemplary design concept is based on the use of flexible blade sections which are deformed by actuators on each end. The exemplary design procedure finds the optimum TAD through a genetic algorithm that evaluates performance data obtained from the NREL Aerodyne software. Design optimization is then employed to set the actuator locations and material stiffness ratios. It establishes the mechanical means that is necessary to create the TAD in the application. A case study was performed using Aerodyne with data acquired from the NREL *Unsteady Aerodynamics Experiment Phase VI* experimental wind turbine. The performance of the presently-disclosed blade design was compared to that of a conventional blade with pitch adjustment. The results indicate that the flexible blade and associated design technique boosts the aerodynamic efficiency. The increase is most noticeable at the cut-in and rated speeds, where the power coefficient increased by 3.8% and 3.3%, respectively. Embodiments of the presently-disclosed design also enable a slight reduction in the wind speeds at which cut-in and full-power occur.

**Nomenclature**

| | |
|---|---|
| $A_v$ | total area between TAD curves |
| $C_d$ | drag coefficient |
| $C_l$ | lift coefficient |
| $N$ | total number in the set |
| $P$ | segment endpoint locations |
| $Q$ | correction factor |
| $R_k$ | stiffness ratio |
| $S$ | segment number |
| $a$ | axial induction factor |
| $a'$ | angular induction factor |
| $b$ | twist range in one direction |
| $c_p$ | power coefficient |
| $i$ | wind speed index (free-shape selection) |

| | |
|---|---|
| $j$ | wind speed index |
| $k$ | stiffness constant |
| $l$ | segment length |
| $n$ | TAD iterative index |
| $r$ | radial distance |
| $v$ | wind speed |
| $\delta$ | cross-section twist variation |
| $\delta'$ | Twist change gradient |
| Ø | relative flow angle |
| $\varphi$ | twist angle |
| $\sigma'$ | local solidity |
| a | aerodynamic analysis, subscript |
| $b$ | blade coordinate system, subscript |
| $min$ | minimum, subscript |
| $max$ | maximum, subscript |
| $p$ | pitch, subscript |
| $\eta$ | segment number, subscript |
| $\zeta$ | section number, subscript |

Further discussion including various embodiments and examples of the present disclosure are provided below in Sections A-F. The discussions, embodiments, and examples are intended to be illustrative and non-limiting.

### A. MODELING AND DESIGN METHOD

An exemplary modeling framework to analyze a wind turbine blade subjected to an out-of-plane transformation is presented in this section. One having skill in the art will recognize that the framework is non-limiting, and other frameworks may be devised. The present framework combines aerodynamic and mechanical models to support an automated design process. The former combines the NREL AeroDyn software with a genetic algorithm solver. It defines the theoretical twist angle distribution (TAD) as a function of wind speed. The procedure is repeated for a series of points that form a discrete range of wind speed. This step establishes the full range of blade transformation. The associated theoretical TAD geometry is subsequently passed to the mechanical model. It creates the TAD geometry in the context of an embodiment of the disclosed wind turbine blade concept. In some embodiments, the blade sections are assumed to be made by additive manufacturing, which enables tunable stiffness. An optimization problem minimizes the difference between the practical and theoretical TAD over the full range of transformations. It does so by selecting the actuator locations and the torsional stiffness ratios of consecutive segments. In the final step, the blade free shape (undeformed position) is found. The model and design support out-of-plane twisting, which can increase energy production and mitigate fatigue loads. The presently-disclosed framework is demonstrated through a case study based on energy production. It employs data acquired from the NREL Unsteady Aerodynamics Experiment. A set of blade transformations required to improve the efficiency of a fixed-speed system is examined. The results show up to 3.7% and 2.9% increases in the efficiency at cut-in and rated speed, respectively.

#### A.1. Introduction

Wind energy continues to be the largest source of new energy added to the energy production portfolio. In a two year period that spanned from 2015 to 2016, the global capacity of wind energy grew from 370 to 487 GW. The growth has occurred for a variety of reasons. There are concerns due to climate change and the volatility of fuel cost. The cost of wind energy has also decreased and now rivals that of energy produced by coal-burning power plants. The reduced cost can be attributed to new technology. It has enabled a class of wind turbines that produce energy more effectively and at a lower cost. Examples of research innovation include variable rotor speed enabled by power conversion equipment and novel gearbox designs that increase wind capture. Aerodynamic efficiency has also been improved through the pitch control and blade deformation.

Aerodynamic performance is dependent upon the selected airfoil, tapering, and twist distribution of the blade. The design configuration depends upon system size, type of operation (*i.e.,* fixed versus variable speed), and the wind conditions at the installation site. There has also been an interest in blades that are designed to transform shape during operation. Some researchers used a computational model to study the performance of flexible blades that deform. The blades achieved a higher lift-to-drag ratio and delayed stall. Other researchers equipped a turbine blade with a flexible flap assembly rather than changing the entire cross section. This capability has also provided an increase in the lift-to-drag ratio. The work of still other researchers made similar findings for a flexible flap. Moreover, the researchers demonstrated how the flap could control stall phenomena. The researchers also discovered that morphing blades have the ability to "self-start" whereas traditional blades require a higher initial moment. This dynamic can reduce thrust forces at extreme winds and when the system is parked. By affecting the load dynamics, the blades are also able to mitigate vibration. Other researchers coordinated the control of the trailing edge flap with that of the blade pitch angle. The study suggests the technique can reduce the rotor thrust load.

Out-of-plane blade twisting can also improve wind turbine performance. Researchers have studied small wind turbine blades with a variable twist angle. The authors used cables to actuate three ribs to adjust the twist angle distribution. An electric motor in the rotor hub moves the cables. Other researchers offered a segmented morphing concept. In this approach, blade segments are connected by screw sockets and a tension cable. The equivalent force between the cable tension and the centrifugal loads determines the effective angle of attack. Other researchers used a linear twist distribution along the span to create a simplified morphing blade. They developed a code based on the BEM. The study demonstrated how twist deformation increases the efficiency of fixed-speed systems. Out of plane twisting has already been studied in aircraft. A rotor with this versatility could improve efficiency for tiltrotors that change operation between helicopter or airplane modes. The research also suggests that wind turbine blades with an adaptive TAD have numerous benefits. Bend-twist coupled blades can reduce fatigue damage in wind turbines by as much as 70%. The twist distribution can also be varied to maximize efficiency at start-up and to maintain rotor speed at higher wind speeds. The capability could also be combined with variable speed systems to mitigate losses to power conversion. In previous years, morphing blades presented manufacturing and material challenges. Developments in composite materials and manufacturing technologies are now removing these barriers.

Some embodiments of the present disclosure provides a wind turbine blade, which may be constructed with modular segments that are additively manufactured. Embodiments of the disclosed blade support the IEA goals for rotor technology. Modularity facilitates the transportation, production, and installation of increasingly large blades. Additive manufacturing may facilitate the production of components at the point of use. It also enables custom designs that can be topologically optimized to the wind conditions at a given installation site. The AM process can create anisotropic behavior in mechanical components. The process also enables structures to be made with tunable properties, such as stiffness. Through this ability, it is possible to achieve a non-linear twist distribution. The TAD defines the twist angle of the blade as a function of blade length. The TAD is dependent upon the selected compliance of the blade segments and the actuator placement. These parameters can be established in the design process. This capability may mitigate system loads, facilitate the removal of blade ice, and increase efficiency.

This section of the disclosure provides (1) an exemplary model to analyze out-of-plane twisting of a wind turbine blade and (2) an exemplary methodology through which blade transformation can be created in practice. A case study is presented wherein the adaptive TAD is used to improve the efficiency of a fixed-speed wind turbine. This scenario provides a significant range of transformation and thus, demonstrates the strength of the presently-disclosed design method. The design technique is assessed by comparing the performance of the practical TAD to that found in the aerodynamic model. The practical TAD geometry is found through the mechanical design procedure.

### A.2. Flexible Blade Concept

An exemplary modular blade is shown in Fig. 1. The blade may be additively manufactured. The primary components include a spar, surrounding blade segments, and a non-structural skin. The spar is rigid, while the segments and skin are flexible. These segments work together in pairs to form sections, which are mounted onto the spar in series. Actuators are used to twist the blade into the desired TAD. A pitch actuator performs gross adjustment by rotating the spar. Other actuators are mounted at the section boundaries to provide fine adjustment to the TAD along the length of the blade. The placement of actuators and compliance of the segments provide the required TAD. The disclosed framework provides a way to select advantageous values for these parameters to maximize energy production.

The angle of rotation of the spar, $\varphi_{rp}$, is the same as the conventional pitch angle as shown in Figs 2 and 3. It has an axis at the hub connection and is measured relative to the rotor plane of motion. Along the length, r, of the blade the local twist angle, $\varphi_b$ , is measured relative to the blade root axis. Since the blade root moves with pitch actuation, the absolute local twist angle is measured using Eqn. A1,

$$\varphi(r) = \varphi_{rp} + \varphi_b(r) \tag{A1}$$

where $\varphi$ represents the angle of twist measured relative to the rotor plane of motion at length, r, from the hub center.

### A.3. Methodology

The framework utilizes three main blocks shown in Fig. 4. The process commences using a given blade design of known geometry and aerodynamic performance. The aerodynamic design establishes the TAD for discrete points of wind data. The mechanical design locates the actuators and establishes the stiffness ratio between the blade segments in each section. These parameters determine the shape of the blade as it is deformed. An optimization procedure identifies values that create the TADs found in the aerodynamic design. The last step of the procedure determines the free shape of the blade. This is the geometry of the blade when it is not deformed. Computational tools are employed in the framework to conduct the procedure. These include the NREL Aerodyn software, a genetic algorithm, and a parallel computing network. The steps of the framework are described in detail in Sections A.3.2., A.3.3, and A.3.4.

### A.3.1 Case Study

The presently-disclosed design method is demonstrated through a case study. It is based on a 20 kW wind turbine that was used in the NREL Unsteady Aerodynamics Experiment Phase VI. This system operates at a rotor speed of 72 RPM and reaches rated power at 13.5 m/s. It has two blades, each of which has a length of 4.6 m with a maximum chord length of 0.714 m. The performance data for this blade has also been certified by NREL. This model has also been used for other studies involving aerodynamic efficiency. For the present study, it provides reliable results and a good range of blade twist transformation. It characterizes the aerodynamic performance of the blade with respect to the TAD. An analysis is also conducted on the original (rigid) blade to establish the baseline performance for pitch control. This will be compared to the TAD performance. The comparison will elucidate the capability of the blade transformation and the mechanical design.

### A.3.2 Aerodynamic Design

The aerodynamic design procedure determines the blade TAD as it varies in relation to wind speed. The transformation data will be passed to the mechanical design in the next step. The objective of the aerodynamic design is to maximize the efficiency of the wind turbine blade in Region 2. This is measured in terms of the power coefficient, $c_p$. The efficiency in Eqn. A.2 is maximized as a function of the pitch angle, twist angle configuration, and wind speed, $v$, such that

$$c_p = f(\varphi, v) \qquad (A.2)$$

In the aerodynamic design the twist angle, $\varphi$, is analyzed at discrete points along the blade. The variable $\varphi_a$ in Eqn. A.3, represents the angle of twist with respect to the rotor plane at these points:

$$\varphi_a(i) = [\varphi_a(1), \varphi_a(2), \dots, \varphi_a(N_a)] \qquad (A.3)$$

The aerodynamic portion of the framework includes a solver tool and aerodynamic model. This arrangement is used to evaluate the performance of various twist angle configurations.

#### A.3.2.1. Aerodynamic Model

In the exemplary study, AeroDyn is used to study the aerodynamic performance of the blade. It is a time-domain module that can compute the aerodynamic response of wind turbine blades. It has been written based on the quasi-steady Blade-Element/Momentum (BEM) theory and requires an iterative nonlinear solution. The BEM is the most common method to evaluate the aerodynamic performance of wind turbines. It is known for efficiency and the ability to provide reliable blade load results. The BEM analyzes the blade as individual elements. Ultimately, the elements results are combined to provide the aerodynamic loads on the blade and rotor. In the present exemplary model, AeroDyn simulates the steady loads on the blades. In the case study, the loads were evaluated at 19 points along the length. These loads can be used to determine the amount of torque that is produced by the rotor.

#### A.3.2.2. Search Algorithm

In Region 2, the optimal twist angle configuration is found by maximizing the power coefficient. The BEM model is coupled with an optimization tool to search for a twist angle configuration. The MATLAB environment is used to create this computing structure in the case study. It is used in Eqn. A.4 to find the optimal TAD for a discrete range of wind speed, $v$, in Region 2, such that,

$$v(j) = [v(1), v(2), \dots, v(N_v)] \qquad (A.4)$$

where the first and last points in the set are representative of the cut-in and rated speeds, respectively.

The iterative search algorithm finds the TAD that maximizes the power coefficient. The blade calculations are nonlinear and discontinuous, and the search procedure is computationally expensive. A Genetic Algorithm (GA) solver may be used as the search tool to identify optimal twist configurations. The GA has capabilities in solving problems with discontinuous, non-differentiable or highly nonlinear objective functions. Still, the process indicated that there were local minima. This makes it difficult for the GA solver to find the global minimum. However, the present work demonstrated that the global minimum always existed within a band of values that surround the original twist angle. Hence, a range of values can be used to constrain the search as illustrated in Fig. 15. For each cross-section, the procedure begins searching near the original design twist distribution. After that, the resulting solution for the twist angle is used to form the search domain of next step. The constraint narrows the search domain and allows the GA to look for the global solution more efficiently. This procedure is repeated until the power coefficient no longer increases. This corresponds to the optimum blade twist for the given wind speed.

### A.3.3 Mechanical Design

The previous section determined an advantageous TAD as a function of wind speed. This section presents a technique to obtain the selected TADs through mechanical design. An aim is to achieve a TAD in the actual application matching that found in the aerodynamic design. During operation, the TAD will be actively controlled in relation to wind speed. The blade is coerced into the desired shape by internal actuators. The blade segments could be additively manufactured from a flexible material such as, for example, carbon-reinforced nylon. The component stiffness may be defined by the AM process and internal geometry. For the present non-limiting analysis, the stiffness was considered in relative terms, or as a ratio between consecutive segments. The mechanical design establishes the stiffness ratios for each blade section and location for the intermediate actuators. The calculations concern blade deformation and, therefore, were conducted with respect to the blade axis. Optimization principles are implemented into this exemplary process to leverage the capability of the mechanical design.

#### A.3.3.1 Blade Model

The blade configuration for the exemplary design process is shown in Fig. 8. The blade is constructed through a series of flexible blade segments that are spliced together and mounted on the spar. Two consecutive segments form a section. The segments, $S_{\zeta\eta}$, in each section have different torsional stiffness values. Each segment has a stiffness of $k_{\zeta\eta}$, where $\zeta$ is the section number, and $\eta$ is the segment number. The latter subscript is either 1 or 2, for the first and second segments of each section, moving from root towards the tip. The boundary between these two segments in each section is denoted by the transition plane. This point is referred to as a transition plane since the stiffness value changes across this point. An actuator is located at the boundaries of each section which are identified by the actuator planes. A single actuator acts at each of these points to twist the respective ends of the sections into shape.

There are two types of design input variables for the optimization problem. One is the stiffness ratios, $R_k$, for each section, which is defined in Eqn. A.5 as:

$$R_k = \frac{k_{\zeta 2}}{k_{\zeta 1}} \qquad \text{(A.5)}$$

where $k_{\zeta 1}$ and $k_{\zeta 2}$ refer to the stiffness values for segments 1 and 2, respectively, in section $\zeta$. The other design input defines the length of each section $\zeta$, and hence, the locations, $r_P$, of the intermediate actuators at P = $[3, 5, \ldots, 2Z_\zeta - 1]$. The first and last actuators at P = $[1, 2N_\zeta + 1]$, are fixed near the root and at the tip of the blade and are not part of the analysis. The section lengths and the relative stiffness between the segments are crucial in determining the TAD. The relationship between the design inputs and the TAD for a single section is illustrated in Fig. 9. The ideal TAD is described by the solid curve, while the possible mechanical design scenarios are indicated by the dotted lines. The twist angle of the corresponding transition plane may be moved along the dashed line depending on the stiffness ratio. Decreasing the stiffness shifts the mechanically-achievable TAD curve upwards. Increasing the ratio has the opposite effect. The mechanical design can also be shifted to the left and right along the ideal curve by adjusting the segment length, and thus, actuator locations.

#### A.3.3.2 Optimization Problem

The goal of the optimization process is to identify a mechanical design that closely matches the results found in the aerodynamic design. It works by minimizing the area between the respective TAD curves. Figure 10 illustrates how the objective function is applied to this problem.

The area is evaluated across a range of wind speed points in Region 2. This is stated in the objective function f in Eqn. A.6,

$$f = \sum_{j=1}^{N_v} A_v(j) \quad (A.6)$$

where, $A_V$ is the area between the TAD curves of the theoretical and mechanical design as computed at wind speed, v(j). The total area, $A_v$ is computed for a given wind speed using Eqn. A.7,

$$A_{v(j)} = \int_{r(1)}^{r(N_p)} \left|\varphi_{b,a}(r,j) - \varphi_{b,m}(r,j)\right| dr \quad (A.7)$$

where $\varphi_{b,a}$ and $\varphi_{b,m}$ represent the ideal and mechanical design TAD, respectively, in the blade coordinate system, at distance, r, for wind speed *j*. Figure 11 illustrates an example of the area that is found between the two TAD curves. The area is measured over the active portion of the blade. This portion extends from the start of the first section, at $r_{(P=1)}$ through the end of the last section at a distance of $r_{(P=2\zeta+1)}$.

The twist values at the actuation planes are obtained from the theoretical TAD. The relationship in Eqn. A.8 is used to compute the twist angle at the transition planes, where $P$ = [2,4, ... , 2ζ]

$$\varphi_{b,m}\left(r_{(P)},j\right) = \frac{\varphi_{b,m}\left(r_{(P-1)},j\right) + R_k \times \varphi_{b,m}\left(r_{(P+1)},j\right)}{1 + R_k} \quad (A.8)$$

Preliminary work demonstrates that the stiffness ratio, $R_k$, can always be found within a given range. Hence, a constraint was imposed to reduce the range of design inputs:

$$R_{k,min} \le R_k \le R_{k,max} \quad (A.9)$$

Constraining the lengths of segments in each section reduces the computational expense and also provides reasonable results for the analysis,

$$l_{\zeta 1} = l_{\zeta 2} \quad (A.10)$$

where *l* represents the lengths of segments in section $\zeta$.

The efficiency of the exemplary search algorithm can be further improved by establishing a search domain for the actuator location. The midpoints of the search domains are located at evenly spaced points along the active portion of the blade. These points are established by dividing the active portion of the blade into $N_\zeta$ sections. The range for the individual domains is extended a distance of *b* to both sides of the respective starting point. The constraint placed upon the search domain is in Eqn. A.11,

$$B_P - b \le r_P \le B_P + b \quad \text{for } P = \left[3,5,\ldots,2N_\zeta - 1\right], \quad (A.11)$$

and Eqn. A.12 where,

$$B_P = \frac{P-1}{2} \times \frac{r_{(p=2\zeta+1)} - r_{(P=1)}}{\zeta - 1} + R_{(P=1)} \quad (A.12)$$

Once the constraints are applied, the value of the objective function is calculated for all possible combinations of design input parameters. It considers all of the discrete wind speed values, *v*, in Region 2. The values of $R_k$, and the lengths of the sections (as defined by the locations of intermediate actuator planes) are selected through this process. These inputs correspond to the design solution that minimizes the objective function.

Compliant AM sections may be used for the outer blade shells. In some embodiments, four sections may be sufficient to create the TAD geometry. In practice, each section may be designed and manufactured with a specific stiffness. The ratio of stiffness between the segments determines the TAD geometry in a given section. In this approach, the optimization problem establishes that ratio. The stiffness ratio, $R_k$, was constrained between 0.5 and 2 with a step size of 0.1. The search domain spanned 10% of the active length of the blade with a step size of 1% of the length. In an example, five actuators are needed to transform the blade sections into the required TAD. This arrangement created 87.3 million ($M^sN^{s-1}$) design scenarios to consider. Figure 12 shows how the parameters for a typical combination are implemented to acquire the TAD. The objective problem was analyzed through a parallel computing cluster, having 132 cores and required roughly 50 hours to process.

### A.3.4 Free Shape Selection

The final step in the exemplary design process was to select a TAD scenario for the free position. This will correspond to the geometry of the TAD when it is not deformed by the actuators, or when no load is applied. In this approach, the selected free position is the TAD that minimizes the maximum required twist change per length unit. Using this criterion reduces the required amount of travel and load applied by the actuator.

The process for finding the free shape TAD is illustrated in Fig. 13. Here the TAD at wind speed, $v(i)$, is compared to each wind speed, v(j). The goal is to find the TAD at $v(i)$, which requires the least amount of deflection with respect to the other wind speed TADs. Accordingly, the first step of the algorithm considers the TAD at $v(i)$ as the free position, $\varphi_{b,m}(r_{(P)}, i)$. The amount of twist deformation to reach the TAD at all other wind speeds, $\varphi_{b,m}(r_{(P)}, j)$, is then determined. This is calculated in terms of the two ends of each individual blade segment $S_{\zeta\eta}$, $\delta_{i,j}(P)$ and $\delta_{i,j}(P + 1)$, where $P = 2(\zeta - 1) + \eta$. The difference between required twist change for two ends of each segment is divided by the length of that segment, $r_{(P+1)} - r_{(P)}$. The result in Eqn. A.13 is the required twist change per length unit for that segment, $\delta'_{\zeta\eta}$ :

$$\delta'_{\zeta\eta}(S_{\zeta\eta}) = \frac{\delta_{i,j}(P+1) - \delta_{i,j}(P)}{r_{(P+1)} - r_{(P)}} \tag{A.13}$$

where,

$$\delta_{i,j}(P) = \varphi_{b,m}(r_{(P)}, i) - \varphi_{b,m}(r_{(P)}, j) \qquad i,j \in [1,2,\ldots,N_v], \quad i \neq j \tag{A.14}$$

The difference, $\delta'_{\zeta\eta}$ is computed for all wind speeds. The segment with the maximum absolute value of $\delta'$ is selected as the most critical one for this assumption. This process is repeated until i spans the whole discrete range of wind speed, $v$, in Region 2. It results in a list of assumed free shapes (assigned to each wind speed) and a corresponding maximum absolute values of $\delta'$. Finally, the assumed free shape with the smallest maximum absolute values of $\delta'$ is selected as the optimum free shape.

### A.4. Results

The present exemplary design procedure is demonstrated through a case study. It uses blade performance data acquired from the NREL Unsteady Aerodynamics Experiment. The maximum efficiency for the adaptive TAD was obtained for Region 2. This was determined for a discrete set of wind speed that ranged from cut-in to rated speed. At each point, a genetic algorithm identified the theoretical TAD that maximized the power coefficient, $c_{pt}$. The mechanical design algorithm was subsequently executed to find the practical design that most closely matched the prescribed range of transformations. The practical TAD geometry was then simulated to determine the power coefficient, $\boldsymbol{c_{pp}}$. The maximum efficiency, $\boldsymbol{c_{po}}$, obtained by the conventional method of adjusting the pitch angle was also determined. Given this data, the gain obtained by the adaptive TAD can be evaluated. As shown in Table A.1, the practical design provides a 3.72% increase in efficiency at cut-in speed. The gain decreases in moving towards the speed of 9 m/s. TAD modification could not alter the efficiency by a noticeable amount at this speed. This event suggests that the original blade design is optimal around this speed. Above 9 m/s, the gain increases until 13 m/s, where there is a 2.93% gain in the efficiency. Table A.1 also shows the amount of reduction, $\boldsymbol{Red_{tp}}$, that occurs when going from the theoretical to practical TAD. The performance of the practical TAD matches the theoretical TAD closest near cut-in. The losses near the rated speed are most appreciable. In the future, it may be useful to add a provision to the optimization problem. It would consider the level of production at each wind speed in addition to minimizing the area between the theoretical and practical TAD. The AeroDyn computations also revealed that the turbine with variable twist blade has a lower cut-in and rated speed than that of the conventional system. Actuating the blade TAD reduces the rated speed from 13.5 to 13.2 m/s, while the cut-in speed drops from 5 to 4.9 m/s.

Table A.1: Maximum power coefficient obtained by the original and modified TAD

| $v_w$ [m/s] | 5 | 6 | 7 | 8 | 9 | 10 | 11 | 12 | 13 |
|---|---|---|---|---|---|---|---|---|---|
| $c_{po}$ [-] | 0.447 | 0.484 | 0.435 | 0.370 | 0.314 | 0.268 | 0.231 | 0.200 | 0.174 |
| $c_{pt}$ [-] | 0.464 | 0.489 | 0.440 | 0.377 | 0.315 | 0.270 | 0.233 | 0.204 | 0.180 |
| $Inc_t$ [%] | 3.83 | 1.05 | 1.13 | 1.76 | 0.13 | 0.63 | 1.08 | 1.90 | 3.27 |
| $c_{pp}$ [-] | 0.463 | 0.488 | 0.438 | 0.376 | 0.314 | 0.269 | 0.233 | 0.203 | 0.179 |
| $Inc_p$ [%] | 3.72 | 0.81 | 0.87 | 1.43 | -0.03 | 0.49 | 0.87 | 1.55 | 2.93 |
| $Red_{tp}$ [%] | 0.11 | 0.25 | 0.27 | 0.32 | 0.16 | 0.15 | 0.21 | 0.34 | 0.33 |

The twist angle, $\varphi$, that maximizes the power coefficient through the active TAD is presented in Table A.2. The reported values are measured with respect to the rotor plane. Overall, the twist angle at each point, r, increases with wind speed. The results also show that the blade twist, $\Delta\varphi_b$, generally increases as the wind speed increases. This amount is shown in the bottom row of the table. It is the difference between the maximum and minimum twist angles which occur near the root and tip, respectively. Near cut-in speed, there are 10.84 degrees between the ends. It increases to a maximum of 22.88 degrees at 12 m/s. The amount of local twist, $\Delta\varphi_r$, is shown in the right-hand column. It represents the range of travel that occurs at that point, r. The twist angle reaches a maximum of 30.94 degrees at a distance of 1.51 m. The travel decreases along the length of the blade, towards the tip. At the tip the travel is only 11.49 degrees.

Figure 16 describes the range of twist motion with respect to the free position. The points in the lower and upper limit occur near the cut-in and rated speed, respectively. This trend lines show that the highest amount of transformation occurs closest to the root. The lower limit drops off considerably through a distance just below 3 m. The amount of transformation for the upper limit drops off as well, albeit more gradually. The range of twist for the outer portion of the blade, beyond 3 m, is nearly consistent. The selection of the free position is intended to minimize the required amount of blade deformation. The observed non-linearity is likely due to the non-linear nature of the aerodynamic calculations. The conventional blade's chord length distribution might have affected this behavior.

Table A.2: Optimum values for twist angle and its difference from free shape, as a function of radius and wind speed.

| | | Wind speed, $v_w$ [m/s] | | | | | | | | | |
|---|---|---|---|---|---|---|---|---|---|---|---|
| | **r [m]** | **5** | **6** | **7** | **8** | **9** | **10** | **11** | **12** | **13** | $\Delta\varphi_r$ |
| $\varphi$ [°] | **1.23** | 11.02 | 13.15 | 17.63 | 22.71 | 22.29 | 25.44 | 28.93 | 32.52 | 33.61 | 22.59 |
| | **1.51** | 9.04 | 8.99 | 13.84 | 17.91 | 21.42 | 23.72 | 26.03 | 28.43 | 30.94 | 30.94 |
| | **1.71** | 7.54 | 7.44 | 11.97 | 16.37 | 17.54 | 20.64 | 23.42 | 26.16 | 27.91 | 27.91 |
| | **1.93** | 6.77 | 6.68 | 8.82 | 12.29 | 15.73 | 18.45 | 21.34 | 24.03 | 24.73 | 24.73 |
| | **2.15** | 5.83 | 6.60 | 8.12 | 10.22 | 13.52 | 16.2 | 18.66 | 21.07 | 23.07 | 23.07 |
| | **2.35** | 5.06 | 6.10 | 7.00 | 8.00 | 11.55 | 13.97 | 16.64 | 19.21 | 21.29 | 21.29 |
| | **2.55** | 4.85 | 5.04 | 6.13 | 7.11 | 10.13 | 12.22 | 14.91 | 17.00 | 19.46 | 19.46 |
| | **2.77** | 4.21 | 4.03 | 6.00 | 6.89 | 8.69 | 10.67 | 12.97 | 15.44 | 17.37 | 17.37 |
| | **2.98** | 3.78 | 3.19 | 5.99 | 5.84 | 7.85 | 9.24 | 11.46 | 13.49 | 15.71 | 15.71 |
| | **3.19** | 3.51 | 2.72 | 5.39 | 5.72 | 6.80 | 8.74 | 10.80 | 12.34 | 14.32 | 14.32 |
| | **3.39** | 3.14 | 2.15 | 4.74 | 5.59 | 6.73 | 8.63 | 10.71 | 11.76 | 13.5 | 13.50 |
| | **3.6** | 2.86 | 1.77 | 3.90 | 5.55 | 6.32 | 8.63 | 10.52 | 11.53 | 13.46 | 13.46 |
| | **3.82** | 2.56 | 1.30 | 3.42 | 5.50 | 6.29 | 8.62 | 10.47 | 11.51 | 13.42 | 13.42 |
| | **4.02** | 2.28 | 0.83 | 3.00 | 4.96 | 6.26 | 8.62 | 10.42 | 11.5 | 13.4 | 13.40 |
| | **4.22** | 1.98 | 0.57 | 2.50 | 4.38 | 6.07 | 8.06 | 9.76 | 11.44 | 13.37 | 13.37 |
| | **4.4** | 1.65 | 0.14 | 2.33 | 4.20 | 5.83 | 7.74 | 9.34 | 11.08 | 12.61 | 12.61 |
| | **4.58** | 1.34 | 0.1 | 2.26 | 4.19 | 5.81 | 7.63 | 9.29 | 10.95 | 12.54 | 12.54 |
| | **4.78** | 1.08 | -0.15 | 1.95 | 3.77 | 5.45 | 7.15 | 8.69 | 10.22 | 11.77 | 11.92 |
| | **5.02** | 0.88 | -0.38 | 1.64 | 3.26 | 5.05 | 6.67 | 8.21 | 9.64 | 11.11 | 11.49 |
| | $\Delta\varphi_b$ | 10.14 | 13.53 | 15.99 | 19.45 | 17.24 | 18.77 | 20.72 | 22.88 | 22.50 | |

Constrained optimization was subsequently used in the mechanical design. It established the actuator locations and stiffness ratios of the segments in each section. The design objective was to match the TAD curve found in the aerodynamic design. The actuators locations and relative stiffness values are given in Tables A.3 and A.4, respectively. The ratios that are closest to unity will have a twist distribution that is more linear between the respective actuators. Conversely, the ratios farthest from unity represent sections where the change in the twist angle is less linear. The mechanical design results for the TAD were used to find the best free shape for the blade. The selection procedure found that the free shape should be the same as the TAD that is used when the wind speed is near 9 m/s. For this TAD the maximum change in twist-per-length occurs in segment $S_{21}$. It has 0.35 m length and necessitates a travel range of $\pm 1.96$ degrees about the free-shape TAD. Given the optimum free shape, we can determine the relative angle of each cross section with respect to the undeformed shape. Recall that the pitch actuator is used for coarse positioning of the blade. The individual actuators along the blade length provide fine-tuning of the TAD. The technique of pitching the blade in combination with individual actuation reduces the amount of deflection.

Table A.3: Optimal locations for actuators

| **Actuator points, *P*** | $P_1$ | $P_3$ | $P_5$ | $P_7$ | $P_9$ |
|---|---|---|---|---|---|
| **Location, *r* [*m*]** | 1.23 | 2.24 | 2.94 | 4.10 | 5.02 |

Table A.4: Optimal stiffness ratios

| **Section, $\zeta$** | 1 | 2 | 3 | 4 |
|---|---|---|---|---|
| **Stiffness ratio,** $R_k\left[\frac{N/m}{N/m}\right]$ | 1.1 | 2 | 1.5 | 0.7 |

### A.5. Conclusion

In this section, an exemplary methodology was presented for designing a flexible blade with an actively variable twist angle. The approach is based on the use of flexible blade sections which are transformed by actuators on each end. The aerodynamic design procedure finds the optimum TAD through a genetic algorithm that evaluates performance data obtained through the NREL AeroDyn software. An exemplary design optimization was then employed to set the actuator locations and stiffness ratios. It established the mechanics that create the TAD in the application. A case study was performed using AeroDyn with data acquired from the NREL Unsteady Aerodynamics Experiment Phase VI experimental wind turbine. The study described the range of transformation required for the adaptive blade. The aerodynamic design increased the power coefficient by 3.8% and 3.3%, respectively, at the cut-in and rated speeds. The mechanical design was able to increase the efficiency by 3.72 and 2.93%. Although there is some reduction from the aerodynamic result, the amount of increase is still considerable.

In addition to the above-mentioned nomenclature, the following are used in this section: p: practical TAD subscript; $r_p$: rotor plane subscript; and *t:* theoretical TAD subscript.

## B. INTEGRATIVE CONTROL AND DESIGN FRAMEWORK

A methodology for the design and real-time control of a variable twist wind turbine blade is presented. The blade is, modular, flexible, and additively manufactured (AM). The AM capabilities have the potential to create a flexible blade with a low torsional-to-longitudinal-stiffness ratio. This enables new design and control capabilities that could be applied to the twist angle distribution. The variable twist distribution can increase the aerodynamic efficiency during Region 2 operation. The suggested blade design includes a rigid spar and flexible AM segments that form the surrounding shells. The stiffness of each individual segment and the actuator placement define the twist distribution. These values are used to find the optimum free shape for the blade. Given the optimum twist distributions, actuators placement, and free shape, the required amount of actuation could be determined. The proposed design process first determines the twist distribution that maximizes the aerodynamic efficiency in Region 2. A mechanical design algorithm subsequently locates a series of actuators and defines the stiffness ratio between the blade segments. The free shape twist distribution is selected in the next step. It is chosen to minimize the amount of actuation energy required to shape the twist distribution as it changes with Region 2 wind speed. Wind profiles of 20 different sites, gathered over a three-year period, are used to get the free shape. A control framework is then developed to set the twist distribution in relation to wind speed. A case study is performed to demonstrate the suggested procedure. The aerodynamic results show up to 3.8% and 3.3% increase in the efficiency at cut-in and rated speeds, respectively. The cumulative produced energy within three years, improved by up to 1.7%. The mechanical design suggests that the required twist distribution could be achieved by five actuators. Finally, the optimum free shape is selected based on the simulations for the studied sites.

### B.0 Nomenclature

In addition to the above-mentioned nomenclature, the following are used in this section:

| | |
|---|---|
| $P_g$ | generated power |
| $T$ | section-end torque |
| $i$ | blade element index in aerodynamic analysis |
| $u$ | control variable |
| $w$ | disturbance variable |
| $y$ | measured variable |
| $z$ | output variable |
| $\varphi$ | twist angle |
| $c$ | controlled output subscript |
| $o$ | original blade output subscript |

### B.1 Introduction

Coal is the largest source of electrical power production globally; however, predictions show that renewable energy will close the difference to 17%, halving the gap from 2017. Carbon dioxide emissions from conventional fuels contribute to climate change. Reducing the use of conventional fuels will lead to the reduction in the supply of $CO_2$ emissions. This impact has motivated a shift of interest in society. Society has a lot to gain from wind power. The maturity of wind turbine technology is important in unlocking the potential of the abundant resource. Wind power in the United States saw growth of 8.203 GW in 2016, an 11% increase to bring the capacity to be 82.143 GW. The potential of unlocking wind power in the United States could create more than 600,000 jobs in the next 30 years. Wind is also less sensitive to price fluctuations compared to the natural gas and coal fuel prices because of fixed pricing agreements.

The size and height of wind turbines continue to grow as wind turbine technology advances. In the United States, wind turbine capacity has grown to 20 times the size of the 1980s. The bigger turbines more economical to generate electricity. The cost to produce electricity by wind energy has gone from 55 cents per kWh to 2.35 cents per kWh today. It is stated that wind turbines will reach hub heights of 400 m. Sandia National Laboratories is currently working on an extreme scale rotor that has blades longer than 200 m. This is while the maximum length of the blade that is allowed to be transported on United States highways is 62 m. Moreover, the current design and manufacturing methods and conventional infrastructure do not facilitate the implementation of larger wind turbines. Accordingly, to keep wind energy development on track, there is a vital need for new design, control, and manufacturing techniques. Hence, the International Energy Agency (IEA) asks for advanced rotor architecture in its long-term plan.

Both innovative design and control are necessary to achieve improved efficiency in the energy harvesting process. This section focuses on these areas in the context of blade development to improve aerodynamic efficiency. The prominent method for blade level control is pitch regulation. This method involves pitch control mechanisms located at the base of the blade. Researchers have studied a passive control system, which uses a disk pulley mechanism designed to adjust the blade pitch on a small-scale system according to the rotation speed. That study proved that the pitch-regulated blade enabled the turbine to operate safely at higher speeds that would otherwise overheat the generator. Other researchers have researched a method of active pitch control, which divides the blade to two segments. It involves a folding mechanism to join the two segments. The power coefficient can be reduced up to 82.8% in increasing wind speeds. Stall regulated blades have no pitching mechanism as they are a passive control mechanism. Others have researched a site-specific design of stall-regulated blades for energy optimization. The Blade Element Momentum (BEM) theory results show an improvement of 23%. Other researchers designed and analyzed stall-regulated blades on HAWTs utilizing BEM theory. They concluded that a rated speed for the turbine should depend on the mean wind speed of the location of the turbine. Other researchers designed a control system using passive stall regulation and Maximum Power Point Tracking (MPPT). Another blade level control is the morphing blade technology since a fixed blade geometry does not fit into all wind scenarios. Other researchers introduced a simplified morphing blade in which the blade geometry is altered by modifying the twist at the base and the tip of the blade. Their analysis showed 20% to 70% increase in annual energy production compared to the other two control schemes, pitch and stall regulated methods. Their analysis was performed at wind speeds ranging from 5 m/s to 15 m/s. Other researchers compared a flexible blade with a rigid blade. They showed that the flexible blade experienced 26% more torque, 42.8% increase in $c_p$ and had 67% broader operating range of wind speed. Other researchers an optimal blade design using linear radial profile of chord and twist angle. The results showed 2.93% to 5.86% higher Annual Energy Production (AEP) compared to preliminary blade design for wind speeds ranging from 5.0 to 7.0 m/s. Other researchers optimized the chord and twist angle distribution of small wind turbines to raise its AEP. Their design AEP was 8.51% compared to the conventional design used in their study. The morphing blades have also the potential to reduce the blade loads. This could be beneficiary in stress reduction of the huge blades. Hence, it would be possible to utilize a larger rotor on a turbine tower and drivetrain. It could increase the produced energy while keeping the fatigue damage loads at the original loads. Sandia National Laboratories and FlexSys Inc. found that in a 1.5 MW wind turbine, with the new rotor size, the energy capture increases by 11% at a mean wind speed of 6.5 m/s. These facts demonstrate the capabilities of the morphing blade as an effective method of control.

An optimum twist angle would ensure that the blade cross section holds the optimal angle of attack along the rotor radius. Introducing torsional deflection provides new capabilities in adjusting the blade twist angle distribution as the wind speed changes. The present disclosure provides a variable twist modular blade which may use Additive Manufacturing (AM) technology. The blade includes segments that mount on a spar to form the external geometry. The modularity of this design addresses the logistical needs of large wind turbines. Infrastructure will not impede the wind vision when blades are modular. AM facilitates intricate pattern and directional features of blade design. This is especially beneficiary for the embodiments of the present blade design to provide low torsional-to-flexural stiffness ratio. Moreover, the conventional and taxing molding processes can be eliminated. AM might also enable blade manufacturing on the site of construction. The presently-disclosed blade also enables the implementation of actively variable twist. This section provides an exemplary integrative design and control framework for the actively variable twist blade to increase Region 2 efficiency. The methodology includes (1) an aerodynamic and mechanical design procedure to establish optimal twist, (2) optimum free shape selection when there is no actuation to minimize the actuation energy, and, (3) control of the active blade operation.

### B.2 Flexible Blade Concept

An embodiment of the present modular blade is shown in Fig. 1. The primary components include a spar, surrounding blade segments, and a non-structural skin. The spar is rigid, while the segments and skin are flexible. These segments work together in pairs to form sections, which are mounted onto the spar in series. Actuators twist the blade into the desired twist distribution. A pitch actuator performs gross adjustment by rotating the spar. Other actuators are mounted at the section boundaries to provide fine adjustments to the twist distribution along the length of the blade. The placement of actuators, the length of the sections, and compliance of the segments are crucial in obtaining the required twist distribution. The proposed framework selects the optimal values for these parameters to maximize energy production.

The spar is connected to the hub through a pitch motor that grossly adjusts the blade angle. The angle of rotation for the spar, $\varphi_p$, is the same as the conventional pitch angle as shown in Figs. 2 and 3. It has an axis at the hub connection and is measured relative to the rotor plane of motion. Along the length, r, of the blade the local twist angle, $\varphi_b$, is measured relative to the blade root axis. Since the blade root moves with pitch actuation, the absolute local twist angle is measured using Eqn. B.1,

$$\varphi(r) = \varphi_{rp} + \varphi_b(r) \qquad \text{(B.1)}$$

where $\varphi$ represents the angle of twist measured relative to the rotor plane of motion at length, r, from the hub center.

### B.3 Methodology

The power curve of a wind turbine may be considered to have three regions. At low wind speed, the turbine is in a parked condition which is labeled as Region 1. Region 2 begins at the cut-in speed where the turbine starts to operate and spans the wind speed range in which the turbine operates at partial power. The turbine-produced power increases until it reaches the rated value at rated wind speed. That is where Region 3 begins during which the turbine operates at full power. A typical power curve is seen in Fig. 17. The figure shows how the variable twist distribution is seeking to improve overall efficiency by increasing the produced power in Region 2 and also reducing both the cut-in and rated speeds. To reach this goal, an exemplary framework including three main blocks was designed as it is shown in Fig. 18. The process commences using a given blade design of known geometry and aerodynamic performance. The aerodynamic design establishes the twist distribution for discrete points of wind data that span Region 2. Each selection represents the twist distribution that provides maximum aerodynamic efficiency at the given wind speed. The mechanical design locates the actuators and establishes the stiffness ratio between the blade segments in each section. These parameters determine the shape of the blade as it is deformed. An optimization procedure identifies values that create the twist distributions found in the aerodynamic design. The procedure continues with selecting the free shape of the blade. This is the geometry of the blade when it is not deformed. Given the mechanical design information and real-time wind speed measurement, the control block determines the operating mode and locates the actuators. Computational tools are employed in the framework to conduct the procedure. These include the NREL AeroDyn software, a genetic algorithm, and a parallel computing network. The main contribution of this work is focused on the free shape selection and control of the variable twist blade. Moreover, the increase in power production using three years wind data is investigated. The aerodynamic and structural optimization are presented summarily in this section.

### B.3.1 Case Study

A case study has been conducted to demonstrate the proposed design and control method. It is based on a 20 kW wind turbine that was used in the NREL Unsteady Aerodynamics Experiment Phase VI experiment. This is a fixed-speed horizontal axis system with two blades. Each blade has a length of 4.6 m with a maximum chord length of 0.714 m. It has a rotor speed of 72 RPM that achieves a torque of 2650 *N.* m at a rated speed of 13.5 m/s. This simple system is a good starting point for our study of the blade twist angle. The performance data for this blade has also been certified by NREL. It is used in our study to characterize the aerodynamic performance of the blade with respect to the twist distribution. An analysis is also conducted on the original (rigid) blade to establish a baseline for the performance.

### B.3.2 Aerodynamic Design

#### B.3.2.1 Optimal Twist Angle Selection

Current wind turbine blades have a fixed twist distribution which is optimum for one wind speed. However, our goal is to adapt it with the optimal one for each wind speed. The aerodynamic design procedure determines the appropriate twist distribution of the blade as it varies in relation to wind speed. In this work, the objective is to maximize the efficiency of wind turbine blade in Region 2. This is measured in terms of the power coefficient, $c_p$. The efficiency in Eqn. B.2 is maximized as a function of the pitch angle, twist angle configuration, and wind speed, $v$, such that

$$c_p = f(\varphi, v) \qquad \text{(B.2)}$$

In the aerodynamic design the twist angle, $\varphi$ is analyzed at discrete points along the blade. The variable $\varphi a$ in Eqn. B.3, represents the angle of twist with respect to the rotor plane at these points:

$$\varphi_a(i) = [\varphi_a(1), \varphi_a(2), \ldots, \varphi_a(N_a)] \qquad \text{(B.3)}$$

The aerodynamic portion of the framework links NREL AeroDyn with MATLAB Genetic Algorithm (GA) to identify optimal twist configurations. The AeroDyn has been developed based on the Blade-Element/Momentum (BEM) theory. The aerodynamic optimization procedure finds the optimal twist distribution for a discrete range of wind speed, $v$, in Region 2, such that,

$$v(j) = [v(1), v(2), \ldots, v(N_v)] \qquad \text{(B.4)}$$

where the first and last points in the set correspond to the cut-in and rated speeds, respectively. The maximum achievable power coefficient by conventional pitch control is also found to get a comparison baseline for any gain obtained through variable twist.

### B.3.2.2 Increase In Energy Production

The aerodynamic optimization gave the increase in the efficiency at each discrete wind speed. However, it couldn't provide the most realistic representation of the efficiency change. Hence, we use the obtained aerodynamic optimization results for the Region 2 to estimate the total produced power during three years of wind turbine operation. For this aim, the real-world wind data acquired from NREL are used. Using this data, the cumulative produced power by the variable twist distribution was obtained. The same parameter was calculated for the original system with active pitch control blades. It could be then used as a baseline to compare the improved produced power using variable twist distribution. In this step, not only was the increase in the $c_p$ for the whole Region 2 considered, but also the modified cut-in and rated speeds were used in the calculations.

These calculations provide a general insight that shows how much an exemplary system may contribute to energy production at each installation site. Hence, it could help the decision maker in the initial steps of design, considering the trade-offs between installation costs and improvements in produced power for a specific site. This is while the conventional turbine blades are not site specific. Rather, they are designed for three different classes of wind speed and three different classes of turbulence.

### B.3.3 Mechanical Design

The aim of this section is to achieve a twist distribution in the actual application matching that found in the aerodynamic design. During operation, the twist distribution may be actively controlled in relation to wind speed. An exemplary blade configuration for the design process is shown in Fig. 8. The blade is constructed through a series of flexible blade segments that are spliced together and mounted on the spar. Two consecutive segments form a section. The segments, $S_{\zeta\eta}$, in each section have different torsional stiffness values. Each segment has a stiffness of $k_{\zeta\eta}$, where $\zeta$ is the section number, and $\eta$ is the segment number. The latter subscript is either 1 or 2, for the first and second segments of each section, moving from root towards the tip. An actuator is located at the boundaries of each section which are identified by the actuator planes. A single actuator may act at each of these points to twist the respective ends of the sections into shape.

There are two types of design input variables for the mechanical design. One is the stiffness ratios, $R_k$, for each section, which is defined in Eqn. B.5 as:

$$R_k = \frac{k_{\zeta 2}}{k_{\zeta 1}} \qquad \text{(B.5)}$$

where $k_{\zeta 1}$ and $k_{\zeta 2}$ refer to the stiffness values for segments 1 and 2, respectively, in section $\zeta$. The other design input defines the length of each section $\zeta$, and hence, the locations, $r_P$, of the intermediate actuators at $P = [3,5, \ldots, 2N_\zeta - 1]$. The first and last actuators at $P = [1, 2N_\zeta + 1]$, are fixed near the root and at the tip of the blade and are not part of the analysis. The section lengths and the relative stiffness between the segments are crucial in determining the twist distribution. Optimization principles are implemented into this process to leverage the capability of the mechanical design.

### B.3.4 Free Shape Selection

The final step in the design process is to select the twist distribution for the free position. This will correspond to the geometry of the twist distribution when the blade is not deformed by the actuators, or when no load is applied. In this study, the objective is to find a free-shape that minimizes the required actuation energy. We apply wind data gathered at the installation site to approach the optimal design. The blade is assumed to have a known structural design. That means the mechanical properties of the blade structure such as its torsional stiffness are known. This stiffness has been determined through an analysis, which is being reported on separately. We use it here to demonstrate the free-shape selection process. Moreover, we assume that the actuation mechanism applies actuation force during the twist change, while it is locked and as a result, uses no more energy until the next twist change happens. Also, it is assumed that the deformation rate is low enough to be considered as a semi-static process. Hence we wouldn't have to enter the dynamic equations into our design process. To make this assumption realistic, we can apply a constraint on actuation time between consecutive changes in the twist distribution. We are not also going to use the inertia in the system.

In this way, the actuation energy required to reach from one twist configuration into another would be equal to increase in the absolute value of potential energy. Hence we neglect the work in the distance that the blade element can be self-driven. It means as long as the blade element can twist from a position to another one without external force, we consider no work for actuation. We use the torsional spring formula to get the potential energy of blade sections in deformed shape.

Given the free-shape twist distribution, we can determine the mode (direction of twist with respect to the free shape) of the system in both the initial and final positions. If they are in the same mode, we calculate the potential energy change and consider it if it is positive. Otherwise, the actuator needs to spend no energy since the system itself reaches the final position. However, if the initial and final configurations are in different modes, the change in distribution is considered in two steps. We assume that the system first comes back to free shape by itself. Then, the actuator would need to bring the element shape from free shape into final position. Figure 19 shows the algorithm to calculate the actuation energy.

Figure 19 shows how to find the actuation energy to reach from each position into another for any assumed free-shape. Given this data, we find the required total actuation energy for different distribution choices. Here, we restrict our choices to optimal twist distributions found for discrete wind speeds at Region 2. It means we have nine different choices for free shape corresponding to wind speeds from 5 to 13 m/s. Finally, we pick the twist distribution that requires minimum energy as optimum free shape. Figure 20 shows the related flowchart for this step. We use the wind data for 20 different sites to get the total actuation energy. Although the same exact wind profile will not be repeated, this method provides a representation of the wind conditions at the installation sites.

Repeating the calculation shown in Fig. 20 would be time consuming for three years of data. To reduce the computational time, first, we find the required actuation energy to move from any wind speed twist distribution to another. This is done for any possible free-shape choice. The results maintained in a matrix for each assumed free shape. Matrix dimensions correspond to the initial and final position of the blade. Matrix elements are required actuation energy to reach from the corresponding initial into final positions. Since the calculations would be repeated for nine different free-shape choices, there would be nine different matrices at the end. The last step would be using the actual wind data obtained from NREL to evaluate the actuation energy. In this step, at each wind speed change, the required actuation energy is culled from the matrix corresponding to the assumed free shape. The total actuation energy would be the sum of energies used at each wind speed change. The twist distribution that requires minimum actuation energy is selected as optimum free shape.

### B.3.5 Active Blade Operation

Supervisory control is the top level of management that determines system-level tasks. To do so, it first sets the operating mode to one of the four conditions shown in Table B.1. This work focuses on the operation of the active blade in Region 2. Control is applied to the blade model. It maintains the optimal twist distribution to maximize efficiency and power production. During normal operation, the objective is to maximize aerodynamic efficiency. The mechanical design established the twist distribution geometry that is required to do this. The controller uses this information during partial-load operation. It adjusts the twist distribution as the wind speed changes.

Table B.1: Operating modes for variable twist distribution blade.

| | |
|---|---|
| Off | The system is off when the wind speed is outside of the operating range, bounded by cut-in and cut-off speeds. During this time, the blade locked in a configuration that minimizes the thrust load. |
| Region 2 | This mode occurs between cut-in and rated speeds. During this mode, the blade twist distribution is varied with wind speed to maximize the efficiency. |
| Region 3 | Between rated and cut-out speeds, the blade twist distribution varies to minimize the thrust load. This is while the rotor extracted power is maintained at the constant rated value. |

(continued)

| | |
|---|---|
| Shut Down | This mode occurs when the wind speed shifts outside of the operating speed, and it is necessary to shut down the turbine. The twist distribution changes to help blades act as an aerodynamic brake. |

The performance of the actively-controlled twist distribution is studied using a simulation model described in Fig. 21. In this arrangement, the blade model is integrated into a 20 kW drivetrain model. A set of wind data is used as the input. The controller sets the twist distribution in response to the input. A BEM model computes the aerodynamic loads. These loads determine the torque that is applied to the low-speed shaft in the drivetrain. At this stage a gearbox increases and decreases, respectively, the speed and torque. The torque is applied to the shaft of the generator model. The output from the drivetrain is the electrical power, $P_g$ and power coefficient, $c_p$.

**B.3.5.1 Wind Model**

A ramp input provides wind speed data to the model during simulation. It ranges from cut-in speed to rated speed. A power spectral density function is used to obtain an input similar to that occurring in nature. Within the model, the wind speed is based on a five-second average.

**B.3.5.2 Blade Model**

The flexible wind turbine blade is a dynamic system. It can be analyzed in terms of its individual blade sections. Each section has two independent variables, $\varphi_{\zeta 1}$ and $\varphi_{\zeta 2}$. The variables described the angular position, speed, and acceleration at the ends of each blade section.

$$\ddot{\varphi}_{\zeta 1} = \frac{T_{\zeta 1}}{J_{\zeta 1}} - \frac{b_{\zeta 1}}{J_{\zeta 1}}\dot{\varphi}_{\zeta 1} - \frac{k_{\zeta 1}}{J_{\zeta 1}}\left(\varphi_{\zeta 1} - \frac{k_{\zeta 1}\varphi_{\zeta 1} + k_{\zeta 2}\varphi_{\zeta 2}}{k_{\zeta 1} + k_{\zeta 2}}\right) \quad \text{(B.6)}$$

$$\ddot{\varphi}_{\zeta 2} = \frac{T_{\zeta 2}}{J_{\zeta 2}} - \frac{b_{\zeta 2}}{J_{\zeta 2}}\dot{\varphi}_{\zeta 2} - \frac{k_{\zeta 2}}{J_{\zeta 2}}\left(\frac{k_{\zeta 1}\varphi_{\zeta 1} + k_{\zeta 2}\varphi_{\zeta 2}}{k_{\zeta 1} + k_{\zeta 2}} - \varphi_{\zeta 2}\right) \quad \text{(B.7)}$$

The stiffness, $k_{\zeta 1}$ and $k_{\zeta 2}$, are due to the flexible blade material. Each segment works like a spring when deformed. There is also some loss associated with the materials deformation. This is represented by $b_{\zeta 1}$ and $b_{\zeta 2}$ for the two segments in the section. Both segments also have an inertial moment given by $J_{\zeta 1}$ and $J_{\zeta 2}$.

**B.3.5.3 Twist Angle Distribution Control**

Supervisory control establishes that the system is operating in Region 2. The controller then defines the twist distribution for each blade section through a lookup table. The position is held by a PD controller that works at the actuator level. Actuators position as a function of wind speed has been shown in Fig. 22. This figure was obtained for the case study assuming that the optimal twist distribution for 5 m/s is selected as blade free shape.

The flexible section is a nonlinear system that is controlled by a set of parameters shown in Fig. 23.

The dynamics of the system have state equations of the form,

$$\dot{x} = f(x, u, w) \quad \text{(B.8)}$$

The state variables, x, are taken from the dynamic blade model,

$$x = [\varphi_{\zeta 1}, \dot{\varphi}_{\zeta 1}, \ddot{\varphi}_{\zeta 1}, \varphi_{\zeta 2}, \dot{\varphi}_{\zeta 2}, \ddot{\varphi}_{\zeta 2}] \quad \text{(B.9)}$$

Control is applied to the parameter, u, and responds to the disturbance, w, which represents the wind speed.

$$u = [T_{\zeta 1}, T_{\zeta 2}] \quad \text{(B.10)}$$

$$w = v_w \qquad \text{(B.11)}$$

The system output includes sensed measurements, y, and performance metrics, z,

$$y = [\varphi_{\zeta 1}, \varphi_{\zeta 2}] \qquad \text{(B.12)}$$

$$z = c_p, P_g \qquad \text{(B.13)}$$

The state variables are also measured in this control framework. This ensures that the twist distribution position will be held during operation.

**B.4 Results**

The suggested procedure is shown through a case study based on the NREL Unsteady Aerodynamics Experiment Phase VI. The maximum achievable efficiency by controlling the twist distribution was obtained for Region 2. This was done for a discrete set of wind speeds that ranged from cut-in to rated speed. At each point, a genetic algorithm identified the twist distribution that maximized the power coefficient. Also, the maximum possible efficiency by modifying the pitch angle was obtained to have a comparison reference. Given this data, the gain obtained by modifying the twist distribution was evaluated quantitatively. Table B.2 presents this quantitative comparison. The general trend begins with a good gain at cut-in speed with 3.8% increase. This improvement reduces as we move towards the 9 m/s in which there is not a significant gain. As we pass this wind speed, it begins again to increase until 13 m/s in which we observe 3.3% gain in the efficiency. This trend demonstrates that the original blade design has been optimized for a wind speed of 9 m/s since modifying the twist distribution could not alter the efficiency by a noticeable amount. It was also revealed that the flexible blade had a lower cut-in and rated speed than that of the original blade. By actuating the blade, it is possible to reduce the cut-in speed from 13.5 to 13.2 m/s, while the rated speed drops from 5 to 4.9 m/s. Table B.3 includes the absolute and relative increase in the 3 years period produced power by twist distribution modification for 20 different sites. The twist distribution modification for the case study blade increases the produced power by up to 1.7%. Figure 24 shows the wind profile and produced power by regular and variable twist distribution system in a 24 hours period.

Table B.2: Maximum power coefficient obtained by the original and variable twist

| $v_w$ [m/s] | 5 | 6 | 7 | 8 | 9 | 10 | 11 | 12 | 13 |
|---|---|---|---|---|---|---|---|---|---|
| $c_{p_o}$ [-] | 0.447 | 0.484 | 0.435 | 0.370 | 0.314 | 0.268 | 0.231 | 0.200 | 0.174 |
| $c_{p_t}$ [-] | 0.464 | 0.489 | 0.440 | 0.377 | 0.315 | 0.270 | 0.233 | 0.204 | 0.180 |
| Increase [%] | 3.83 | 1.05 | 1.13 | 1.76 | 0.13 | 0.63 | 1.08 | 1.90 | 3.27 |

Table B.3: Cumulative generated power increase using a variable twist distribution compared to original blade with pitch control

| 3 years integrated power | | | | | |
|---|---|---|---|---|---|
| Site # | Pitch control power (GJ) | Twist control power (GJ) | Absolute increase (GJ) | Relative increase (%) | Absolute increase (kWh) |
| 1 | 353.2 | 358.9 | 5.7 | 1.62 | 1593.2 |
| 2 | 442.5 | 449.8 | 7.3 | 1.64 | 2016.0 |
| 3 | 436.9 | 444.2 | 7.3 | 1.68 | 2041.4 |
| 4 | 404.1 | 410.5 | 6.5 | 1.60 | 1795.2 |
| 5 | 616.7 | 626 | 9.3 | 1.51 | 2580.9 |
| 6 | 591.5 | 600.6 | 9.1 | 1.54 | 2530.0 |
| 7 | 577.2 | 586.5 | 9.2 | 1.60 | 2562.4 |
| 8 | 647.2 | 656.8 | 9.6 | 1.49 | 2673.4 |
| 9 | 588.1 | 597.5 | 9.4 | 1.59 | 2604.9 |
| 10 | 439.7 | 446.4 | 6.7 | 1.53 | 1865.1 |
| 11 | 500.9 | 509.1 | 8.2 | 1.64 | 2284.9 |
| 12 | 664 | 674.5 | 10.5 | 1.58 | 2906.6 |
| 13 | 493.7 | 502.1 | 8.4 | 1.70 | 2329.9 |
| 14 | 520.7 | 529.1 | 8.4 | 1.62 | 2341.4 |
| 15 | 640.3 | 650.1 | 9.8 | 1.54 | 2733.6 |
| 16 | 610.9 | 620.6 | 9.7 | 1.59 | 2691.4 |
| 17 | 407.2 | 414.1 | 6.8 | 1.68 | 1899.3 |
| 18 | 570.6 | 580.2 | 9.6 | 1.67 | 2653.8 |
| 19 | 388.8 | 395.3 | 6.5 | 1.67 | 1801.4 |
| 20 | 442.5 | 449.8 | 7.3 | 1.64 | 2016.0 |

Constrained optimization was subsequently used in the mechanical design. It established the actuator locations and stiffness ratios of the segments in each section. The design objective was to match the twist distribution curve found in the aerodynamic design. The performance of the twist distribution created by the mechanical design was compared to that of the aerodynamic design. The difference in efficiency was approximately 0.08%. The small amount of loss suggests that the mechanical design strategy was effective. The actuators locations and relative stiffness values are given in Tables B.4 and B.5, respectively. The required travel in actuation planes could be found by interpolation from the aerodynamic results. The absolute twist angle in these locations corresponds to the maximum power coefficient. It is the sum of the blade pitch angle and the twist angle measured with respect to the blade coordinate system. Hence both the pitch and twist distribution actuators should work to reach it. This parameter is seen in Table B.6 as a function of wind speed. The table also shows the travel range for all these planes. The highest amount of motion is required near the root, and it generally decreases as we move towards the tip.

**Table B.4. Optimal locations for actuators**

| Actuator points, $\boldsymbol{P}$ | $P_1$ | $P_3$ | $P_5$ | $P_7$ | $P_9$ |
|---|---|---|---|---|---|
| Location, $\boldsymbol{r}$ $[\boldsymbol{m}]$ | 1.23 | 2.24 | 2.94 | 4.10 | 5.02 |

Table B.5. Optimal stiffness ratios

| Section, $\zeta$ | 1 | 2 | 3 | 4 |
|---|---|---|---|---|
| Stiffness ratio, $R_k\left[\frac{N/m}{N/m}\right]$ | 1.1 | 2 | 1.5 | 0.7 |

Table B.6. Twist values and travel range in actuation planes

| Actuation plane # | | 1 | 2 | 3 | 4 | 5 |
|---|---|---|---|---|---|---|
| Twist angle [degree], at each wind speed, $v_w$ [m/s] | 5 | 11.02 | 5.42 | 3.84 | 2.18 | 0.88 |
| | 6 | 13.15 | 6.46 | 3.32 | 0.74 | -0.38 |
| | 7 | 17.63 | 7.7 | 6.04 | 2.81 | 1.64 |
| | 8 | 22.71 | 9.21 | 5.99 | 4.71 | 3.26 |
| | 9 | 22.29 | 12.56 | 8.03 | 6.21 | 5.05 |
| | 10 | 25.44 | 15.16 | 9.45 | 8.45 | 6.67 |
| | 11 | 28.93 | 17.67 | 11.68 | 10.22 | 8.21 |
| | 12 | 32.52 | 20.19 | 13.83 | 11.51 | 9.64 |
| | 13 | 33.61 | 22.31 | 15.99 | 13.46 | 11.11 |
| Travel range [degree] | | 22.58 | 16.89 | 12.68 | 12.72 | 11.49 |

The mechanical design results for the active twisting blade were used to find the best free shape for the blade. The final blade might not necessarily have the exact material used in our research group; however, we assume that it will possess the proportional stiffness. Hence we used normalized stiffness by dividing the stiffness of all sections by the stiffness of section 2 which has the highest value. Table B.7 shows the normalized stiffness used in our calculations. We found the free-shape for different installation sites. It is the free shape that needs minimum actuation energy to reach all the other required twist distributions based on the recorded wind profile at the corresponding installation site. The optimal free shape twist distribution was selected from the twist distributions obtained for Region 2 wind speeds. As table B.8 shows, out of twenty different sites, the optimum twist distribution for 7 m/s wind speed was selected in four sites, while for the rest of them the 9 m/s twist distribution is the optimum free shape twist distribution. The free shape of the blade is used to determine the position of the actuator as a function of wind speed. This is useful in the actuator level control. Figure 25 shows all five twist actuators position. For the case shown, the free shape matches the optimum twist for 9 m/s. The selected twist distribution could be realized by looking at the figure since the actuators need no motion at the free shape. This explains why the curves in Fig. 25, have an actuator position of 0 degrees at 9 m/s.

Table 7. Normalized equivalent stiffness

| Section, $\zeta$ | 1 | 2 | 3 | 4 |
|---|---|---|---|---|
| Normalized equivalent stiffness | 0.9347 | 1.0000 | 0.3384 | 0.1856 |

Table 8. Free shape optimization to minimize actuation energy.

| Site # | 1 | 2 | 3 | 4 | 5 | 6 | 7 | 8 | 9 | 10 |
|---|---|---|---|---|---|---|---|---|---|---|
| Corresponding wind speed | 7 | 9 | 7 | 9 | 9 | 9 | 7 | 9 | 9 | 9 |
| Site # | 11 | 12 | 13 | 14 | 15 | 16 | 17 | 18 | 19 | 20 |
| Corresponding wind speed | 7 | 9 | 9 | 9 | 9 | 9 | 9 | 9 | 9 | 9 |

For a more realistic conclusion, it is required to consider the negative role of actuation energy in the total produced power increase. This needs to have realistic values for the stiffness and also the damping coefficient of the blade segments. The authors are currently performing mechanical tests to get the mechanical properties of the fiber reinforced additively manufactured samples. Since the blade is supposed to be 3D printed by fiber reinforced composites, the results of these tests would be used in deformation simulation and also evaluation of actuation energy.

**B.5** Conclusion

A methodology was presented for design and control of a flexible blade with an actively variable twist angle. It enables the blade twist angle to be adjusted, which maximizes the aerodynamic efficiency in Region 2. The design concept is based on the use of flexible blade sections which are deformed by actuators on each end. The design procedure finds the optimum twist distribution through a genetic algorithm that evaluates performance data obtained from the NREL Aerodyne software. The produced energy during three years period is then computed. Design optimization is then employed to set the actuator locations and stiffness ratios. It establishes the mechanical means that is necessary to create the twist distribution in the application. The free shape that minimizes the required actuation energy is finally found. Given the free shape, the position of the actuator at each wind speed is determined which is needed for active twist control. A case study was performed using data acquired from the NREL Unsteady Aerodynamics Experiment Phase VI experimental wind turbine. The performance of the proposed blade design was compared to that of a conventional blade with pitch adjustment. The results indicate that the flexible blade and associated design technique boosts the aerodynamic efficiency. The increase is most noticeable at the cut-in and rated speeds, where the power coefficient increased by 3.8% and 3.3%, respectively. The new design also enables a slight reduction in the wind speeds at which cut-in and full-power occur. The cumulative produced energy was calculated for 20 different installation sites. It showed an increase by up to 1.7%. The free shape was then found for these sites. The optimal twist distribution corresponds to 7 m/s wind speed was picked as the free shape for four installation sites, while for the other sites the 9 m/s twist distribution was selected. This study is part of the authors' work towards a new class of modular wind turbine blades that utilizes AM technology. Other studies are investigating design techniques to minimize the torsional-to-flexural stiffness of the associated materials.

## C. A WEIGHTED LEAST SQUARES APPROACH FOR THE DESIGN OF ADAPTIVE AERODYNAMIC STRUCTURES SUBJECTED TO AN OUT-OF-PLANE TRANSFORMATION

An optimal design framework for adaptive wind turbine blades is presented. A mathematical framework establishes the topology of actuators and material compliance. These parameters are selected to adapt the blade twist distribution into a range of prescribed blade configurations. Our previous work established the ideal twist distribution configurations. The distributions improve the aerodynamic efficiency for a range of wind speeds in which the system operates at partial production. Within this range the nonlinear blade twist distribution changes in relation to the speed. The possibility of producing adaptively compliant structures is becoming increasingly possible with innovative materials and additive manufacturing (AM) processes. Our overarching goal is to create a comprehensive design infrastructure that integrates manufacturing and materials innovation with the complex needs of adaptive structures. This work proposes a method through which the ideal twist distribution can be actualized in structural implementation. The implementation involves a modular blade composed of flexible sections whose twist is modulated by actuators along the blade. Each flexible blade section is composed of two contiguous segments, each with a different torsional stiffness defined by a stiffness ratio. The stiffness variation within each section allows the blade to assume a nonlinear twist distribution when actuated. Errors relative to an ideal twist distribution are minimized by optimizing the stiffness ratios and twist actuator locations. The optimization is completed using a weighted least squares approach that allows the blade designer to bias blade performance toward different operating conditions. A quadratic weighting scheme that penalizes twist errors toward the blade tip is found to result in a higher power coefficient than other weighting schemes.

### C.0 Nomenclature

| | |
|---|---|
| $\boldsymbol{H}1$ | coefficient vector in the proximal segment |
| $\boldsymbol{H}2$ | coefficient vector in the distal segment |
| $J$ | cost function value |
| $L$ | distance from the root actuator to the blade tip |
| $Ns$ | number of blade sections |
| $Nv$ | number of wind speed points |
| $N$ | number of discrete points by section |
| $\boldsymbol{P}$ | actuator position vector |
| $P$ | actuator position |
| $\boldsymbol{R}$ | stiffness ratio vector |
| $R^*$ | optimal stiffness ratio |
| $R$ | stiffness ratio |
| $T$ | torque |

| | |
|---|---|
| $W$ | weight matrix about one section |
| $cp$ | power coefficient |
| $\mathbf{e}$ | error of twist angle vector |
| $e$ | error of twist angle |
| $\mathbf{f}$ | least squares regress and vector |
| $j$ | wind speed index |
| $k1$ | torsional stiffness coefficient of the proximal segment |
| $k2$ | torsional stiffness coefficient of the distal segment |
| $l$ | segment length |
| $\mathbf{r}1$ | discretization points vector in the first stiffness region |
| $\mathbf{r2}$ | discretization points vector in the second stiffness region |
| $\mathbf{r}$ | local radial variable vector |
| $r0$ | radial distance from blade root to section beginning |
| $r$ | radial distance from blade root$v$ a series of speeds |
| $\boldsymbol{\varphi}$ | twist angle vector |
| $\boldsymbol{\varphi}^*$ | ideal twist angle vector |
| $\varphi^*$ | ideal twist angle |
| $\varphi$ | local twist angle |
| $\varphi 0$ | pre-twist angle |
| $\varphi 1$ | local twist angle, in first stiffness region in one section |
| $\varphi 2$ | local twist angle, in second stiffness region in one section |
| $\varphi p$ | pitch angle |
| $\varphi tip$ | blade tip twist angle |
| $\boldsymbol{\beta}$ | least squares zero order coefficient vector |
| $a$ | subscript, absolute |
| $i$ | subscript, incremental section number |
| $new$ | subscript, new actuator location |
| $min$ | subscript, minimum value |

## C.1 Introduction

Morphing structures can adjust to a range of operating environments. This capability is particularly useful in aerodynamic applications where operating conditions vary. Adaptability can provide benefits to expand the aircraft flight envelope and replace conventional control surfaces. For example, morphing aircraft wings can achieve a higher lift coefficient with a negligible increase in the drag coefficient. When compared to the conventional wing with flap control, a morphing wing with variable tip twist control has higher lift. The adaptive structure used in aircraft wings motivates the same structure implementation in wind turbine blades. In this case, morphing blades can reduce aerodynamic drag, system vibration, and component fatigue. This type of blade can also increase the power coefficient, and thus wind capture. The significance of adaptive blade design is recognized by the International Energy Agency (IEA). In a 2013 report, the IEA categorically pointed to a need for novel rotor design with active blade elements.

Weisshaar describes 'morphing' as any activity in which an aircraft feature is made to adapt. Similarly, some features can be implemented in the wind turbine blade to facilitate adaptability. Castaignet et al. added a mechanical flap to the trailing edge on each 13 m blade of small wind turbine. Active control of the flaps reduced the blade-root stress by 13.8%. Morphing may also occur through compliant structures. Pechlivanoglou et al. offered a wind turbine blade with flexible flaps. Positive and negative flap deflection was able to increase and reduce, respectively, the lift. These provisions can be used to improve efficiency or decelerate the rotor. Wang et al. proposed a shape-shifting balloon-type airfoil for a Darrieus rotor wind turbine. A simulation study showed the power coefficient increased by as much as 14.56% in comparison to the conventional blade design. Capuzzi et al. studied a twist-bend coupled blade that passively deforms in response to aerodynamic loads. The authors suggested that this design could increase wind capture and reduce loads below and above the rated speed, respectively.

Twisting of an aircraft wing along its length is categorized as out-of-plane morphing. Barbarino explored active blade twist for the tiltrotor (also known as the proprotor) aircraft. The tiltrotor operates interchangeably as a helicopter or airplane by repositioning the blades to operate as a rotor or propeller, respectively. Park et al. proposed shape memory alloy hybrid composites to construct an actively variable twist blade. The study demonstrated how the tiltrotor blade twisted to adapt to the two different operation modes. Daynes et al. connected the aircraft twist technology to wind turbine blades. The authors suggested that this capability could improve efficiency and reduce loads. Wang et al. proposed a wind turbine blade with actuators placed at the root and tip. This arrangement enabled a linear twist distribution that could be varied. Simulation results indicated that this type of actuation produced higher power than that produced with pitch control. Gili and Frulla have created a physical embodiment of the variable twist blade. An actuator in the hub rotates three ribs located within the blade. Rotation of the ribs sets the twist distribution. The structure is surrounded by a deformable skin that interfaces with the airflow. It is suitable for wind turbines with a rotor diameter between 2 and 4 meters.

Silvestro et al. suggest there is a design challenge in acquiring a rigid structure that stands up to aerodynamic loads while being flexible to change shape. Wagg et al. describe the task as surmountable so long as the proper design requirements are addressed. The requirements pertain to the deformability, stiffness, strength, actuation, weight, and energy consumption. Kudikala et al. located piezoelectric actuators for static shape control of a plate. The problem was formulated to minimize actuation energy and the deviation between the desired and practical shapes. The problem was further constrained by material stress, allowable deviation, and the number of actuators. Trease et al. offered a design framework to establish sensor locations, actuator configurations, and structural compliance. The optimal selections maximized adaptive performance, minimized energy consumption, and were constrained by weight. The authors simulated the use of this design to adapt the cross-sectional shape of an aircraft wing to changes in air pressure.

The production of compliant adaptive structures has been a challenge. However, advancements in composite materials and AM are removing the barriers. These technologies provide integrated features, directional properties, tunable stiffness, and facilitate structural adaptability. Namasivayam and Seepersad used a selective laser sintering process to create deployable structures. An internal lattice structure surrounded by a flexible material enables the structure to collapse into a compact space that facilitates storage. The authors optimized the lattice skin topology to minimize deviation from the desired deployed shape. The AM process is also amenable to the performance needs of wind energy design. Liu devised a method to fabricate lattice-truss core structures with a continuous-fiber-reinforced thermoplastic. This composite is characterized by durability and low density and can be recycled, thus supporting the goals of IEA design needs.

## C.2 ADAPTIVE WIND TURBINE BLADE

Research of adaptive aerodynamic structures has focused largely on aircraft wings. Recently the interest has grown for adaptive wind turbine blades. The active twist adaptability (Fig. 26) has also begun to appear in the literature. The researchers suggest that a blade with an active twist angle could improve aerodynamic efficiency, mitigate system loads, and improve the dynamic system stability of wind turbines. Still, there has been little, if any, focus on optimal design methods for this type of blade. Accordingly, our work aims to create a framework for optimal design.

There have been significant advancements in design techniques, material innovation, and manufacturing processes. These advancements are poised to actualize new classes of compliant, morphing structures. The technologies can be fused together through a framework as illustrated in Fig. 27. This framework is employed in our work to design a wind turbine blade with an active twist angle. The framework includes models that characterize aerodynamic performance and structural representation of the adaptive structure. The materials and manufacturing process used to create the structure are also considered. In practice, the adaptive structure is impacted by all four of these areas. These areas also impose constraints on one another. For example, the materials and manufacturing processes will influence the structural performance. Similarly, the structural performance affects the ability to match the aerodynamic performance. These relationships must be recognized in our design process. In the current work, we look at the relationship between the aerodynamic requirements and structural topology. The materials and manufacturing requirements will be factored in with future work.

For this case, the aerodynamic requirements are prescribed by two modes of system operation. When the wind speed is less than the rated speed (the minimum speed required to drive the generator at rated capacity), the system operates at partial capacity. For this mode of operation, the adaptive structure is actuated to maximize efficiency. When the wind speed is at, or above, the rated speed, there is sufficient wind power for full load production. In this case, the blade is adapted to dissipate the excess energy (that would otherwise overheat the generator). These performance requirements define the shape, which is considered in the structural design. The structural design focuses on the physical criteria established by Wagg et al..

The work in this paper focuses on an optimal design method for aerodynamic structures with an adaptive twist angle. Specifically, the method defines the actuator placement and structural compliance topology. Optimal selections minimize errors between the required shape-shifting geometry and that which is achieved in the physical design. Errors are considered across (1) a set of reference points along a continuous surface and (2) a range of motion for multiple nonlinear twist configurations, which are required for various operating scenarios. A weight function is also implemented to bias the error with respect to various reference points. A case study is used to demonstrate the use of the design framework. In the case study, we consider the range of operation that is below the rated speed.

### C.2.1 Aerodynamic Requirements

The aerodynamic design determines the ideal twist angle distribution under different wind speed. The final objective is to maximize the power coefficient of the wind turbine, *cp*, when operating at capacity operation. In general, the power coefficient is represented as

$$c_p = \frac{Power\ captured\ at\ rotor}{Power\ available\ in\ the\ wind} \quad \text{(C.1)}$$

The power coefficient is a function of the absolute twist angle and the wind speed,

$$c_p = f(\varphi_a, v) \quad \text{(C.2)}$$

where the absolute twist angle, $\varphi_a$, is a distribution of angles along the blade and the wind speed, *v*, is a series of speeds below the rated speed.

### C.2.2 Blade Adaptability

The required angle of attack varies along the length of the wind turbine blade. In light of this variation, blades are constructed with a lengthwise twist. The absolute twist angle, $\varphi_a(r)$, is measured between the rotor plane and chord line at a distance, *r*, as measured along the length of the blade.

#### C.2.2.1 Adaptability via Pitch Control

Active blades enhance the power capture ability of the turbine by adapting to different wind conditions. The basic implementation of adaptability is accomplished in conventional, rigid blades, using pitch control. In this arrangement, actuators located inside the hub set the pitch angle of each blade. The blade twist distribution is described by,

$$\varphi_a(r) = \varphi_0(r) + \varphi_p \quad \text{(C.3)}$$

where $\varphi_0$(r) is the pre-twist angle at a distance *r*, with respect to the local blade coordinate system, and $\varphi_p$ represents the adjustment provided by the pitch actuator. For this type of system the blade twist distribution is fixed. Pitch control can be used to enhance power capture. However, current applications mainly focus on operational loading reduction and fatigue damage minimization.

#### C.2.2.2 Adaptability via Compliant Structures

Wang et al. introduced a morphing blade that improves pitch control. Active adjustment occurs through the use of actuators that are located at the root and tip of the blade. Instead of twist angles being adjusted by a uniform offset, the adjustment follows a linear distribution, yielding

$$\varphi_a(r) = \varphi_p + \frac{\varphi_{tip} - \varphi_p}{L} \cdot r \quad \text{(C.4)}$$

where $\varphi_{tip}$ is the actuator-prescribed twist angle at the blade tip, and *L* is the distance from the root actuator to the blade tip.

The addition of a tip actuator and incorporation of blade flexibility allows for the twist distribution to more closely match an ideal profile at different wind speeds. It is conceivable then that the addition of more actuators, or the incorporation of spatially varying torsional stiffness, affords even greater control of the twist distribution. Our previous work proposed a morphing blade with intermediate actuators, in addition to the root and tip actuators. The root actuator rotates the spar to provide pitch control, while the intermediate actuators fine-tune the blade twist. Each blade section is divided at a transition plane into two segments with different torsional stiffness coefficients, creating a piecewise linear twist distribution over each blade section. This allows the blade section to passively assume a nonlinear shape. The proposed design leverages the capabilities of AM, which accommodates the construction of segments with tuned stiffness properties, and potentially complex geometries. Using three intermediate actuators, in addition to the root and tip actuators, the authors report 3.8 and 3.3% efficiency improvement at cut-in and rated speeds compared to the National Renewable Energy Laboratory (NREL) Unsteady Aerodynamics Experiment Phase VI experiment.

### C.3 METHODOLOGY

### C.3.1 Mathematical Model of Segmented Blade

The modular blade is constructed by mounting independent, flexible sections to a structural spar. Internal actuators are located between the spar and ends of the section as shown in Fig. 29. The actuators prescribe specific twist angles based on the operating requirement. The final actuator is located at the tip of the blade. The twist angle distribution between the actuators depends on the torsional stiffness of the two segments comprising the blade section.

Each blade section is modeled as two segments connected in series, with torsional stiffness coefficients $k_{1_i}$ and $k_{2_i}$. The radial distance from the base of each section to a cross-sectional element is given by the local variable $r_i \in [0, 2l_i]$. The local twist angle for the blade segment is given by $\varphi_i(r_i) \in [0, \varphi_i(2l_i)]$. The local twist $\varphi_i(r_i)$ is measured relative to the initial twist of a blade section, as shown in Fig. 30.

An actuator at the distal end of the blade section applies a torque $T_i$ to produce a steady-state twist angle $\varphi_i(2l_i)$. The ith actuator location relative to the blade root is $P_i = r_{0_i} + 2_{l_i} = r_{0_i+1}$. Assuming that the twist angle varies linearly according to the torsional stiffness of each segment, the twist angle at the end of the first section is given by

$$\varphi_i(l_i) = \frac{T_i}{k_{1_i}} \quad \text{(C.5)}$$

and

$$\varphi_i(2l_i) - \varphi_i(l_i) = \frac{T_i}{k_{2_i}} \quad \text{(C.6)}$$

where $k_{1_i}$ and $k_{2_i}$ are the torsional stiffness coefficients of the proximal and distal regions, respectively. Eliminating $T_i$ from Eqns. C.5 and C.6, the relationship between the twist angle at the end of the first segment and the twist angle at the end of the second segment is given by

$$\varphi_i(l_i) = \frac{k_{2_i}}{k_{1_i} + k_{2_i}} \cdot \varphi_i(2l_i) = R_i \cdot \varphi_i(2l_i) \quad \text{(C.7)}$$

Using Eqn. C.7, we define the "stiffness ratio" of the blade section to be $R_i = \frac{k_{2_i}}{k_{1_i}+k_{2_i}} \in [0,1]$. The stiffness ratio, $R_i$, is a critical parameter that dictates the distribution of twist within each blade section. For example, if $R_i \approx 0$, the first segment of the section will deform little relative to the second segment. For $R_i \approx 1$, the first segment will deform significantly relative to the second segment. When $R_i \approx \frac{1}{2}$, the deformation will be distributed evenly between the segments. By adjusting $R_i$, the twist angle within a blade section can be tuned to approximate a desired profile, as depicted in Fig. 31.

In terms of the stiffness ratio, the twist angle within the first stiffness region of a section is given by,

$$\varphi_{i(r_i)_{r_i \in [0, l_i]}} = \varphi_{1_i}(r_i) = \frac{\varphi_i(2l_i)}{l_i} \cdot R_i \cdot r_i \quad \text{(C.8)}$$

and the twist angle within the second stiffness region is,

$$\varphi_{i(r_i)_{r_i \in [l_i, 2l_i]}} = \varphi_{2_i}(r_i) = \varphi_i(2l_i) \cdot R_i \cdot r_i + \frac{1}{l_i} \cdot (1 - R_i) \cdot \varphi_i(2l_i)(r_i - l_i) \quad \text{(C.9)}$$

where, $\varphi_i(2l_i)$ is the twist angle imposed by the actuator.

### C.3.2 Weighted Least Squares Optimization

The mathematical development in Section C.3.1 illustrates a technique through which a designer can establish the twist angle distribution within a given section. The role of the twist actuators is to refine the blade twist at the boundaries of blade sections. Therefore, the number of actuators is equal to the number of blade sections, $N_s$ . The actuators are located at positions $\boldsymbol{P} = [P_1\ P_2\ ...\ P_{N_s}]$, measured from the blade root. The tuned stiffness ratios, $\boldsymbol{R} = [R_1\ R_2\ ...\ R_{N_s}]$, determine the twist angle distribution within each section. Therefore, by properly assigning the actuator locations and stiffness ratios, the blade twist can be optimized to maximize power capture over a range of wind conditions.

A collection of ideal twist angle distributions at $N_v$ different wind speeds is given by $\left[\varphi_a^{j^*}(r), j = 1, \ldots, N_v\right]$, where the '*a*' subscript indicates 'absolute' twist angle relative to the rotor plane. The error between the actual and ideal absolute twist angles for the jth wind speed is given by

$$e^j(r) = \varphi_a^j(r) - \varphi_a^{j^*}(r) \tag{C.10}$$

By transforming the absolute twist angles into local twist angles, like those utilized in Section C.2.1, the local twist angle error for the ith blade section is defined by

$$e_i^j(r_i) = \varphi_i^j(r_i) - \varphi_i^{j^*}(r_i) \tag{C.11}$$

If the radial domain within each blade section is discretized into $N_i$ points, the error at each of these points can be expressed in vector form as

$$\boldsymbol{e}_i^j = \boldsymbol{\varphi}_i^j - \boldsymbol{\varphi}_i^{j^*} \tag{C.12}$$

where $\boldsymbol{\varphi}_i^{j^*}$ is the vector of ideal blade twist angles specified at Ni locations within the ith blade section, and $\boldsymbol{\varphi}_i^j$ is the vector of actual twist angles within the ith blade section. A cost function that minimizes discrepancies between the actual blade twist angles and the ideal twist angles over all $N_v$ wind speeds, and over all $N_s$ blade sections, is given by

$$\min_{\boldsymbol{R},\boldsymbol{P}} J = \sum_{j=1}^{N_v}\sum_{i=1}^{N_s} J_i^j = \sum_{j=1}^{N_v}\sum_{i=1}^{N_s} \frac{1}{2}\left(\boldsymbol{e}_i^j\right)^T W_i^j \boldsymbol{e}_i^j = \sum_{j=1}^{N_v}\sum_{i=1}^{N_s} \frac{1}{2}\left(\boldsymbol{\varphi}_i^j - \boldsymbol{\varphi}_i^{j^*}\right)^T W_i^j \left(\boldsymbol{\varphi}_i^j - \boldsymbol{\varphi}_i^{j^*}\right) \tag{C.13}$$

The actual twist angles, $\boldsymbol{\varphi}_i^j$, are a function of the optimization variables. These variables include (1) the actuator locations, stored in the vector ***P***, and (2) the stiffness ratios for each blade section, stored in the vector ***R***. The weight matrix, $W_i^j$, serves to bias the optimization toward matching the ideal twist angle at specific regions of the blade, or at specific wind speeds.

The dependency of the twist angles, $\boldsymbol{\varphi}_i^j$, on the actuator locations, **P**, and the stiffness ratios, ***R***, is nonlinear, requiring nonlinear optimization techniques. Unfortunately, using a nonlinear optimizer to solve for ***P*** and ***R*** simultaneously is computationally expensive; Khakpour et.al report a computational time of approximately 50 hours to complete a similar optimization. However, if ***P*** is fixed, the twist angles, $\boldsymbol{\varphi}_i^j$, depend linearly on ***R***. In this case, a linear batch least squares technique can be used to determine the optimal stiffness ratios. Therefore, the nonlinear optimizer only needs to solve for **P**, while the stiffness ratios are easily calculated to minimize the error $\boldsymbol{\varphi}_i^j - \boldsymbol{\varphi}_i^{j^*}$ in a least-squares sense. Using this approach, the optimization time is reduced to approximately 15 minutes on a single computer.

The computational cost reduction is owed to relieving the nonlinear optimizer of solving for the stiffness ratio parameters and passing this load to an efficient least-squares process. The optimization of the cost function in Eqn. C.13 progresses iteratively with a genetic algorithm (GA) that generates a population of actuator locations, ***P***, as illustrated in Fig. 32. Once the actuator positions are specified, the optimal stiffness ratios, ***R***, are calculated in one step using a weighted linear least-squares formulation. The cost function is then evaluated using **P** and ***R***, to evaluate if convergence is achieved. If not, the GA uses standard recombination and mutation operations to generate new candidate actuator

locations, $\boldsymbol{P}_{new}$. The optimization convergence criterion is satisfied once 25 generations of the GA have progressed with a less than 1% cost improvement of the population member with the best fitness.

### C.3.2.1 Least-Squares Solution for Stiffness Ratios, Single Wind Speed

To elucidate the details of the least-squares step in this optimization, first, its application to an optimization considering a single wind speed is demonstrated. Once the actuator locations are specified by the GA, the radial boundaries of each blade section are fixed. The twist angles at the section boundaries are also fixed. We assume the actuators prescribe the twist at r = 2*l* to match the ideal twist at that location, $\varphi^*(2l)$. Then, the stiffness ratio optimization for each blade section can be carried out independently. Therefore, for this development, the analysis is focused on one blade section for simplicity and without loss of generality. Because the following developments consistently refer to a single blade section, the i subscripts are omitted. The ideal twist angles, $\boldsymbol{\varphi}^*(\boldsymbol{r})$, for a given blade section are specified at *N* points throughout the section, where the local radial variable is $\boldsymbol{r} = \begin{bmatrix} \boldsymbol{r}_1 \\ \boldsymbol{r}_2 \end{bmatrix} \in \mathbb{R}^{N\times 1}$. The partition $\boldsymbol{r}_1$ contains the discretization points within the first segment (*i.e.*, the first stiffness region) of the blade section. Similarly, $\boldsymbol{r}_2$ contains the discretization points within the second segment. Using the mechanical model defined earlier, the actual twist angles vary as a function of the actuator-prescribed terminal twist angle $\varphi^*(2l)$ and the stiffness ratio R,

$$\boldsymbol{\varphi}_1 = \underbrace{\frac{\varphi^*(2l)}{l} \cdot \boldsymbol{r}_1}_{\boldsymbol{H}_1} \cdot R = \boldsymbol{H}_1 R \qquad \text{(C.14)}$$

and

$$\boldsymbol{\varphi}_2 = \underbrace{\varphi^*(2l) \cdot \left(2 \cdot \mathbf{1} - \frac{1}{l} \cdot \boldsymbol{r}_2\right)}_{\boldsymbol{H}_2} \cdot R + \underbrace{\varphi^*(2l) \cdot \left(\frac{1}{l} \cdot \boldsymbol{r}_2 - \mathbf{1}\right)}_{\boldsymbol{\beta}} = \boldsymbol{H}_2 R + \boldsymbol{\beta} \qquad \text{(C.15)}$$

For one wind speed, given a set of actuator locations, ***P***, the contribution of one blade section to the cost function given in Eqn. C.13 reduces to,

$$\begin{aligned} \min_R J_i &= \frac{1}{2}(\boldsymbol{\varphi} - \boldsymbol{\varphi}^*)^T(\boldsymbol{\varphi} - \boldsymbol{\varphi}^*) = \frac{1}{2}\left(\begin{bmatrix} \boldsymbol{\varphi}_1 \\ \boldsymbol{\varphi}_2 \end{bmatrix} - \begin{bmatrix} \boldsymbol{\varphi}_1^* \\ \boldsymbol{\varphi}_2^* \end{bmatrix}\right)^T \left(\begin{bmatrix} \boldsymbol{\varphi}_1 \\ \boldsymbol{\varphi}_2 \end{bmatrix} - \begin{bmatrix} \boldsymbol{\varphi}_1^* \\ \boldsymbol{\varphi}_2^* \end{bmatrix}\right) \\ &= \frac{1}{2}\left(\begin{bmatrix} \boldsymbol{H}_1 \\ \boldsymbol{H}_2 \end{bmatrix} R - \begin{bmatrix} \boldsymbol{\varphi}_1^* \\ \boldsymbol{\varphi}_2^* - \boldsymbol{\beta} \end{bmatrix}\right)^T \left(\begin{bmatrix} \boldsymbol{H}_1 \\ \boldsymbol{H}_2 \end{bmatrix} R - \begin{bmatrix} \boldsymbol{\varphi}_1^* \\ \boldsymbol{\varphi}_2^* - \boldsymbol{\beta} \end{bmatrix}\right) \end{aligned} \qquad \text{(C.16)}$$

This quadratic function is minimized when $\left.\frac{\partial J_i}{\partial R}\right|_{R=R^*}$. By differentiating the cost function and solving for the stiffness ratio at which the derivative is zero, the optimal stiffness ratio for the section is

$$R^* = (\boldsymbol{H}_1^T \boldsymbol{H}_1 + \boldsymbol{H}_2^T \boldsymbol{H}_2)^{-1}\left(\boldsymbol{H}_1^T \boldsymbol{\varphi}_1^* + \boldsymbol{H}_2^T(\boldsymbol{\varphi}_2^* - \boldsymbol{\beta})\right) \qquad \text{(C.17)}$$

### C.3.2.2 Weighted Cost Function for a Single Wind Speed

Next, a position-weighted optimization is examined, where twist errors at a blade section are weighted differently based on the distance of the section from the blade root. For example, sections toward the tip of the blade contribute greater torque than sections toward the root. Thus, it may be more critical to match the ideal twist angle toward the tip than at other points on the blade. These radius-dependent penalties can be implemented by incorporating a weight matrix into the least-squares formulation. By modifying Eqn. C.16, a weighted cost function for a given blade section is given by

$$\min_R J_i = \frac{1}{2}(\boldsymbol{\varphi} - \boldsymbol{\varphi}^*)^T W(\boldsymbol{\varphi} - \boldsymbol{\varphi}^*) = \frac{1}{2}\left(\begin{bmatrix}\boldsymbol{\varphi}_1\\ \boldsymbol{\varphi}_2\end{bmatrix} - \begin{bmatrix}\boldsymbol{\varphi}_1^*\\ \boldsymbol{\varphi}_2^*\end{bmatrix}\right)^T \begin{bmatrix}W_1 & 0\\ 0 & W_2\end{bmatrix}\left(\begin{bmatrix}\boldsymbol{\varphi}_1\\ \boldsymbol{\varphi}_2\end{bmatrix} - \begin{bmatrix}\boldsymbol{\varphi}_1^*\\ \boldsymbol{\varphi}_2^*\end{bmatrix}\right)$$
$$= \frac{1}{2}\left(\begin{bmatrix}\boldsymbol{H}_1\\ \boldsymbol{H}_2\end{bmatrix} R - \begin{bmatrix}\boldsymbol{\varphi}_1^*\\ \boldsymbol{\varphi}_2^* - \boldsymbol{\beta}\end{bmatrix}\right)^T \begin{bmatrix}W_1 & 0\\ 0 & W_2\end{bmatrix}\left(\begin{bmatrix}\boldsymbol{H}_1\\ \boldsymbol{H}_2\end{bmatrix} R - \begin{bmatrix}\boldsymbol{\varphi}_1^*\\ \boldsymbol{\varphi}_2^* - \boldsymbol{\beta}\end{bmatrix}\right) \quad \text{(C.18)}$$

where $W_1$ and $W_2$ are the weight matrices for the first and second segments of a blade section, respectively. This yields optimal section stiffness ratio,

$$R^* = (\boldsymbol{H}_1^T W_1 \boldsymbol{H}_1 + \boldsymbol{H}_2^T W_2 \boldsymbol{H}_2)^{-1}\left(\boldsymbol{H}_1^T W_1 \boldsymbol{\varphi}_1^* + \boldsymbol{H}_2^T W_2(\boldsymbol{\varphi}_2^* - \boldsymbol{\beta})\right) \quad \text{(C.19)}$$

Different weighting schemes are proposed in Table C.1. In Table C.1, *I* is the identity matrix, and *diag*(***x***) is the diagonal matrix created from the elements of a vector ***x***. The variable $r_0$ is the distance from the blade root to the proximal end of the blade section of interest.

**Table 1. Weight Matrix Definitions for Penalizing Radial Distance of Blade Section from Root**

| **Weighting Scheme** | **$W_1$ definition** | **$W_2$ definition** |
|---|---|---|
| Unweighted | $W_1 = I$ | $W_2 = I$ |
| Square Root | $W_1 = diag(\sqrt{r_0 + r_1})$ | $W_2 = diag(\sqrt{r_0 + r_2})$ |
| Linear | $W_1 = diag(r_0 + r_1)$ | $W_2 = diag(r_0 + r_2)$ |
| Quadratic | $W_1 = diag((r_0 + r_1)^T(r_0 + r_1))$ | $W_2 = diag((r_0 + r_2)^T(r_0 + r_2))$ |

### C.3.2.3 Weighted Cost Function for $N_v$ Wind Speeds

At different wind speeds, different twist angle distributions are required to maximize power capture. Therefore, it is necessary to find a stiffness ratio for each blade section which accommodates the changes in twist required to maintain power capture, regardless of wind speed. However, while considering many wind speeds, it may be more critical that the blade matches the ideal twist distribution over a subset of these wind speeds. For example, wind speeds encountered more frequently could be assigned a higher weight in the cost function than wind speeds rarely experienced. Thus, a wind-speed based weighting scheme could be assigned according to a wind-speed frequency probability distribution. It is possible to incorporate such penalties by modifying Eqn. C.18, as shown below,

$$\min_R J_i = \frac{1}{2}\left(\underbrace{\begin{bmatrix} \boldsymbol{H}_1^1 \\ \boldsymbol{H}_2^1 \\ \boldsymbol{H}_1^2 \\ \boldsymbol{H}_2^2 \\ \vdots \\ \boldsymbol{H}_1^{N_v} \\ \boldsymbol{H}_2^{N_v} \end{bmatrix}}_{\boldsymbol{H}} R - \underbrace{\begin{bmatrix} \boldsymbol{\varphi}_1^{1^*} \\ \boldsymbol{\varphi}_2^{1^*} - \boldsymbol{\beta}^1 \\ \boldsymbol{\varphi}_1^{2^*} \\ \boldsymbol{\varphi}_2^{2^*} - \boldsymbol{\beta}^2 \\ \vdots \\ \boldsymbol{\varphi}_1^{N_v{}^*} \\ \boldsymbol{\varphi}_2^{N_v{}^*} - \boldsymbol{\beta}^{N_v} \end{bmatrix}}_{\boldsymbol{f}}\right)^T \underbrace{\begin{bmatrix} W_1^1 & & & & & & \\ & W_2^1 & & & & & \\ & & W_1^2 & & & & \\ & & & W_2^2 & & & \\ & & & & \ddots & & \\ & & & & & W_1^{N_v} & \\ & & & & & & W_2^{N_v} \end{bmatrix}}_{\mathcal{W}} \left(\begin{bmatrix} \boldsymbol{H}_1^1 \\ \boldsymbol{H}_2^1 \\ \boldsymbol{H}_1^2 \\ \boldsymbol{H}_2^2 \\ \vdots \\ \boldsymbol{H}_1^{N_v} \\ \boldsymbol{H}_2^{N_v} \end{bmatrix} R - \begin{bmatrix} \boldsymbol{\varphi}_1^{1^*} \\ \boldsymbol{\varphi}_2^{1^*} - \boldsymbol{\beta}^1 \\ \boldsymbol{\varphi}_1^{2^*} \\ \boldsymbol{\varphi}_2^{2^*} - \boldsymbol{\beta}^2 \\ \vdots \\ \boldsymbol{\varphi}_1^{N_v{}^*} \\ \boldsymbol{\varphi}_2^{N_v{}^*} - \boldsymbol{\beta}^{N_v} \end{bmatrix}\right) = 1/2(\boldsymbol{H}^T R - \boldsymbol{f})^T \mathcal{W}(\boldsymbol{H}^T R - \boldsymbol{f}) \quad \text{(C.20)}$$

where $\boldsymbol{\varphi}_i^j$ is the actual twist distribution for a blade section at thejth specified wind speed, and $\boldsymbol{\varphi}_i^{j^*}$ is the ideal blade twist distribution at the jth wind speed. The subscript i = 1,2 corresponds to the first or second stiffness region within the blade section. The vectors $\boldsymbol{H}_1^j$, $\boldsymbol{H}_2^j$, and $\beta^j$ are the same expressions that appear in Eqns. C.14 and C.15, but for the jth wind speed. The overall weight matrix, $W$, is composed of partitions, $W_i^j$. The superscript j = 1,2, ... , $N_v$ corresponds to the specified wind speeds. In this way, weights can be assigned to penalize the distance of a blade section from the root (as in Table C.1), as well penalize each wind speed differently. The optimal stiffness ratio is calculated as

$$R^* = (\boldsymbol{H}^T \mathcal{W} \boldsymbol{H})^{-1} \boldsymbol{H}^T \mathcal{W} \boldsymbol{f} \quad \text{(C.21)}$$

**C.4 Results**

A case study is conducted to demonstrate the impact of weighted optimization on design selections. The study employs data from the NREL Unsteady Aerodynamics Experiment. The performance data has also been certified as part of the experiment. Moreover, the experimental data has been used to conduct other studies related to aerodynamic efficiency. The subject of this experiment is a small wind turbine that has a rated power of 20 kW at a speed 13.5 m/s. The rotor moves at 72 RPM and has two blades. Each blade has a chord and overall length of 0.714 and 4.6 m, respectively. We have developed a model that describes the aerodynamic loading as a function of the blade twist distribution. These results are generated using the NREL Aerodyn Software. The ideal values for the twist distribution have been computed in our previous work. These are specified over the region of wind speed (5-13 m/s) that corresponds to partial capacity operation.

The proposed optimization approach was applied to the design of a modular blade composed of four flexible blade sections and four section actuators (in addition to the pitch actuator). The stiffness ratios, $\boldsymbol{R} = [R_1\ R_2\ R_3\ R_4]$, and the actuator locations, $\boldsymbol{P} = [P_1\ P_2\ P_3]$, were optimized according to the methodology depicted in Fig. 32. The final section actuator, $P_4$, is located at the blade tip, and is not included in the optimization. The goal of the optimization is to allow the blade to adapt its shape to match the range of ideal twist angle distributions depicted in Fig. 33.

The optimized stiffness ratios and actuator locations are given in Tables C.2 and C.3 using the different weight schemes given in Table C.1. Figure 34 compares the achievable to ideal twist angles for each design at cut in (5 m/s), mid-range (9 m/s), and rated speed (13 m/s).

For the unweighted, square-root, and linear weight schemes, the actuator locations and stiffness ratios are similar. The actuator locations, $P_1$ to $P_3$, are in the first half of the blade, providing greater twist control toward the blade root where the ideal twist angle varies most over the different wind speeds. However, for the quadratic weight scheme, the penultimate twist actuator, $P_3$, is pushed toward the tip of the blade-a position that makes it more advantageous for correcting the blade twist toward the blade tip. This is consistent with the function of the quadratic weighting scheme: to impose a harsh penalty on twist errors toward the tip of the blade, and enhance control in that region. As seen in Table C.3, most of the stiffness ratios hover near a value of 0.5, which results in a linear twist variation over the blade section. A notable deviation is the stiffness ratio of the second blade section assigned by the quadratic weight scheme, $R_2$ = 0.68. This stiffness ratio indicates that the second blade segment within this section is stiffer than the first. In this case most of the twist deformation occurs within the first segment of the section. This is apparent in Fig. 34 looking at the line for 13 m/s, in the second blade section for the quadratic weight scheme (the region between the second and third orange circles, r ∈ [1.74, 2.82]). The twist angle gradient is steeper in the first segment of the section, and levels off significantly in the second segment.

**Table 2. Optimal Twist Actuator Locations**

| Twist Actuators | $P_1$ | $P_2$ | $P_3$ | $P_4$ (tip) |
|---|---|---|---|---|
| **Distance from blade root, *r* [m]** | | | | |
| **Unweighted** | 1.11 | 1.78 | 2.63 | 4.52 |
| **Square-Root** | 1.13 | 1.81 | 2.64 | 4.52 |
| **Linear** | 1.16 | 1.84 | 2.65 | 4.52 |
| **Quadratic** | 1.74 | 2.82 | 3.91 | 4.52 |

**Table 3. Optimal Stiffness Ratios**

| Stiffness Ratios | $R_1$ | $R_2$ | $R_3$ | $R_4$ (tip) |
|---|---|---|---|---|
| **Unweighted** | 0.53 | 0.54 | 0.63 | 0.51 |
| **Square-Root** | 0.53 | 0.54 | 0.63 | 0.51 |
| **Linear** | 0.53 | 0.54 | 0.63 | 0.50 |
| **Quadratic** | 0.55 | 0.68 | 0.59 | 0.43 |

For each weight assignment, the optimization yields a modular blade which closely follows the ideal twist angle distribution at all wind speeds. However, by summing the squared twist angle error over all wind speeds, it is apparent that the weights serve to shift the error distribution to different regions of the blade. Fig. 35 shows that the quadratic weighting scheme serves to reduce the error at the tip of the blade while sacrificing accuracy at the blade root. This scenario is accomplished by shifting the actuators toward the tip of the blade. Shifting the actuators towards the tip provides a higher degree of precision of the twist control in this region.

The blade power coefficient, $c_p$, was calculated for each of the weight configurations for the range of wind speeds. These results were compared to that of pitch control as shown in Fig. 36. The greatest improvement is at 5 m/s (3.7 % improvement for the quadratic weight scheme) and 13 m/s (3.1% improvement for the quadratic weight scheme). There is negligible performance improvement at 9 m/s, which is likely the design speed of the NREL blade. The quadratic weight scheme provides slightly better efficiency over the range of wind speeds. This result suggests that for this case study, matching the ideal twist profile at the tip of the blade is more important for enhancing power capture than matching the ideal twist profile toward the root.

**C.5 Conclusion**

This work presents a computationally efficient technique for designing a modular blade that adjusts its shape to maximize power capture below the rated wind speed. Further, the methodology allows the designer to assign optimization weights that bias the performance of the blade for different operating conditions. The shape of the blade is determined through the topology of material stiffness and actuator placement. The blade is divided into sections that exhibit spatially varying torsional stiffness. This allows the blade to deform in a nonlinear fashion when twisted by actuators distributed along its length. A mathematical model for the modular blade is presented. The model is parameterized in terms of the blade section stiffness ratios and actuator locations. Based on the model, a weighted least-squares cost function is introduced that allows for the optimization of the stiffness ratios and actuator locations to minimize twist angle errors at any number of wind speeds. The weight matrix included in the optimization allows the blade designer to define the relative importance of matching an ideal twist distribution at different sections of the blade and at different wind speeds. A case study demonstrates the use of different weight definitions to affect the outcome. Moreover, it shows how the weights can be applied to acquire a shape that maximizes wind capture. Specifically, the quadratic weight produced enhanced power capture over all wind speeds compared to other weighting schemes by penalizing twist angle errors toward the blade tip. The proposed design methodology can further be utilized to optimize adaptive structures in other applications, including aircraft wings and helicopter blades.

**D. A NOVEL WIND TURBINE BLADE WITH OUT-OF-PLANE TRANSFORMATION: MODELING AND ANALYSIS**

This section presents a method for analyzing the performance of a novel wind turbine blade subjected to out-of-plane twisting. Prior work suggests this type of morphing can reduce fatigue loads and improve energy production. The possibility of implementing such technology is becoming increasingly possible with innovative materials and additive manufacturing processes. A design concept is presented for a novel wind turbine blade having multiple shell sections mounted on a rigid spar and covered by non-structural skin. This design allows the blade shells to be flexed to vary the twist angle distribution (TAD). To determine the geometry of the TAD a heuristic search algorithm is devised. It employs the AeroDyn software to explore the performance. A case study demonstrates the modeling technique and characterizes the blade performance. Simulation is enabled using data acquired from a NREL 20 kW wind turbine. For this blade, the TAD capability improves efficiency by 3.7% at cut-in. The cross-sectional changes resulting from the aerodynamic loads are analyzed by the fluid-structure interaction. Moreover, the effect of torsion on cross-section deformation is investigated. The shells are assumed to be additively manufactured using ULTEM 9085. The simulation results show negligible deformation occurs.

**D.1. Introduction**

Wind energy has now spread to more than 90 countries. In 2016 it reached a capacity of 487 GW, representing an increase of 12.6% over the previous year. The implementation of wind energy is crucial in mitigating the effects of climate change. The United States Department of Energy, National Renewable Energy Laboratory (NREL) suggests wind energy technology must continue to evolve to sustain its growth. Increasing the efficiency of wind energy conversion continues to be a development goal. System reliability is also important as the dependence upon wind energy grows. Blade design impacts both efficiency and reliability. However, there is a trade-off between design objectives that maximize efficiency and those which mitigate deleterious aerodynamic loads. Blade innovation could alleviate the need for this tradeoff. New active features could further improve the response to system loads. The importance of blade design is underscored in a recent International Energy Agency (IEA) report that calls for novel rotor architecture. Blade innovation is an important focus at both the small and utility scale of wind energy development.

In the development of a wind turbine blade, a designer should consider two important issues, one is the structural performance and the other focuses on the aerodynamic properties of the outer surface. A variety of wind turbine blade designs and manufacturing techniques exist to accommodate the wide range of sizes as shown in Fig. 37. Thermosetting composite wind turbine blades have evolved into three distinct structural concepts. These include the monolithic skin monocoque concept, single shear web design, and double shear web (also known as the box spar concept). Modern wind turbine blades generally have two airfoil shells. One of the shells is on the suction side, and the other is on the pressure side. The shells counteract the torsional and edgewise bending loads. Internal webs used to provide shear stiffness also act to hold the shells together. These shear webs are generally placed at 15% and 50% of the airfoil chord length. A load carrying box girder may also be used in designs that include spar caps. Another design for the wind turbine blade is the rib and bulkhead design. The drawback is that it is not currently economically suitable for manufacturing thermoset composites. However, with new manufacturing techniques, it could be reconsidered in the design of wind turbine blades. The designated airfoil, chord length, and twist distribution determine the aerodynamic loading of a blade. These design selections are fixed in the design of rigid blades. In morphing blades these features can vary, which improves performance. Daynes and Weaver equipped a turbine blade with a flexible flap assembly. This design improves the lift-to-drag ratio. Therefore, it has potential to regulate power and reduce drag forces. Adaptively flexible blades also exhibit higher efficiency than rigid blades. Researchers suggest that the type of blade could alleviate vibration. In another study, pitch control was combined with control of the trailing edge flap. This reduced aerodynamic loads better than the pitch control alone. The combined controlling method is especially useful for large rotors. Xie et al. proposed a novel folding blade concept to control the aerodynamic performance of the blade. Researchers have also discovered that deformable blades have the ability to "self-start" whereas traditional turbine blades typically require a high initial moment. The benefits of the flexible blade structure are also realized outside of operation. It alleviates loads caused by extreme winds when the system is parked.

A recent area of research focuses on variable twist blades. Loth and Moriarty proposed a morphing concept in which blade segments are connected by screw sockets and a tension cable. The cable tension and centrifugal force act against each other. The equivalent force determines the effective angle of attack. Gili and Frulla worked on a variable twist blade for small wind turbines with a rotor diameter of 2 to 4 meters. The authors used three actuated ribs to vary the twist distribution. The actuation is applied by cables fixed to the rotatable ribs. The cables are actuated by an electric motor placed in the rotor hub. Wang et al. used Blade Element Method (BEM) theory to study out-of-plane blade twisting. The study was based on a linear twist distribution and improved the aerodynamic efficiency of a fixed speed system. Sirigu et al. used variable blade twist to broaden the working range and maximize power extraction. The morphing capability could also compliment power conversion equipment, which lacks efficiency at some rotor speeds. Variable blade twist has also been studied in other aerodynamic applications. An adaptive twist distribution could improve the efficiency of tiltrotors, which switches between helicopter and airplane modes. Runge et al. focused on shifting the shear center of the rotor profile by an internal mechanical system that changed the twist distribution. The authors demonstrated that this dynamic changes the distribution of the bending and torsional shear stresses.

An enabling technology for morphing structures is additive manufacturing (AM) . This evolving technique is poised to revolutionize product design and manufacturing. It has the ability to produce flexible structures with integrated functions. AM also facilitates design features that increase local strength and decrease weight. Li et al. fabricated a carbon fiber reinforced polylactic acid composite using 3D printing. The technique increased the tensile and flexural strengths by 13.8% and 164%, respectively, over that produced with conventional methods. A study presented a technique to build Continuous Fiber Reinforced Thermoplastic (CFRTP) lattice truss core structures. The CFRTP has high potential for aerospace and space applications for its recyclability, long life, low density and good damage resistance. The study created several topologies and samples including an integral variable-thickness wing. The DOE is currently using AM to produce large molds for wind turbine blades. Printing performed by the Big Area Additive Manufacturing machine (BAAM) is up to 1,000 times faster than that of conventional machines. This study could help in the rapid development of innovative and more efficient blade designs. Moreover, the 3D printing process could result in a more cost-effective process. The Oak Ridge Lab recently implemented AM to create a large trim-and-drill tool. The tool measures 17.5 feet long, 5.5 feet wide and 1.5 feet tall.

The authors are investigating a novel blade concept with modular AM segments. It supports numerous objectives for wind turbine development. Modularity facilitates blade repair, transportation, and assembly. It also enables the use of AM components, which are currently limited in production size. The AM process supports the IEA goal of using materials that are recyclable. It also has the potential to create lightweight parts with tunable properties that minimize the twist-bend stiffness of morphing blades. The adaptive blade can improve efficiency at the small scale, where power conversion technology lags in performance. At the large scale, individual blade control of the Twist Angle Distribution (TAD) could mitigate fatigue loads and system vibration. The development of the proposed blade necessitates studies across multiple domains. It involves the investigation of additively manufactured materials that are flexible, durable, and resistant to fatigue. Studies are needed to elucidate the effect the TAD has on system dynamics related to efficiency, loading, and vibration. Additional design methodologies for the blade and its control are also required. To initiate our effort, we look at a modeling framework to analyze the blade performance. It is used to study the efficiency of a fixed speed system with an adaptive TAD. The process also characterizes the range of blade deformation. This information is used to examine the structural response of a 3D printed blade.

## D.2. Blade Model

### D.2.1 Modular Blade Concept

The rib and bulkhead concept is combined with the box girder scheme to create a new blade concept. In this approach, a series of flexible blade segments fit around a central spar to modify the TAD. The external surface of the blade is formed by a non-structural skin covering the blade segments. A small-scale model, shown in Fig. 38a has been printed to demonstrate the assembly and its components. Figure 38b shows the schematic of the suggested design in a blade with eight segments. There are actuators located at the ends of every other segment. The location of the actuators and tuned stiffness of each segment is crucial in achieving the desired TAD. The technique for achieving this is the topic of our other work.

### D.2.2 Case Study Model

The system selected for the case study is the NREL Unsteady Aerodynamics Experiment Phase VI turbine. It is a two-bladed horizontal axis wind turbine (HAWT) with a rated power of 20 kW. The rotor has a diameter of 10 m and rotates at 72 rpm. The blades are constructed using the S809 airfoil. This system has a cut-in speed of 5 m/s and reaches rated power at 13.5 m/s. The performance of this system is certified and provides reliable results for this and other blade studies.

A 3D model of the blade is prepared as shown in Fig. 39. It is constructed from ULTEM 9085, a fused deposition modeling material increasingly used to build functional products. According to the manufacturer, ULTEM 9085 has a high strength-to-weight ratio and is suitable for many aerospace, automotive, and military applications. The blade is modeled based upon conventional geometry. The wall and rib thicknesses are assumed to be 1 and 3% respectively, of the chord length. This model is used to evaluate the cross-sectional changes. Material properties obtained in from mechanical tests are used in the study. Table 1 shows these properties. Since 3D printed components exhibit anisotropic behavior, it is necessary to determine the print direction. The segment is treated as though it is printed vertically. Therefore, the direction of printing is along the length of the blade span. Also, the chord line of the middle cross-section is assumed to be in direction 1.

Table D.1. Stiffness properties of ULTEM9085

| Property | Modulus of elasticity [MPa] | | | Poisson's ratio [-] | | | Shear modulus [MPa] | | |
|---|---|---|---|---|---|---|---|---|---|
| | $E_1$ | $E_2$ | $E_3$ | $v_{12}$ | $v_{13}$ | $v_{23}$ | $G_{12}$ | $G_{13}$ | $G_{23}$ |
| Value | 2539.4 | 2327.9 | 2159.6 | 0.46 | 0.39 | 0.40 | 635.5 | 635.5 | 582.82 |

### D.3. Methodology

This paper presents a methodology for the aerodynamic design of a flexible wind turbine blade. The procedure shown in Fig. 40 involves a search algorithm that finds the appropriate TAD as a function of wind speed. AeroDyn is combined with a heuristic process for this purpose. To achieve the desired aerodynamic performance, it is also important for the blade to maintain a constant cross-section shape while twisting. Hence, the cross-sectional change resulting from torsional loading is determined by using the FEA. This scenario is also analyzed by executing a fluid-structure interaction simulation using ANSYS workbench. The following sections elaborate on the design procedure.

### D.3.1 Aerodynamic Analysis

The relative flow angle over the wind turbine blade cross-section varies in moving from the root to the tip. This is the reason blades are manufactured with a twist angle that changes along the length. These changes can be expressed in terms of the angle, $\varphi$, that occurs at each distance, d, from the blade root. This is illustrated in Fig. 41. The TAD refers to the set of points defined by these two variables. Since blades are rigid, the TAD is also fixed. Consequently, the TAD can only be optimal for a specific wind speed in the fixed speed system. Accordingly, the aerodynamic analysis finds the appropriate TAD as a function of wind speed.

AeroDyn is used to facilitate this effort. It is a time-domain wind turbine aerodynamics module that can compute the aerodynamic loads on the blade. The calculations for modeling the wind turbine rotor is based on the quasi-steady Blade-Element Momentum theory (BEM), which requires an iterative nonlinear solution. The steady BEM is introduced here to provide a general insight into the process. BEM combines the momentum theory with the blade element theory. It determines the aerodynamic loads acting on the blades using an iterative process. The process is conducted by dividing the blade into elements. It then analyzes each element separately. Ultimately, the results are combined to provide the thrust force, $F_{th}$, the rotor torque, $T_r$, and any other required parameter. The BEM equates the terms for thrust force and torque obtained from the mentioned theories. The following relationships are from the momentum theory:

$$dF_{th} = Q\rho v_w{}^2[4a(1-a)]\pi r dr \quad \text{(D.1)}$$

$$dT_r = Q\rho v_w\left[4a'^{(1-a)}\right]\Omega r^3 \pi dr \quad \text{(D.2)}$$

and from the blade element theory the equations are:

$$dF_{th} = \sigma' \rho \frac{v_w{}^2 (1-a)^2}{\cos^2 \emptyset} (C_l \sin \emptyset + C_d \cos \emptyset) \pi r dr \qquad \text{(D.3)}$$

$$dT_r = Q \rho \frac{v_w{}^2 (1-a)^2}{\cos^2 \emptyset} (C_l \cos \emptyset + C_d \sin \emptyset) \pi r^2 dr \qquad \text{(D.4)}$$

The equations are then solved for the axial and angular induction factors:

$$a = \frac{1}{\frac{4Q \cos^2 \emptyset}{\sigma' (C_l \sin \emptyset + C_d \cos \emptyset)} + 1} \qquad \text{(D.5)}$$

$$a' = \frac{1}{\frac{4Q \sin \emptyset \cos \emptyset}{\sigma' (C_l \cos \emptyset - C_d \sin \emptyset)} + 1} \qquad \text{(D.6)}$$

The induction factors, and consequently other aerodynamic parameters, are obtained by an iterative process, which is described in Fig. 42. It begins with initial guesses for the factors. The parameters are updated at each iteration. Then, the differences between the old and the updated induction factors are calculated. When the acceptable tolerances are obtained, all required loads can be calculated from either the blade element theory or momentum theory equations.

### D.3.2 TAD Search Algorithm

An algorithm is devised to improve the blade twist for a discrete set of wind speeds in Region 2. It is not necessary to consider the aerodynamic coefficients of the blade section nearest the root. This portion has a circular cross-section, and is thus, independent of the angle of attack. Hence the procedure begins analyzing the non-circular cross-sections beyond that which is circular. The algorithm for the efficiency maximization process is seen in Fig. 43. At each step, the twist angle of the studied cross-section is changed, discretely. As this occurs, the twist angle of all the other elements remains constant. The twist angle with the maximum $c_p$ is considered to be the new twist angle of that cross-section. This process is repeated for all the non-circular cross-sections used in BEM to define the blade geometry. The search domain for the twist of each cross-section, $\varphi(d_i)$, starts from the former cross-section twist, $\varphi(d_{i-1})$, and ends to that of the next one, $\varphi(d_{i+1})$. When analyzing the first and last cross-sections of the blade, the search domain is between $\varphi(d_i)$ and $\varphi(d_{i+1})$, and between $\varphi(d_{i-1})$ and $\varphi(d_i)$, respectively. The search domain is directly related to the updated TAD. Consequently, after each maximization step, the search domain may change for the next cross-section. When all of the cross-sections are investigated, the maximization procedure for the blade is repeated, starting with the first non-circular cross-section. The reason for repeating the process is that the new TAD might provide a new search domain and improve results for some cross-sections. It is repeated until no change occurs in the twist nor in the $c_p$. During the search process, there are situations in which several twist angles of a cross-section give the same $c_p$ (up to four decimals). In these cases, the angle which is closer to the original twist is selected. This technique results in less deformation of the material.

### D.3.3 Structural Analysis

The aerodynamic design impacts the efficiency of energy captured from the wind as it moves across the blade.. For that step, it is assumed that the shape of the cross-section would not be significantly deformed as the TAD changed. This step of the design procedure ensures that assumption. To achieve this, we will consider the effect of an extreme loading event on the portion of the blade that has the greatest amount of twist. The first part of this process analyzes the blade as it is subjected to aerodynamic pressure. Torsion is then applied to simulate the behavior that occurs when the blade is contorted to its maximum displacement. The spar is not part of this analysis. The spar is based on conventional blade design techniques. It is assumed to be rigid and capable of carrying the load. We assume that no load is transferred between consecutive blade segments. In this study the segments facilitate torsional compliance and still maintain the required airfoil shape when deformed or exposed to aerodynamic forces.

### D.3.3.1 Fluid-Structure Interaction

The aerodynamic loads on the blade surface can potentially deform the cross-sectional geometry. A large deviation in the airfoil shape will have an adverse impact on the aerodynamic efficiency of the turbine. Hence, the fluid-structure interaction (FSI) analysis is used to study the effects of aerodynamic forces on the deformation of a 3D model. FSI analyzes the coupled dynamics of structures in contact with the fluid, as shown in Fig. 44. The structural deformation occurs in response to pressure developed by the fluid. In return, the structure imparts disturbances on the adjoining fluid, and thus alters the fluid flow. However, the effect that the structure has on fluid flow can be neglected when the amount of deformation is small. For the proposed design, the amount of deformation is minuscule in comparison to the blade dimension. Therefore, the one way FSI assumption can be implemented. Computational fluid dynamics (CFD) is used to model the pressure distribution over the blade segment. Finite Element Analysis (FEA) is then applied to determine the amount of deformation.

This analysis establishes the pressure distribution of airflow over the blade segment. The blade segment is assumed to be a rigid body. An airflow volume is created by subtracting the blade segment from a rectangular parallelepiped as shown in Fig. 45. The width of the volume is the same as the blade segment's width. The no-slip condition is applied to both the wall and fluid-structural interface. The inlet wind velocity and angle are obtained from the aerodynamic analysis.

The air volume is subdivided into fine and coarse mesh regions. The region neighboring the blade segment is set to a fine-mesh size of 1% of the chord length. The mesh size of the region away from the blade segment can be twice that value. This provides accurate results without the computational expense. The CFD software can be used with second-order discretization. The system is assumed to have steady-state laminar flow. The output determines the aerodynamic pressure acting on the blade segment. The aerodynamic pressure is applied to the structural model as shown in Fig. 46. The distribution of this pressure is a function of the air flow and the angle of attack. The FEA based solver calculates the structural deformation and stress in the blade segment. For this analysis, the blade segments are assumed to be fixed to the ribs (that attach to the spar). The contact surfaces are considered to be fixed as boundary conditions.

### D.3.3.2 Torsional Loading

The torsional deformation that the segment experiences, is based on the maximum twist gradient. This gradient is determined by the aerodynamic analysis. The amount of torque required to achieve this position is found using FEA simulation. The properties of the ULTEM 9085 material are used for the analysis. It is conservatively based on an extreme-case scenario. There is a rib at both ends of the blade element. One of these ribs is fixed, while torque is applied through on the other rib. The middle of the segment has the least amount of support, being located away from the ends. Our analysis suggests this point is susceptible to failure. The geometry at this cross-section is compared before and after the torsional load is applied. We want to ensure there is not a significant change in the cross-sectional shape at this location. The lift and drag coefficients are calculated by XFOIL before and after deformation. The variation in these coefficient gives us a quantitative sense of the cross-sectional change. For this type of loading the amount of deformation is negligible as shown in the results in Section D.4.

## D.4. Analysis and Results

A NREL Unsteady Aerodynamics Experiment Phase VI turbine was considered for the case study. We determined the blade TAD associated with maximum efficiency across the range of wind speed in Region 2. The region was evaluated at 1 m/s increments from the cut-in to rated speed. To find the gain in the efficiency, the maximum power coefficient, *cp*, is obtained using the procedure described in Section D.3.2. The results are compared to the maximum efficiency that can be found using a rigid blade with conventional pitch control. The comparison of these parameters is seen in Table D.2. It is notable that at 9 m/s there is virtually no increase. The lack of increase suggests the TAD is optimal near this wind speed. In moving away from this speed, the improvement in *cp* by TAD modification generally increases. It reaches 3.7 % at 5 m/s which demonstrates the usefulness of the proposed design for low wind speed.

Table D.3 defines the TAD as a function of wind speed in Region 2. At each di stance *d*, the angles, $\varphi_p$ and $\varphi_{TAD}$, are given for varying the pitch angle and TAD, respectively. As shown in the table, the twist angle points are very similar near 9 m/s, which is consistent with the results in Table D.2. This again suggests that the blade used in this study has a TAD that is optimal at this wind speed. As we move towards the cut-in speed, the differences in the TAD also increase between the two methods. The difference is most noticeable at cut-in speed. Moreover, it is most pronounced near the root, where the twist angle is greater for pitch control. At this same speed, we observe that the twist angles become more similar toward the tip.

Table 2. Gain in the maximum $c_p$ by twist modification for wind speeds 5 to 13 m/s

| $v_w$ [m/s] | 5 | 6 | 7 | 8 | 9 | 10 | 11 | 12 | 13 |
|---|---|---|---|---|---|---|---|---|---|
| $c_{p,conv}$[-] | 0.4465 | 0.4839 | 0.4346 | 0.3702 | 0.3144 | 0.268 | 0.2307 | 0.2002 | 0.1742 |
| $c_{p,TAD}$ [-] | 0.4631 | 0.4889 | 0.4392 | 0.3715 | 0.3148 | 0.2693 | 0.2325 | 0.2033 | 0.1787 |
| $\Delta c_p$ [%] | 3.7 | 1 | 1.05 | 0.35 | 0.13 | 0.49 | 0.8 | 1.55 | 2.58 |

At the rated speed, the TAD is also considerably different between the two methods. However, the amount of difference is less than that occurring at cut-in. It is also observable that the active TAD would have a higher degree of twist than that acquired through pitch control. This is in contrast to the active TAD at cut-in, which has a lesser degree. However, at both the cut-in and rated speeds, there is little variation between the twist angle in moving towards the tip.

Fig. 47 shows the minimum and maximum twist configurations. These are based on the Region 2 simulation results. To investigate the cross-sectional change, we first consider the "free shape" of the blade. This is analogous to the free position of a spring, in which there is no loading or deformation. The free shape is established as the mean position that is shown in Fig. 47. The amount of variation from this free position is important in determining the required actuation and deformation.

Table 3. Twist angle achieved by varying the pitch angle and TAD as a function of distance from hub center and wind speed.

| TAD | | Wind speed, $v_w$ [m/s] | | | | | | | | |
|---|---|---|---|---|---|---|---|---|---|---|
| d[m] | $\varphi(d)$[°] | 5 | 6 | 7 | 8 | 9 | 10 | 11 | 12 | 13 |
| 0.8001 | $\varphi_p$ | 21.62 | 20.72 | 22.72 | 24.62 | 26.42 | 28.22 | 29.92 | 31.62 | 33.62 |
| | $\varphi_{TAD}$ | 11 | 13.5 | 18.5 | 22.5 | 24 | 27.62 | 29.92 | 31.42 | 33.42 |
| 1.0767 | $\varphi_p$ | 16.52 | 15.62 | 17.62 | 19.52 | 21.32 | 23.12 | 24.82 | 26.52 | 28.52 |
| | $\varphi_{TAD}$ | 10 | 10 | 14.5 | 18 | 21.32 | 24.2 | 27.5 | 28.5 | 33 |
| 1.2779 | $\varphi_p$ | 13.17 | 12.27 | 14.27 | 16.17 | 17.97 | 19.77 | 21.47 | 23.17 | 25.17 |
| | $\varphi_{TAD}$ | 7 | 9.24 | 12 | 16.5 | 17.97 | 21.2 | 23.5 | 25.5 | 28.5 |
| 1.4958 | $\varphi_p$ | 10.44 | 9.54 | 11.54 | 13.44 | 15.24 | 17.04 | 18.74 | 20.44 | 22.44 |
| | $\varphi_{TAD}$ | 7 | 9.24 | 10.5 | 12 | 15.24 | 18.2 | 21.5 | 24 | 26.5 |
| 1.7137 | $\varphi_p$ | 8.36 | 7.46 | 9.46 | 11.36 | 13.16 | 14.96 | 16.66 | 18.36 | 20.36 |
| | $\varphi_{TAD}$ | 5.5 | 7.16 | 8.5 | 10 | 13.16 | 15.7 | 18.5 | 21 | 23.5 |
| 1.9149 | $\varphi_p$ | 6.89 | 5.99 | 7.99 | 9.89 | 11.69 | 13.49 | 15.19 | 16.89 | 18.89 |
| | $\varphi_{TAD}$ | 5.5 | 5.69 | 7 | 8.5 | 11.69 | 13.5 | 16.5 | 19 | 21.5 |
| 2.116 | $\varphi_p$ | 5.7 | 4.8 | 6.8 | 8.7 | 10.5 | 12.3 | 14 | 15.7 | 17.7 |
| | $\varphi_{TAD}$ | 4.5 | 5 | 6 | 7.2 | 10.5 | 11.7 | 14.5 | 17 | 19.3 |
| 2.334 | $\varphi_p$ | 4.68 | 3.78 | 5.78 | 7.68 | 9.48 | 11.28 | 12.98 | 14.68 | 16.68 |
| | $\varphi_{TAD}$ | 4.48 | 4 | 5.98 | 7 | 9.48 | 10.68 | 12.98 | 15 | 17.3 |
| 2.552 | $\varphi_p$ | 3.89 | 2.99 | 4.99 | 6.89 | 8.69 | 10.49 | 12.19 | 13.89 | 15.89 |
| | $\varphi_{TAD}$ | 3.69 | 3 | 5.9 | 5.9 | 8.69 | 9.89 | 12.19 | 13.69 | 15.69 |
| 2.753 | $\varphi_p$ | 3.32 | 2.42 | 4.42 | 6.32 | 8.12 | 9.92 | 11.62 | 13.32 | 15.32 |
| | $\varphi_{TAD}$ | 3.12 | 2.5 | 5.5 | 5.7 | 8.12 | 9.32 | 11.62 | 12.7 | 15.12 |
| 2.9542 | $\varphi_p$ | 2.87 | 1.97 | 3.97 | 5.87 | 7.67 | 9.47 | 11.17 | 12.87 | 14.87 |
| | $\varphi_{TAD}$ | 3 | 2 | 4.6 | 5.5 | 7.67 | 8.87 | 11.17 | 12.67 | 14.67 |
| 3.1721 | $\varphi_p$ | 2.47 | 1.57 | 3.57 | 5.47 | 7.27 | 9.07 | 10.77 | 12.47 | 14.47 |
| | $\varphi_{TAD}$ | 2.8 | 1.7 | 3.77 | 5.4 | 7.27 | 8.47 | 10.77 | 12.27 | 14.27 |
| 3.39 | $\varphi_p$ | 2.12 | 1.22 | 3.22 | 5.12 | 6.92 | 8.72 | 10.42 | 12.12 | 14.12 |
| | $\varphi_{TAD}$ | 2.5 | 0.92 | 3.42 | 5.4 | 7.2 | 8.12 | 10.42 | 11.92 | 13.92 |
| 3.5912 | $\varphi_p$ | 1.82 | 0.92 | 2.92 | 4.82 | 6.62 | 8.42 | 10.12 | 11.82 | 13.82 |
| | $\varphi_{TAD}$ | 2.4 | 0.62 | 3 | 4.9 | 6.8 | 8.1 | 10.12 | 11.9 | 13.62 |
| 3.7924 | $\varphi_p$ | 1.52 | 0.62 | 2.62 | 4.52 | 6.32 | 8.12 | 9.82 | 11.52 | 13.52 |
| | $\varphi_{TAD}$ | 1.7 | 0.32 | 2.7 | 4.4 | 6.32 | 7.52 | 9.82 | 11.32 | 13.32 |
| 3.9684 | $\varphi_p$ | 1.27 | 0.37 | 2.37 | 4.27 | 6.07 | 7.87 | 9.57 | 11.27 | 13.27 |
| | $\varphi_{TAD}$ | 1.4 | 0.07 | 2.4 | 4.3 | 6.07 | 7.27 | 9.57 | 11.07 | 12.9 |
| 4.1444 | $\varphi_p$ | 1.02 | 0.12 | 2.12 | 4.02 | 5.82 | 7.62 | 9.32 | 11.02 | 13.02 |
| | $\varphi_{TAD}$ | 1.4 | 0 | 2.32 | 4.2 | 5.82 | 7.25 | 9.32 | 10.82 | 12.82 |
| 4.3456 | $\varphi_p$ | 0.73 | -0.17 | 1.83 | 3.73 | 5.53 | 7.33 | 9.03 | 10.73 | 12.73 |
| | $\varphi_{TAD}$ | 0.8 | -0.3 | 2.03 | 3.8 | 5.53 | 6.73 | 8.79 | 10.53 | 12.3 |
| 4.5216 | $\varphi_p$ | 0.49 | -0.41 | 1.59 | 3.49 | 5.29 | 7.09 | 8.79 | 10.49 | 12.49 |
| | $\varphi_{TAD}$ | 0.8 | -0.4 | 1.79 | 3.29 | 5.29 | 6.49 | 8.79 | 10.29 | 12.29 |

Specifically, the latter affects the structural design of the blade. Hence, the maximum twist per unit of length is extracted from this figure for consideration in the structural analysis that follows. The maximum twist per unit of length occurs in the blade segment that is situated between 1.8 to 2.16 m as measured from the blade root. The amount of change in the twist angle as measured between the chord lines at each end is 1.96 degrees. This scenario is used to analyze the structural response to deformation and aerodynamic loading.

An FSI analysis was conducted on the blade segment. This was done to ensure that the blade segment maintains its geometry under the applied loads. The scenario shown in Table D.4 is based on the highest wind speed, which occurs at cut-out. The aerodynamic loads were determined using the AeroDyn. It is observed that the deformations are of the magnitude of 0.1 mm. This amount is negligible when compared to the size of blade segment. Also, the maximum Von-Mises stress is less than 1 MPa. The design is acceptable considering that the ULTEM9085 has a strength of more than 30 MPa.

Table E.4. Characteristics of FSI analysis

| | |
|---|---|
| Wind speed [m/s] | 25 |
| Angle of attach [°] | 7.06 |
| Maximum Deformation [mm] | 0.1077 |
| Maximum Von-Mises Stress [Pa] | 7.81e5 |

The segment deformation is subsequently analyzed in the extreme twist configuration. The middle cross-section is considered in this case. In Fig. 48(a), the middle cross-section of the free position is compared to that of the twisted position. The chords of the twisted and free-position section are aligned to make a comparison. Fig. 48(b) illustrates how closely the two sections are matched to one another. The results are virtually the same when considering the twist that occurs in the opposite direction. In both cases, the amount of variation was insignificant. Moreover, the Von- Mises stress resulting from this deformation was less than 1 MPa. An XFOIL analysis of the twisted cross-section further indicates that there is negligible change in the aerodynamic performance.

**D.5. Conclusion**

A model to study a blade concept subjected to out-of-plane morphing was presented. The blade includes a rigid spar, segments with torsional compliance, and a non-structural skin. A heuristic search algorithm was employed to explore the capability of a variable TAD. A case study suggests there could be a gain in aerodynamic efficiency in Region 2. For this particular blade, an increase in efficiency of 3.7% and 2.58% could be realized near the cut-in and rated speeds, respectively. Extreme aerodynamic and torsional loading scenarios were also considered. The 3D printed ULTEM 9085 properties were used for the analysis. There was no effective change in the blade cross-section geometry in any of these two cases. Both cases showed negligible Von-Mises stress.

**D.0 Nomenclature**

*Cd* drag coefficient
*Cl* lift coefficient
*E* modulus of elasticity
*Ft* thrust force
*G* shear modulus
*Q* tip loss correction factor
*Tr* rotor torque
*a* axial induction factor
*a'* angular induction factor
*cp* power coefficient
*d* distance from blade root
*e* axial induction factor error
*e'* angular induction factor error
*i* cross-section index in design space exploration algorithm
*n* BEM analysis elements index
*r* radial distance
$\upsilon w$ wind speed
Ø relative flow angle
$\rho$ density
· twist angle
*v* Poisson's ration
$\sigma'$ local solidity

*Ω* blade rotational speed

## E. A FLEXIBLE WIND TURBINE BLADE WITH AN ACTIVELY VARIABLE TWIST DISTRIBUTION TO INCREASE REGION 2 EFFICIENCY: DESIGN AND CONTROL

A method for designing and controlling a novel wind turbine blade is presented. The blade is modular, flexible, and additively manufactured. Conventional blades are monolithic and relatively stiff. The conventional method for improving aerodynamic efficiency is through generator torque control. The anisotropic nature of the additive manufacturing (AM) process has the potential to create a flexible blade with a low torsional-to-longitudinal- stiffness ratio. This enables new design and control capabilities that could be applied to the twist angle distribution (TAD). Simulation results suggest this can increase the aerodynamic efficiency during Region 2 operation. The suggested blade design includes a rigid spar with flexible AM segments that form the surrounding shells. The stiffness of each individual segment and the actuator placement define the TAD. In practice, the degree of flexibility for each segment will be established through the design and AM processes. These variations in compliance allow the blade to conform to the desired set of TAD geometries. The proposed design process first determines the TAD that maximizes the aerodynamic efficiency in Region 2. A mechanical design algorithm subsequently locates a series of actuators and defines the stiffness ratio between the blade segments. The procedure is optimized to minimize the amount of variation between the theoretical TAD and that which is obtained in practice. The free-shape TAD is also determined in the final design step. The geometry is chosen to minimize the amount of deflection needed to shape the TAD as it changes with Region 2 wind speed. A control framework is also developed to set the TAD in relation to wind speed. A case study demonstrates the capability of the proposed method. The simulation results suggest that a TAD controlled through five actuators can achieve the full range of required motion. Moreover, the design solution can increase the efficiency at cut-in and rated speeds up to 3.8% and 3.3%, respectively.

## E.0 NOMENCLATURE

*Av* total area between TAD curves
*Cd* drag coefficient
*Cl lift* coefficient
*N* total number in the set
*P* segment endpoint locations
*Pg* generated power
*Q* correction factor
*Rk* stiffness ratio
*S* segment number
*T* section-end torque
*a* axial induction factor
*a'* angular induction factor
*b* twist range in one direction
*cp* power coefficient
*i* wind speed index (free-shape selection)
*j* wind speed index
*k* stiffness constant
*l* segment length
*n* TAD iterative index
*r* radial distance
*u* control variable
*v* wind speed
*w* disturbance variable
*y* measured variable
*z* output variable
*δ* cross-section twist variation
*δ'* twist change gradient
Ø relative flow angle
· twist angle
*σ'* local solidity
*a* aerodynamic analysis subscript

*b* blade coordinate system subscript
*c* controlled output subscript
*min* minimum subscript
*max* maximum subscript
*o* original blade output subscript
*p* pitch subscript
$\eta$ segment number subscript
$\zeta$ section number subscript

## E.1 Introduction

Wind power is the largest source of new renewable energy. In 2015, it experienced 22% increase in capacity. The global capacity reached to 433 GW in that year, as major turbine manufacturers set new records for the number and capacity of new installations. Wind energy continues to attract attention as its costs decrease. Research and development efforts have impacted this through new technology that has improved the efficiency of wind energy conversion. An example of this is variable rotor speed capability (VRS). It increases the amount of wind that is converted to electrical power during partial load operation. VRS can be achieved by controlling the generator torque through the power conditioning equipment. It can also be realized through a variable ratio gearbox or continuously variable transmission (CVT).

To maximize the benefits of VRS capability, it is beneficial to control the rotor speed in relation to the wind speed. Narayana et al. worked on a universal maximum power point tracking (MPPT) controller for small wind turbines. It can track the optimum point without using the wind turbine characteristics. The authors used an adaptive filter with a fuzzy logic based MPPT controller. Beltran et al. controlled a doubly fed induction generator (DFIG) using references given by an MPPT. The authors used a second-order sliding mode to track the DFIG torque to reach the maximum power. The work suggests that this method is more accurate than tracking control currents. Eltamaly and Farh achieved maximum performance by controlling the power converters on both the grid and generator side. This works through the generator to control rotor speed for maximum power production. On the grid side, the active and reactive power are controlled by the current in the direct and quadrature axes. Kesraoui et al. used the MPPT in a turbine with a permanent magnet synchronous generator (PMSG) to extract the maximum power. Their system senses only dc link power for this goal. Li et al. proposed a control strategy to improve the MPPT efficiency. The method is based on the RBF neural network and adjusts the torque output with changes in wind speed. Dahbi et al. combined MPPT control with blade pitch control to maximize the extracted wind power. Only one controller was used to reduce system complexity and cost.

Smart blade technology can also improve the wind turbine efficiency. The shape of the blades changes in relation to wind speed. Unguran and Kuhn combined this capability with pitch control. The authors controlled both the pitch angle and the trailing edge flap to reduce the aerodynamic thrust loads. Loth et al. suggested a segmented morphing blade concept. The authors used screw sockets and a tension cable to connect the blade segments. The difference between the cable tension and centrifugal force determines the twist angle. In another study, the twist angle for a small blade was controlled through the rotation of three ribs. The ribs were actuated by cables connected to an electromotor in the hub. Twist variations have been studied in helicopters and tiltrotors as well. The tiltrotor has two different operational modes. Hence, it needs two different twist angle distributions (TAD). Park et al. embedded shape memory alloy wires in the composite matrix to control the proprotor twist. Mihir et al. designed a blade including a tubular spar with rotating ribs for a helicopter and tiltrotor blade. The skin is attached to the rotating ribs. When the skin is wrapped, the twist angle of the blade changes. Prahlad and Chopra investigated different approaches to actively control the twist angle of a tiltrotor blade. The torque tube actuation concept was found as a practical solution for twist variation.

A new blade design could provide new capabilities to further boost the efficiency of wind energy conversion. Still, there are other important issues that need to be addressed in blade development. There are different restrictions such as the overall length and weight placed on trailers on United States roadways. The maximum transportable length of the blade on United States highways is 62 m, while the length of some blades exceeds 75 m. This hinders the implementation of larger turbines, which produce electricity at the lowest cost. The transportation of huge blades can cost up to 5% of the total expense of an installed turbine. As part of its midterm plan, the International Energy Agency (IEA) is encouraging research in the area of novel rotor design. Modular blade designs and onsite manufacturing are encouraged as solutions to the current problems. Modular blades have been a recent focus of industrial blade manufacturers. A design created by Blade Dynamics uses carbon spar boxes in a modular blade with four sections. Although this blade is three meters longer than the Siemens B75, its weight is 10% less. Blade Dynamics claims that this design reduces energy cost by 3 to 5 %. Wetzel Blade is also working on the modular design. The concept takes advantage of a space frame to create a blade with three spars connected by ribs and non-structural skin. This design decreases the transportation costs by 75% and increases the annual energy by 7%. It also results in 50% increase in the service life over that of the current designs.

In support of the IEA goals, the authors are proposing a modular blade that implements additive manufacturing (AM) technology. The overarching objective of our work will address multiple concerns related to performance, manufacturing, and transportation. The modular shells of the blade are produced using AM. The freeform nature of this process removes the need for bulky molds and the associated tools. In the future it could result in the production of blades on site. The anisotropic nature of AM components could also be leveraged to improve component performance. Anisotropy occurs in the AM process due to the materials and directional manufacturing technique. The freeform capability also allows AM to create anisotropic structures. These capabilities have the potential to produce a wind turbine blade with a low torsional-to-flexural stiffness ratio. This is the impetus for the flexible blade presented in our current work. This proposed design will minimize the energy required to actuate the blade structure. It must also remain resilient against the aerodynamic forces. Specifically, it must maintain the cross-sectional shape that directly affects the aerodynamic efficiency. Currently the authors are investigating the materials, AM process, mechanical design, and control of the flexible blade. The work in this paper focuses on the design and control of a flexible blade that improves the efficiency during partial load operation. This is accomplished through (1) a mechanical design that enables the desired TAD geometry and (2) a control technique that sets the TAD in relation to wind speed. Our work in control also involves using the TAD in Region 3 to mitigate vibration.

### E.2 Flexible Blade Concept

A concept for the modular AM blade has been devised as shown in Fig. 1. The primary components include a spar, surrounding blade segments, and a non-structural skin. The spar is rigid, while the segments and skin are flexible. These segments work together in pairs to form sections, which are mounted onto the spar in series. Actuators are used to twist the blade into the desired TAD. A pitch actuator performs gross adjustment by rotating the spar. The remaining actuators are mounted at the section boundaries to provide fine adjustment to the TAD along the length of the blade. The placement of actuators, the length of the sections, and compliance of the segments are crucial in obtaining the required TAD. The proposed framework selects the optimal values for these parameters to maximize energy production.

### E.2.1 Twist Angle Distribution (TAD)

The spar is connected to the hub through a pitch motor that grossly adjusts the blade angle. The angle of rotation for the spar, $\varphi_p$, is the same as the conventional pitch angle as shown in Fig. 3. It has an axis at the hub connection and is measured relative to the rotor plane of motion. Along the length, *r*, of the blade, the local twist angle, $\varphi_b$, is measured relative to the blade root axis. Since the blade root moves with pitch actuation, the absolute local twist angle is measured using Eqn. E. 1,

$$\varphi(r) = \varphi_p + \varphi_b(r) \qquad \text{(E.1)}$$

where $\varphi$ represents the angle of twist measured relative to the rotor plane of motion at length, *r*, from the hub center.

### E.METHODOLOGY

The development framework utilizes three main blocks. The process commences using a given blade design of known geometry and aerodynamic performance. The aerodynamic design establishes the TAD for discrete points of wind data that span Region 2. Each selection represents the TAD that provides maximum aerodynamic efficiency at the given wind speed. The mechanical design locates the actuators and establishes the stiffness ratio between the blade segments in each section. These parameters determine the shape of the blade as it is deformed. An optimization procedure identifies values that create the TADs found in the aerodynamic design. The design procedure also determines the free shape of the blade. This is the geometry of the blade when it is not deformed. Computational tools are employed in the framework to conduct the procedure. These include the NREL Aerodyn software, a genetic algorithm, and a parallel computing network. The steps of the framework are described in detail in Sections E.3.2, E.3.3, and E.3.4. The devised TAD is enabled through a control algorithm. It sets the TAD in relation to wind speed. Simulation is also conducted to assess the performance of the active TAD.

### E.3.1 CASE STUDY

A case study has been conducted to demonstrate the proposed optimization method. It is based on a 20 kW wind turbine that was used in the NREL Unsteady Aerodynamics Experiment Phase VI experiment. This is a fixed-speed horizontal axis system with two blades. Each blade has a length of 4.6 m with a maximum chord length of 0.714 m. It has a rotor speed of 72 RPM that achieves a torque of 2650 ***Nm*** at a rated speed of 13.5 m/s. This simple system is a good starting point for our study of the blade twist angle. The performance data for this blade has also been certified by NREL. It is simulated with the control framework (see section E.3.4) to characterize the performance of the blade with respect to the TAD. An analysis is also conducted on the original (rigid) blade to establish a baseline for the performance.

### E.3.2 AERODYNAMIC DESIGN

The aerodynamic design procedure determines the appropriate TAD of the blade as it varies in relation to wind speed. The objective is to maximize the efficiency of the wind turbine blade in Region 2. This is measured in terms of the power coefficient, *cp*. The efficiency in Eqn. E.2 is maximized as a function of the pitch angle, twist angle configuration, and wind speed, *v*, such that

$$c_p = f(\varphi, v) \qquad \text{(E.2)}$$

For the aerodynamic design the twist angle, $\varphi$ is analyzed at discrete points along the blade. The variable $\varphi_a$ in Eqn. E.3, represents the angle of twist with respect to the rotor plane at these points:

$$\varphi_a(i) = [\varphi_a(1), \varphi_a(2), \ldots, \varphi_a(N_a)] \qquad \text{(E.3)}$$

$$\varphi a(i) = [\cdot a(1),\ \cdot a(2),\ \ldots\ \cdot a\ (Na\ )]\ (3)$$

The aerodynamic portion of the framework includes a solver tool and aerodynamic model. This arrangement is used to evaluate the performance of various twist angle configurations.

#### E.3.2.1 AERODYNAMIC MODEL

In the exemplary study, AeroDyn was used to study the aerodynamic performance of the blade. It is a time-domain module that can compute the aerodynamic response of wind turbine blades. It requires an iterative nonlinear solution. In our model, it simulates the steady loads on the blades. These loads can be used to determine the amount of torque that is produced by the rotor. The approach is based on the quasi-steady Blade-Element/Momentum (BEM) theory. The BEM method is known for efficiency and the ability to provide reliable blade load results. It equates the terms for thrust force and torque from momentum theory and blade element theory. It then solves Eqns. E.4 and E.5, for the axial and angular induction factors respectively:

$$a = \frac{1}{\dfrac{4Qcos^2\emptyset}{\sigma'(C_l sin\,\emptyset + C_d cos\,\emptyset)} + 1} \qquad \text{(E.4)}$$

$$a' = \frac{1}{\dfrac{4Qsin\,\emptyset\, cos\,\emptyset}{\sigma'(C_l cos\,\emptyset - C_d sin\,\emptyset)} + 1} \qquad \text{(E.5)}$$

The BEM technique analyzes the blade as individual elements. The iterative process is used on each element to calculate the aerodynamic loads. Ultimately, the results are combined to provide the aerodynamic loads on the blade and rotor. In the case study, the blade cross-section was evaluated at 19 points along the length.

#### E.3.2.2 SEARCH ALGORITHM

In Region 2, the optimal twist angle configuration is found by maximizing the power coefficient. The BEM model must be coupled with an optimization tool to search for a twist angle configuration. The MATLAB environment is used to create this computing structure in the case study. It is used in Eqn. E.6 to find the optimal TAD for a discrete range of wind speed, *v*, in Region 2, such that,

$$v(j) = [v(1), v(2), \ldots, v(N_v)] \qquad \text{(E.6)}$$

and where the first and last points in the set correspond to the cut-in and rated speeds, respectively.

The iterative search algorithm finds the twist angle that maximizes the power coefficient at each cross-section.

The blade calculations are nonlinear and discontinuous, and the search procedure is computationally expensive. A Genetic Algorithm (GA) solver is used as the search tool to identify optimal twist configurations. The GA has capabilities in solving problems with discontinuous, non-differentiable or highly nonlinear objective functions. Still, the process indicated that there were local minima. This makes it difficult for the GA solver to find the global minimum. However, we found that the global minimum always exists within a band of values that surround the original twist angle. Hence, a range of values can be used to constrain the search. For each cross-section, the procedure begins searching near the original design twist distribution. After that, the resulting solution for the twist angle is then used to form the search domain of next step. The constraint narrows the search domain and allows the GA to find the global solution more efficiently. This procedure is repeated until the power coefficient no longer increases. This corresponds to the optimum blade twist for the given wind speed.

### E.3.3 MECHANICAL DESIGN

The previous section determined the ideal TAD to maximize the aerodynamic efficiency. This section presents a technique to obtain the selected TADs through mechanical design. The aim is to achieve a TAD in the actual application matching that found in the aerodynamic design. During operation, the TAD will be actively controlled in relation to wind speed. The blade is coerced into the desired shape by internal actuators. The blade segments could be additively manufactured from a semi-flexible material such as carbon-reinforced nylon. The author is currently investigating a design technique in which the component stiffness is defined by the AM process and internal geometry. For this analysis, the stiffness is considered in relative terms, or as a ratio between consecutive segments. The mechanical design establishes the stiffness ratios for each blade section and location for the intermediate actuators. The calculations concern blade deformation and, therefore, is conducted with respect to the blade axis. Optimization principles are implemented into this process to leverage the capability of the mechanical design.

### E.3.3.1 BLADE MODEL

The blade configuration for the design process is shown in Fig. 8. The blade is constructed through a series of flexible blade segments that are spliced together and mounted on the spar. Two consecutive segments form a section. The segments, $S_{\zeta\eta}$, in each section have different torsional stiffness values. Each segment has a stiffness of $k_{\zeta\eta}$, where $\zeta$ is the section number, and $\eta$ is the segment number. The latter subscript is either 1 or 2, for the first and second segments of each section, moving from root towards the tip. The boundary between these two segments in each section is denoted by the transition plane. This point is referred to as a transition plane since the stiffness value changes across this point. An actuator is located at the boundaries of each section which are identified by the actuator planes. A single actuator acts at each of these points to twist the respective ends of the sections into shape.

There are two types of design input variables for the optimization problem. One is the stiffness ratios, $R_k$, for each section, which is defined in Eqn. E.7 as:

$$R_k = \frac{k_{\zeta 2}}{k_{\zeta 1}} \quad \text{(E.7)}$$

where $k_{\zeta 1}$ and $k_{\zeta 2}$ refer to the stiffness values for segments 1 and 2, respectively, in section $\zeta$. The other design input defines the length of each section $\zeta$ and hence, the locations, $r_P$, of the intermediate actuators at $P = [3,5, \ldots ,2N_\zeta - 1]$. The first and last actuators at $P = [1,2N_\zeta + 1]$, are fixed near the root and at the tip of the blade and are not part of the analysis. The section lengths and the relative stiffness between the segments are crucial in determining the TAD. The relationship between the design inputs and the TAD for a single section is illustrated in Fig. 9. The ideal TAD is described by the solid curve, while the possible mechanical design scenarios are indicated by the dotted lines. Twist angle of the corresponding transition plane can move along the dashed line depending on the stiffness ratio. Decreasing the stiffness ratio shifts the mechanically-achievable TAD curve upwards. Increasing the ratio has the opposite effect. The mechanical design can also be shifted to the left and right along the ideal curve by adjusting the segment length, and thus, actuator locations.

### E.3.3.2 OPTIMIZATION PROBLEM

The goal of the optimization process is to identify a mechanical design that closely matches the results found in the aerodynamic design. It works by minimizing the area between the respective TAD curves. Figure 10 illustrates how the objective function is applied to this problem.

The optimization process minimizes the total area for all of the sections across the range of wind speed in Region 2: This is stated through the objective function $f$ in Eqn. E.8,

$$f = \sum_{j=1}^{N_v} A_v(j) \quad \text{(E.8)}$$

where, $A_V$ is the area between the TAD curves of the theoretical and mechanical design as computed at wind speed, v(j). The total area, $A_v$ is computed for a given wind speed using Eqn. E.9,

$$A_v(j) = \int_{r(1)}^{r(N_p)} \left| \varphi_{b,a}(r,j) - \varphi_{b,m}(r,j) \right| \, dr \quad \text{(E.9)}$$

where $\varphi_{b,a}$ and $\varphi_{b,m}$ represent the ideal and mechanical design TAD, respectively, in the blade coordinate system, at distance, *r*, for wind speed *j*. Figure 11 illustrates an example of the area that is found between the two TAD curves. Ultimately, the area is measured over the active portion of the blade. This portion extends from the start of the first section, at $r_{(P=1)}$ through the end of the last section at a distance of $r_{(P=2\zeta+1)}$.

The twist values at the actuation planes are obtained from the theoretical TAD. The relationship in Eqn. E.10 is used to compute the twist angle at the transition planes, where $P$ = [2,4, ...,2ζ]

$$\varphi_{b,m}(r_{(P)}, j) = \frac{\varphi_{b,m}(r_{(P-1)}, j) + R_k \times \varphi_{b,m}(r_{(P+1)}, j)}{1 + R_k} \quad \text{(E.10)}$$

It was determined during our study that the stiffness ratio, $R_k$, can always be found within a given range. Hence, a constraint was imposed to reduce the range of design inputs:

$$R_{k,min} \leq R_k \leq R_{k,max} \quad \text{(E.11)}$$

Constraining the lengths of segments in each section reduces the computational expense and also provides reasonable results for the analysis,

$$l_{\zeta 1} = l_{\zeta 2} \quad \text{(E.12)}$$

where *l* represents the lengths of segments in section $\zeta$.

The efficiency of the search algorithm can be further improved by establishing a search domain for the actuator location. The midpoints of the search domains are located at evenly spaced points along the active portion of the blade. These points are established by dividing the active portion of the blade into $N\zeta$ sections. The range for the individual domains is extended a distance of *b* to both sides of the respective starting point. The constraint placed upon the search domain by,

$$B_P - b \leq r_P \leq B_P + b, \text{for } P = [3,5, \ldots, 2N_\zeta - 1] \quad \text{(E.13)}$$

where,

$$B_P = \frac{P-1}{2} \times \frac{r_{(P=2\zeta+1)} - r_{(P=1)}}{\zeta - 1} + r_{(P=1)} \quad \text{(E.14)}$$

Once the constraints are applied, the value of the objective function is calculated for all possible combinations of design input parameters. It considers all of the discrete wind speed values, *v*, in Region 2. The values of $R_j$, and the lengths of the sections (as defined by the locations of intermediate actuator planes) are selected through this process. These inputs correspond to the design solution that minimizes the objective function.

In the case study, four sections were sufficient for creating the TAD. The stiffness ratio, $R_k$, was constrained between 0.5 and 2 with a step size of 0.1. The search domain spanned 10% of the active length of the blade with a step size of 1% of the length. Five actuators are implemented to create the TAD. This arrangement created 87.3 million ($M^s N^{s-1}$) design scenarios to consider. Figure 12 shows how the parameters for a typical combination are implemented to acquire the TAD. The objective problem was analyzed through a parallel computing cluster, having 132 cores that took roughly 50 hours to process.

### E.3.4 FREE SHAPE SELECTION

The final step in the design process is to select a TAD scenario for the free position. This will correspond to the geometry of the TAD when it is not deformed by the actuators, or when no load is applied. In this approach, the selected free position is the TAD that minimizes the maximum required twist change per length unit. Using this criterion reduces the amount of travel and load applied by the actuator.

The process commences by comparing the TAD at wind speed, *v(i),* to each wind speed, v(j). The goal is to find the TAD at v(i), which requires the least amount of deflection with respect to the other wind speed TADs. Accordingly, the first step of the algorithm considers the TAD at *v(i)* as the free position, $\varphi_{b,m}(r_{(P)}, i)$. The amount of twist deformation to reach the TAD at all other wind speeds, $\varphi_{b,m}(r_{(P)}, j)$, is then determined. This is calculated in terms of the two ends of each individual blade segment $S_{\zeta\eta}$, $\delta_{i,j}(P)$ and $\delta_{i,j}(P + 1)$, where $P = 2(\zeta - 1) + \eta$. The difference between required twist change for two ends of each segment is divided by the length of that segment, $r_{(P+1)} - r_{(P)}$. The result in Eqn. E.15 is the required twist change per length unit for that segment, $\delta'_{\zeta\eta}$ :

$$\delta'_{i,j}(s) = \frac{\delta_{i,j}(s+1) - \delta_{i,j}(s)}{r(P=s+1) - r(P=s)} \qquad \text{(E.15)}$$

$$\delta i,j' \quad (S\zeta\eta) = \delta i,j\ (P+1) - \delta i,j\ (P) r(P+1) - r(P)\ (15)$$

where,

$$\delta_{i,j}(s) = \varphi_{b,m}(r_{(P)}, i) - \varphi_{b,m}(r_{(P)}, j) \qquad \text{(E.16)}$$
$$i, j \in [1, 2, \ldots, N_v], j \neq j$$

The difference, $\delta'_{\zeta\eta}$ is computed for all wind speeds. The segment with the maximum absolute value of $\delta'$ is selected as the most critical one for this assumption. This process is repeated until i spans the whole discrete range of wind speed, *v*, in Region 2. It results in a list of assumed free shapes (assigned to each wind speed) and a corresponding maximum absolute values of $\delta'$. Finally the assumed free shape with the smallest maximum absolute values of $\delta'$ is selected as the optimum free shape.

### E.3.5 ACTIVE BLADE OPERATION

This section focuses on the operation of the active blade in Region 2. Control is applied to the blade model. It maintains the optimal TAD position to maximize efficiency and power production. During normal operation, the objective is to maximize aerodynamic efficiency. The mechanical design established the TAD geometry that is required to do this. The controller uses this information during partial load operation. It adjusts the TAD as the wind speed changes.

The performance of the actively-controlled TAD is studied using a simulation model described in Fig. 21. In this arrangement, the blade model is integrated into a 20 kW drivetrain model previously developed by the authors. A set of wind data is used as the input. The controller sets the TAD in response to the input. A BEM model computes the aerodynamic loads. These loads determine the torque that is applied to low-speed shaft in the drivetrain. At this stage a gearbox increases and decreases, respectively, the speed and torque. The torque is applied to the shaft of the generator model. The output from the drivetrain is the electrical power, $P_g$ and power coefficient, $c_p$.

#### E.3.5.1 WIND MODEL

A ramp input provides wind speed data to the model during simulation. It ranges from cut-in speed to rated speed. A power spectral density function is used to obtain an input similar to that occurring in nature. Within the model, the wind speed is based on a five-second average.

### E.3.5.2 BLADE MODEL

The flexible wind turbine blade is a dynamic system. It can be analyzed in terms of its individual blade sections. Each section has two independent variables, $\varphi_{\zeta 1}$ and $\varphi_{\zeta 2}$. The variables described the angular position, speed, and acceleration at the ends of each blade section.

$$\ddot{\varphi}_{\zeta 1} = \frac{T_{\zeta 1}}{J_{\zeta 1}} - \frac{b_{\zeta 1}}{J_{\zeta 1}}\dot{\varphi}_{\zeta 1} - \frac{k_{\zeta 1}}{J_{\zeta 1}}\left(\varphi_{\zeta 1} - \frac{k_{\zeta 1}\varphi_{\zeta 1} + k_{\zeta 2}\varphi_{\zeta 2}}{k_{\zeta 1} + k_{\zeta 2}}\right) \quad \text{(E.17)}$$

$$\ddot{\varphi}_{\zeta 2} = \frac{T_{\zeta 2}}{J_{\zeta 2}} - \frac{b_{\zeta 2}}{J_{\zeta 2}}\dot{\varphi}_{\zeta 2} - \frac{k_{\zeta 2}}{J_{\zeta 2}}\left(\frac{k_{\zeta 1}\varphi_{\zeta 1} + k_{\zeta 2}\varphi_{\zeta 2}}{k_{\zeta 1} + k_{\zeta 2}} - \varphi_{\zeta 2}\right) \quad \text{(E.18)}$$

The stiffness, $k_{\zeta 1}$ and $k_{\zeta 2}$, are due to the flexible blade material. Each segment works like a spring when deformed. There is also some loss associated with the materials deformation. This is represented by $b_{\zeta 1}$ and $b_{\zeta 2}$ for the two segments in the section. Both segments also have an inertial moment given by $J_{\zeta 1}$ and $J_{\zeta 2}$. The authors are currently investigating the material and structural properties of the blade segments. At this time, reasonable assumptions have been made for these values, based on the required performance. Having these values will also allow us to simulate the system response to disturbances caused by aerodynamic forces and vibration.

### E.3.5.3 TWIST ANGLE DISTRIBUTION CONTROL

Supervisory control establishes that the system is operating in Region 2. The controller then defines the TAD for each blade section through a lookup table. The position is held through a PD controller that works at the actuator level. The flexible section is a nonlinear system that is controlled through a set of parameters shown in Fig. 23.

The dynamics of the system have state equations of the form,

$$\dot{x} = f(x, u, w) \quad \text{(E.19)}$$

The state variables, x, are taken from the dynamic blade model,

$$x = \left[\varphi_{\zeta 1}, \dot{\varphi}_{\zeta 1}, \ddot{\varphi}_{\zeta 1}, \varphi_{\zeta 2}, \dot{\varphi}_{\zeta 2}, \ddot{\varphi}_{\zeta 2}\right] \quad \text{(E.20)}$$

Control is applied through the parameter, u, and responds to the disturbance, w, which represents the wind speed.

$$u = \left[T_{\zeta 1}, T_{\zeta 2}\right] \quad \text{(E.21)}$$

$$w = v_w \quad \text{(E.22)}$$

The system output includes sensed measurements, y, and performance metrics, z,

$$y = [\varphi_{\zeta 1}, \varphi_{\zeta 2}] \quad \text{(E.23)}$$

$$z = c_p, P_g \quad \text{(E.24)}$$

The state variables are also measured in this control framework. This ensures that the TAD position will be held during operation.

## E.4 RESULTS

The design and control technique for the flexible blade was demonstrated through a case study. Blade performance data was obtained from the NREL Unsteady Aerodynamics Phase VI experiment. The aerodynamic analysis combined the NREL Aerodyn software with a genetic algorithm to establish the TAD. This was done for a discrete set of wind speeds that ranged from cut-in to rated speed (Region 2). At each point, a genetic algorithm identified the TAD that maximized the power coefficient. Constrained optimization was subsequently used in the mechanical design. It established the actuator locations and stiffness ratios of the segments in each section. The design objective was to match the TAD curve found in the aerodynamic design. The performance of the TAD created by the mechanical design was compared to that of the aerodynamic design. The difference in efficiency was approximately 0.1%. The small amount of loss suggests that the mechanical design strategy was effective.

The actuators locations and relative stiffness values are given in Tables E.1 and E.2, respectively. The ratios that are closest to unity will have a twist distribution that is more linear between the respective actuators. Conversely, the ratios farthest from unity represent sections where the change in the twist angle is less linear. The mechanical design results for the TAD were used to find the best free shape for the blade. The selection procedure found that the free shape should be the same as the TAD that is used when the wind speed is near 9 m/s. For this TAD the maximum change in twist occurs in segment $S_{21}$. It only necessitates a range of ±1.96 degrees about the free-shape TAD. Recall that the pitch actuator is used for coarse positioning of the blade. Therefore, the blade deformation that tweaks the TAD only occurs with respect to the blade axis. This technique reduces the required amount of rotational deflection.

**Table 1. Optimal locations for actuators**

| Actuator points, $P$ | $P_1$ | $P_3$ | $P_5$ | $P_7$ | $P_9$ |
|---|---|---|---|---|---|
| Location, $r$ $[m]$ | 1.23 | 2.24 | 2.94 | 4.10 | 5.02 |

**Table 2. Optimal stiffness ratios**

| Section, $\zeta$ | 1 | 2 | 3 | 4 |
|---|---|---|---|---|
| Stiffness ratio, $R_k$ $\left[\frac{N/m}{N/m}\right]$ | 1.1 | 2 | 1.5 | 0.7 |

Figure 14 shows the selected TAD for various points of wind speed in Region 2. The values correspond to the TAD as measured with respect to the blade axis. Each TAD plot achieves the maximum aerodynamic efficiency for the given wind speed. In the plot, it is observable that the greatest amount of required variation occurs nearest the blade root. The amount of difference emphasizes the significance of the actively variable capability.

The performance of the original blade was also characterized. In this case, the power coefficient was maximized by adjusting the pitch angle. The results for the original blade are used to establish a baseline for the performance. Table E.3 compares the power coefficient, $c_{pc}$, and generated power, $P_{gC}$, of the controlled blade to the efficiency, $c_{po}$, and output $P_{go}$, of the original blade. Controlling the TAD provides the greatest benefits near cut-in and rated speeds, where the power coefficient increased by 3.83% and 3.27%, respectively. The amount of increase becomes less pronounced around a wind speed of 9 m/s. This is likely near the design speed of the original blade. It is reasonable to expect the TAD to already be optimal at this point. The AeroDyn computations also revealed that the flexible blade also has a lower cut-in and rated speed than that of the original blade. By actuating the blade, it is possible to reduce the cut-in speed from 13.5 to 13.2 m/s, while the rated speed drops from 5 to 4.9 m/s.

**Table 3. Maximum power coefficients and produced power for the original and modified TADs**

| $v_w$ [m/s] | | 5 | 6 | 7 | 8 | 9 | 10 | 11 | 12 | 13 |
|---|---|---|---|---|---|---|---|---|---|---|
| Original TAD | $c_{p_o}$ [-] | 0.447 | 0.484 | 0.435 | 0.370 | 0.314 | 0.268 | 0.231 | 0.200 | 0.174 |
| | $P_{g_o}$ $[kW]$ | 2.77 | 5.17 | 7.39 | 9.38 | 11.33 | 13.27 | 15.22 | 17.11 | 18.92 |
| Modified TAD | $c_{p_c}$ [-] | 0.464 | 0.489 | 0.440 | 0.377 | 0.315 | 0.270 | 0.233 | 0.204 | 0.180 |
| | $P_{g_c}$ $[kW]$ | 2.87 | 5.23 | 7.47 | 9.55 | 11.37 | 13.36 | 15.35 | 17.45 | 19.57 |
| Increase [%] | | 3.83 | 1.05 | 1.13 | 1.76 | 0.13 | 0.63 | 1.08 | 1.90 | 3.27 |

## E.5 CONCLUSION

A methodology was presented for designing and controlling a flexible blade with an actively variable twist angle. This enables the blade twist angle to be positioned to increase the aerodynamic efficiency in Region 2. The design concept is based on the use of flexible blade sections which are deformed by actuators on each end. The design procedure finds the optimum TAD through a genetic algorithm that evaluates performance data obtained from the NREL Aerodyne software. Design optimization is then employed to set the actuator locations and stiffness ratios. It establishes the mechanical means that is necessary to create the TAD in the application. A case study was performed using Aerodyne with data acquired from the NREL *Unsteady Aerodynamics Phase VI* experimental wind turbine. The performance of the proposed blade design was compared to that of a conventional blade with pitch adjustment. The results indicate that the flexible blade and associated design technique boosts the aerodynamic efficiency. The increase is most noticeable at the cut-in and rated speeds, where the power coefficient increased by 3.8% and 3.3%, respectively. The new design also enables a slight reduction in the wind speeds at which cut-in and full-power occur. This study is part of the authors' work towards a new class of modular wind turbine blades that utilizes AM technology. Other studies are investigating a modular design and design techniques to minimize the torsion-to-flexural stiffness of the associated materials.

## F. ONSITE ADDITIVE MANUFACTURING

Wind turbines are getting bigger and bigger to improve their efficiencies, however current design and manufacturing techniques and also infrastructure do not facilitate implementation of bigger turbines. The transportation of blades is a major barrier to the continued increase in turbine size. Hence, companies have started to look to modular designs which can be manufactured in sections and assembled on-site. Some researchers have posited manufacturing blades on-site. However, current techniques for on-site manufacture of blades is not economical. As such, there is a need for techniques to enable the use of large turbines requiring blades that are too large to transport as such.

In another aspect, the present disclosure provides a method for on-site blade fabrication using additive manufacturing. This emerging technology removes the need for bulky and expensive molds, and reduces the costs of on-site manufacturing. Another advantage of the present technique is the ability to create complex internal geometries which are not possible using current manufacturing schemes. This allows the designer to take advantage of optimum geometries within the blade to reduce weight or reach specific structural properties (e.g., stiffness, etc.) Implementation of topology optimization in blade design is a good example. Some researchers have already worked on the topology optimization, however they have not implemented it in the blade manufacturing. Introduction of additive manufacturing provides this chance in blade design and fabrication.

The present method takes advantage of the wind turbine foundation and tower in the blade manufacturing process. The wind turbine tower is utilized as a base for a 3D printer, which is configured to climb up and down the tower in fabricating the blade. In the present method, the wind turbine foundation, tower, and nacelle are established/installed, in the typical fashion. The method may include mounting a 3D printer to the wind turbine tower. The 3D printer is mounted such that a print head is able to move along a length of the tower. For example, the print head may be mounted on the tower using linear bearings that are assembled on the tower. The 3D printer may have one or more print heads. Each print head may be independently movable or one or more print heads may move together. The printer could use contact with tower to get the required force for upward/downward motion. Moreover this data could be used in printer location monitoring. The printer machine could also use a linear gear installed on the tower for motion. The position of a print head could be controlled relative to the tower and nacelle in different ways such as relative measurements conducted in the tower and nacelle local coordinate system.

The positional accuracy of the print head(s) may be affected by factors such as deformation in the tower (resulting from, for example, wind, ground tremor/settling, weight of the blade and/or other components, etc.) Such errors may be reduced by localizing the print head position using wireless measuring tools. For example, the measurement by laser installed around the turbine. In another example, a high-precision GPS system may be used (e.g., dual-frequency GPS, RTK GP, such as, for example, NetSurv G6 https://www.hitachizosen.co.jp/english/products/products050.html, https://www.gps.gov/systems/gps/performance/accuracy/). In another example, the tower deformation resulting from blade weight may be determined analytically (computationally) and/or measured (for example, using strain gauges). The 3D print head, accordingly, may be adjusted based on the determined and/or measured tower deformation. In this way, the present blade fabrication method is able to reach appropriate manufacturing tolerances for such wind turbine blades.

In some embodiments, the blade is printed in a downward direction from a superior initial position. In such downward printing embodiments, the print head begins from a location near the nacelle and moves downward (see Fig. 49). The blade is printed starting from the root towards the tip. The connection type of the blade to the low speed shaft depends on the design requirements. In some embodiments, the blade is manufactured starting from its hub. In such embodiments, the blade is connected to the hub as it is printed and may be supported (e.g., suspended) by the hub during blade fabrication. In other embodiments, the blade is printed and the subsequently attached to the hub. In such detached embodiments, one or more fixtures are provided to support the blade during fabrication until the blade can be connected to/assembled with the hub. For example, such fixtures may be connected to the tower.

In some embodiments, the blade is printed in an upward direction from an inferior (i.e., low) initial position. In such upward printing embodiments (Fig. 50), the printer begins from a location near the ground and the blade is printed upwards from its tip (i.e., from the tip towards the root). In such embodiments, there is may be need for some provisions to keep the blade suspended until it is connected/assembled to the hub. This could be a mobile foundation used for all blades to set beneath the tip and some other fixtures that are connected to the tower and keep blade suspended.

Although the present disclosure has been described with respect to one or more particular embodiments, it will be understood that other embodiments of the present disclosure may be made without departing from the scope of the present disclosure.

## Claims

1. A blade (100) for a wind turbine, the blade comprising:

    a spar (110) having a blade axis extending from a root end (112) to a tip end (114); and
    a blade body (120) arranged around the spar and having a body section (130), the body section spanning a length along the blade axis between two boundary ends (133, 134), wherein each boundary end is configured to engage a corresponding actuator, the body section comprising:

        a first segment (131) extending along at least a first portion of the length, the first segment having a first stiffness; and
        a second segment (132) attached to the first segment and extending along a second portion of the length, the second segment having a second stiffness.

2. The blade of claim 1, further comprising two boundary actuators, each engaging a corresponding boundary end of the body section and configured to selectively twist the body section about the blade axis when actuated.

3. The blade of claim 2, wherein at least one boundary end of the body section further comprises a rigid rib (135) attached to the corresponding boundary actuator.

4. The blade of claim 1, wherein the blade body has at least two body sections and each boundary end of each body section is configured to engage a boundary actuator.

5. The blade of claim 4, wherein adjacent boundary ends of adjacent body sections are attached to a common boundary actuator.

6. The blade of claim 1, further comprising a deformable skin (180) covering the body section.

7. The blade of claim 1, further comprising a pitch actuator attached to the spar and configured to rotate the blade.

8. The blade of claim 1, wherein the body section is made from carbon-reinforced nylon.

9. The blade of claim 1, wherein the spar is rigid.

10. The blade of claim 1, wherein the length, first stiffness, and second stiffness of the body section are optimized for maximum efficiency during Region 2 operation.

11. The blade of claim 10, wherein the boundary actuators are configured to twist the blade into an optimized shape.

12. A method of using a wind turbine, comprising:

    providing a wind turbine having at least one blade (100) as claimed in any one of claims 1-11; and
    operating a boundary actuator in the at least one blade to twist the body section(s) of the blade.

13. The method of claim 12, wherein the wind turbine comprises three blades.

14. A method of making a blade (100) according to any of claims 1 to 11, comprising:

    providing one or more 3D print heads movably mounted to a tower for a wind turbine;
    operating the one or more print heads to deposit a print medium;
    moving the one or more print heads along a length of the tower such that the print medium is deposited to form the blade.

15. The method of claim 14, further comprising determining a position of the one or more print heads in a coordinate system independent from the tower to correct for error.

## Patentansprüche

1. Blatt (100) für eine Windturbine, wobei das Blatt umfasst:

   einen Holm (110), aufweisend eine Blattachse, der sich von einem Wurzelende (112) zu einem Spitzenende (114) erstreckt; und
   einen Blattkörper (120), der um den Holm eingerichtet ist und einen Körperteilabschnitt (130) aufweist, wobei der Körperteilabschnitt eine Länge entlang der Blattachse zwischen zwei Randenden (133, 134) überspannt, wobei jedes Randende dazu konfiguriert ist, einen entsprechenden Aktuator in Eingriff zu nehmen, wobei der Körperabschnitt umfasst:

      ein erstes Segment (131), das sich entlang mindestens eines ersten Abschnitts der Länge erstreckt, wobei das erste Segment eine erste Steifigkeit aufweist; und
      ein zweites Segment (132), das an dem ersten Segment angebracht ist und sich entlang eines zweiten Abschnitts der Länge erstreckt, wobei das zweite Segment eine zweite Steifigkeit aufweist.

2. Blatt nach Anspruch 1, ferner umfassend zwei Randaktuatoren, wobei jeder ein entsprechendes Randende des Körperteilabschnitts in Eingriff nimmt und dazu konfiguriert ist, den Körperteilabschnitt bei Betätigung selektiv um die Blattachse zu verdrehen.

3. Blatt nach Anspruch 2, wobei mindestens ein Randende des Körperteilabschnitts ferner eine steife Rippe (135) umfasst, die an dem entsprechenden Randaktuator angebracht ist.

4. Blatt nach Anspruch 1, wobei der Blattkörper mindestens zwei Körperteilabschnitte aufweist und jedes Randende jedes Körperteilabschnitts dazu konfiguriert ist, einen Randaktuator in Eingriff zu nehmen.

5. Blatt nach Anspruch 4, wobei benachbarte Randenden von benachbarten Körperteilabschnitten an einem gemeinsamen Randaktuator angebracht sind.

6. Blatt nach Anspruch 1, ferner umfassend eine verformbare Haut (180), die den Körperteilabschnitt bedeckt.

7. Blatt nach Anspruch 1, ferner umfassend einen Pitch-Aktuator, der an dem Holm angebracht ist und dazu konfiguriert ist, das Blatt zu drehen.

8. Blatt nach Anspruch 1, wobei der Körperteilabschnitt aus carbonverstärktem Nylon hergestellt ist.

9. Blatt nach Anspruch 1, wobei der Holm steif ist.

10. Blatt nach Anspruch 1, wobei die Länge, die erste Steifigkeit und die zweite Steifigkeit des Körperteilabschnitts für eine maximale Effizienz während eines Betriebs in Windzone 2 optimiert sind.

11. Blatt nach Anspruch 10, wobei die Randaktuatoren dazu konfiguriert sind, die Blatt in eine optimierte Form zu verdrehen.

12. Verfahren zur Verwendung einer Windturbine, umfassend:

   Bereitstellen einer Windturbine, aufweisend mindestens ein Blatt (100) nach einem der Ansprüche 1-11; und
   Betreiben eines Randaktuators in dem mindestens einem Blatt, um den bzw. die Körperteilabschnitte des Blatts zu verdrehen.

13. Verfahren nach Anspruch 12, wobei die Windturbine drei Blätter umfasst.

14. Verfahren zur Herstellung eines Blatts (100) nach einem der Ansprüche 1 bis 11, umfassend:

Bereitstellen eines oder mehrerer 3D-Druckköpfe, die beweglich an einem Turm für eine Windturbine montiert sind;
Betreiben des einen oder der mehreren Druckköpfe, um ein Druckmedium abzuscheiden;
Bewegen des einen oder der mehreren Druckköpfe entlang einer Länge des Turms, so dass das Druckmedium abgeschieden wird, um das Blatt zu bilden.

**15.** Verfahren nach Anspruch 14, ferner umfassend ein Bestimmen einer Position des einen oder der mehreren Druckköpfe in einem Koordinatensystem unabhängig von dem Turm, um Fehler zu korrigieren.

## Revendications

**1.** Pale(100) pour une turbine éolienne, la pale comprenant :

un longeron (110) ayant un axe de pale s'étendant d'une extrémité d'emplanture (112) à une extrémité de pointe (114) ; et
un corps de pale (120) agencé autour du longeron et ayant une section de corps (130), la section de corps s'étendant sur une longueur le long de l'axe de pale entre deux extrémités de délimitation (133, 134), dans laquelle chaque extrémité de délimitation est configurée pour entrer en prise avec un actionneur correspondant, la section de corps comprenant :

un premier segment (131) s'étendant le long d'au moins une première partie de la longueur, le premier segment ayant une première rigidité ; et
un deuxième segment (132) attaché au premier segment et s'étendant le long d'une deuxième partie de la longueur, le deuxième segment ayant une deuxième rigidité.

**2.** Pale selon la revendication 1, comprenant en outre deux actionneurs de délimitation, chacun en prise avec une extrémité de délimitation correspondante de la section de corps et configuré pour tordre sélectivement la section de corps autour de l'axe de pale lorsqu'il est actionné.

**3.** Pale selon la revendication 2, dans laquelle au moins une extrémité de délimitation de la section de corps comprend en outre une nervure rigide (135) attachée à l'actionneur de délimitation correspondant.

**4.** Pale selon la revendication 1, dans laquelle le corps de pale a au moins deux sections de corps et chaque extrémité de délimitation de chaque section de corps est configurée pour entrer en prise avec un actionneur de délimitation.

**5.** Pale selon la revendication 4, dans laquelle des extrémités de délimitation adjacentes de sections de corps adjacentes sont attachées à un actionneur de délimitation commun.

**6.** Pale selon la revendication 1, comprenant en outre une peau déformable (180) couvrant la section de corps.

**7.** Pale selon la revendication 1, comprenant en outre un actionneur de tangage attaché au longeron et configuré pour amener la pale à tourner.

**8.** Pale selon la revendication 1, dans laquelle la section de corps est fabriquée en nylon renforcé au carbone.

**9.** Pale selon la revendication 1, dans laquelle le longeron est rigide.

**10.** Pale selon la revendication 1, dans laquelle la longueur, la première rigidité, et la deuxième rigidité de la section de corps sont optimisées pour une efficacité maximale pendant le fonctionnement de la Région 2.

**11.** Pale selon la revendication 10, dans laquelle les actionneurs de délimitation sont configurés pour tordre la pale dans une forme optimale.

**12.** Procédé destiné à utiliser une turbine éolienne, comprenant :

la fourniture d'une turbine ayant au moins une pale (100) selon l'une quelconque des revendications 1 à 11 ;
et le fait de faire fonctionner un actionneur de délimitation dans l'au moins une pale pour tordre la ou les sections de corps de la pale.

**13.** Procédé selon la revendication 12, dans lequel la turbine éolienne comprend trois pales.

**14.** Procédé de fabrication d'une pale (100) selon l'une quelconque des revendications 1 à 11, comprenant :

la fourniture d'une ou de plusieurs têtes d'impression 3D montées de manière amovible sur une tour pour une turbine éolienne ;
le fait de faire fonctionner les une ou plusieurs têtes d'impression pour déposer un support d'impression ;
le déplacement des une ou plusieurs têtes d'impression le long d'une longueur de la tour de sorte que le support d'impression est déposé pour former la pale.

**15.** Procédé selon la revendication 14, comprenant en outre la détermination d'une position des une ou plusieurs têtes d'impression dans un système de coordonnées indépendant de la tour pour corriger une erreur.

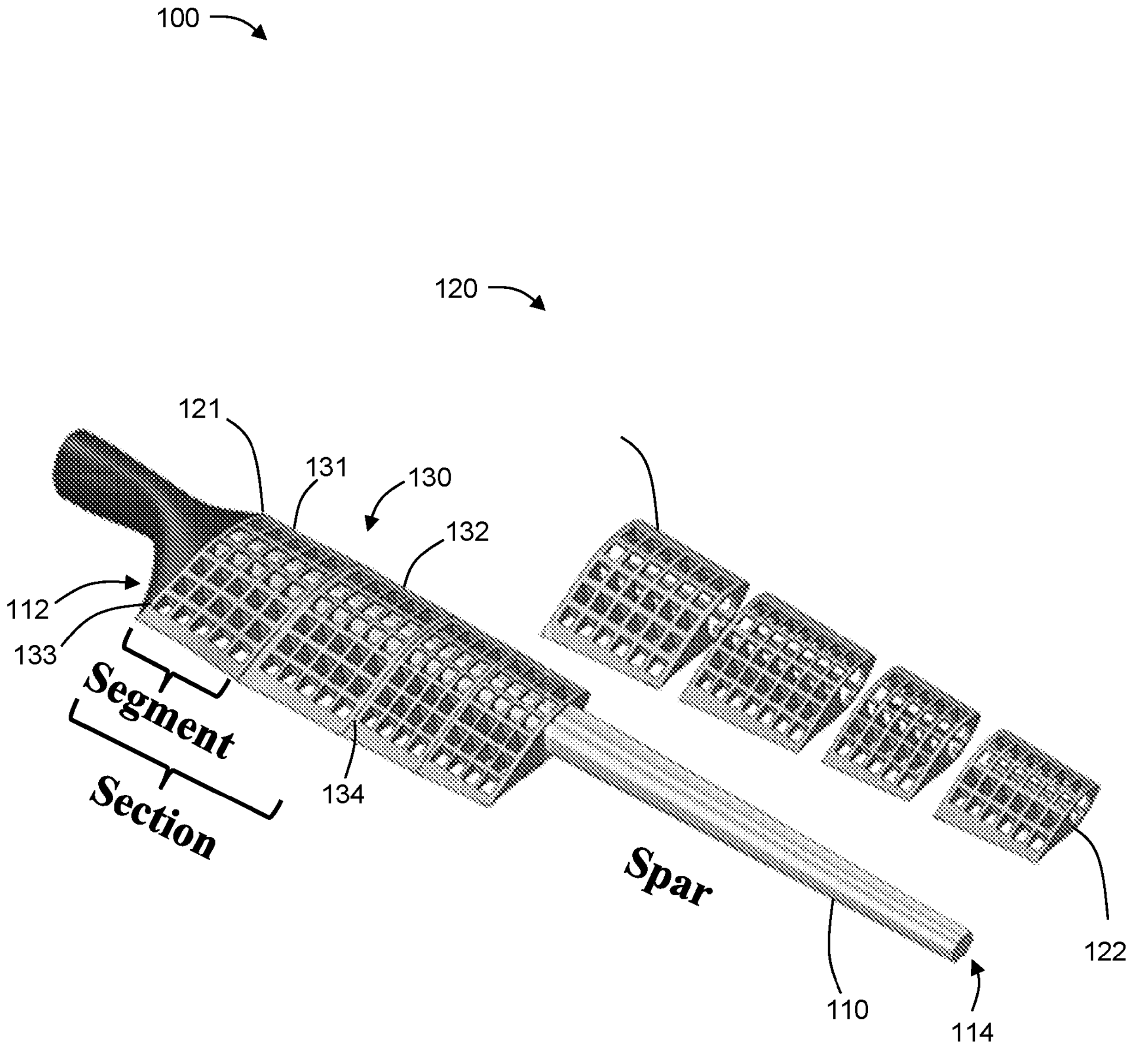
100
120
121
131
130
132
112
133
Segment
Section
134
Spar
110
114
122

Fig. 1

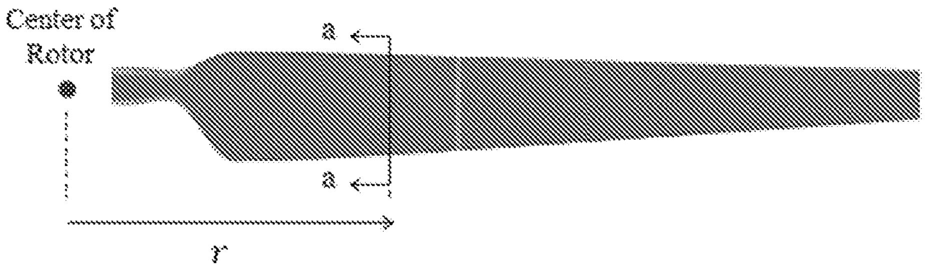
Center of
Rotor
a
a
r

Fig. 2

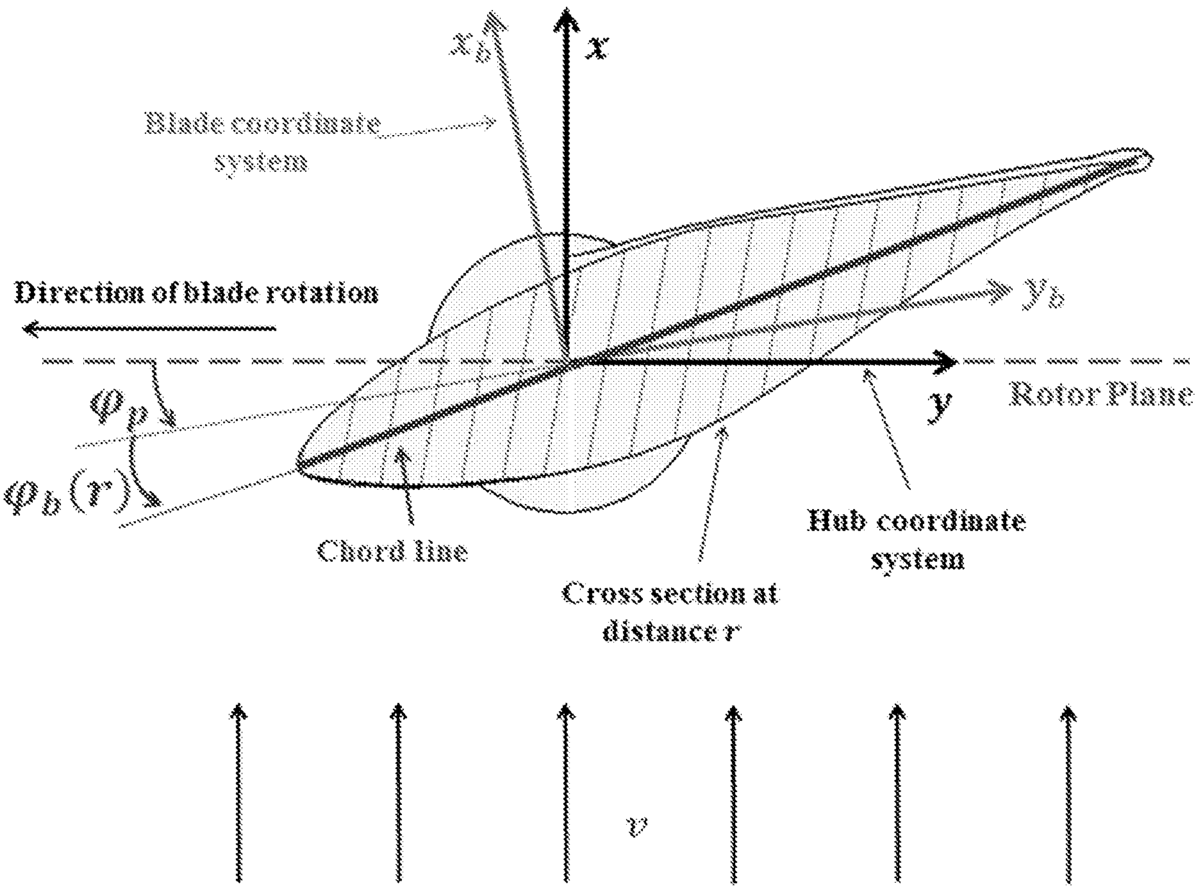
$x_b$
x
Blade coordinate
system
Direction of blade rotation
$y_b$
y
Rotor Plane
$\varphi_p$
$\varphi_b(r)$
Chord line
Hub coordinate
system
Cross section at
distance r
v

Fig. 3

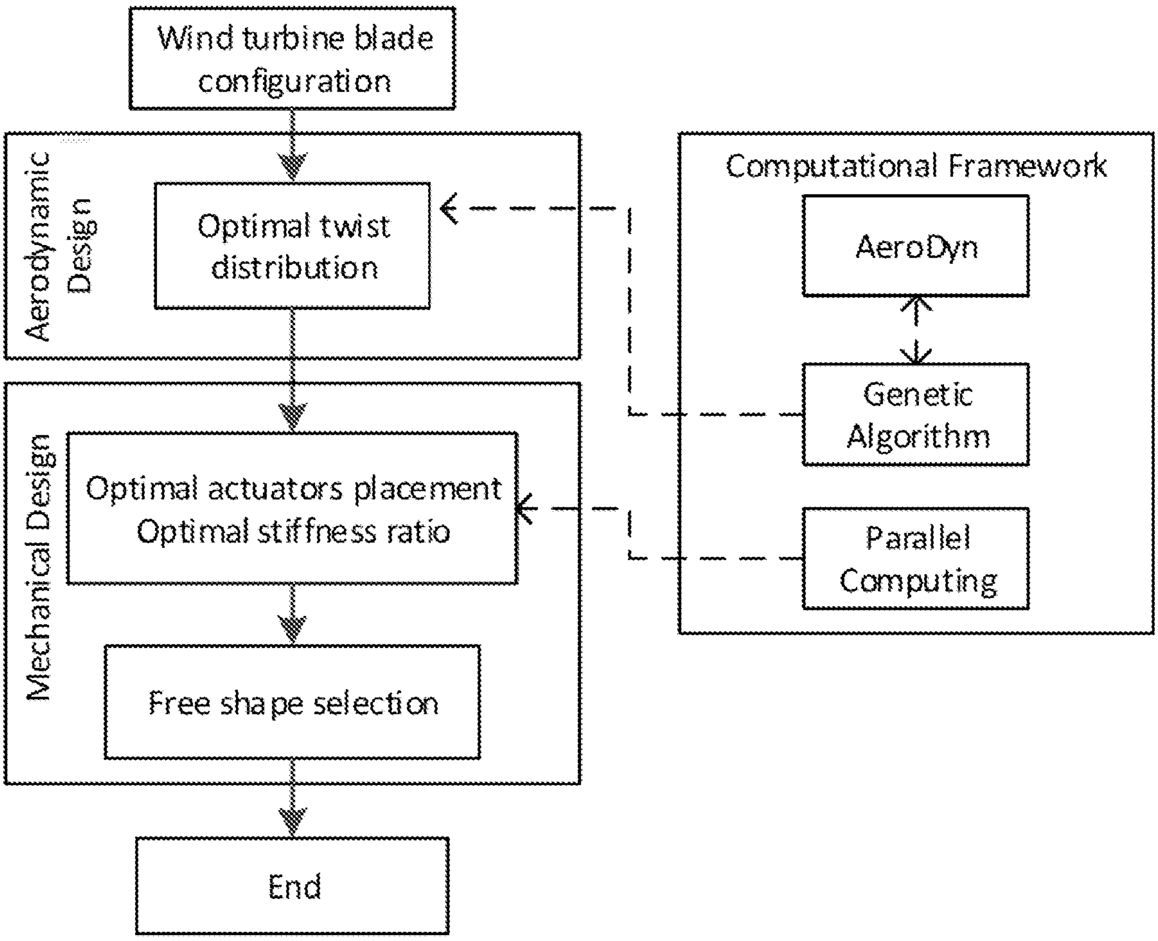
Wind turbine blade configuration
Aerodynamic Design
Optimal twist distribution
Mechanical Design
Optimal actuators placement
Optimal stiffness ratio
Free shape selection
End
Computational Framework
AeroDyn
Genetic Algorithm
Parallel Computing

Fig. 4

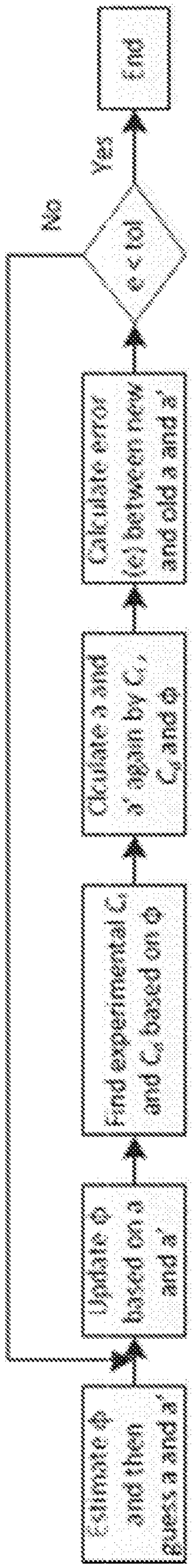
Estimate φ and then guess a and a'
Update φ based on a and a'
Find experimental $C_l$ and $C_d$ based on φ
Calculate a and a' again by $C_l$, $C_d$ and φ
Calculate error (e) between new and old a and a'
e < tol
No
Yes
End

Fig. 5

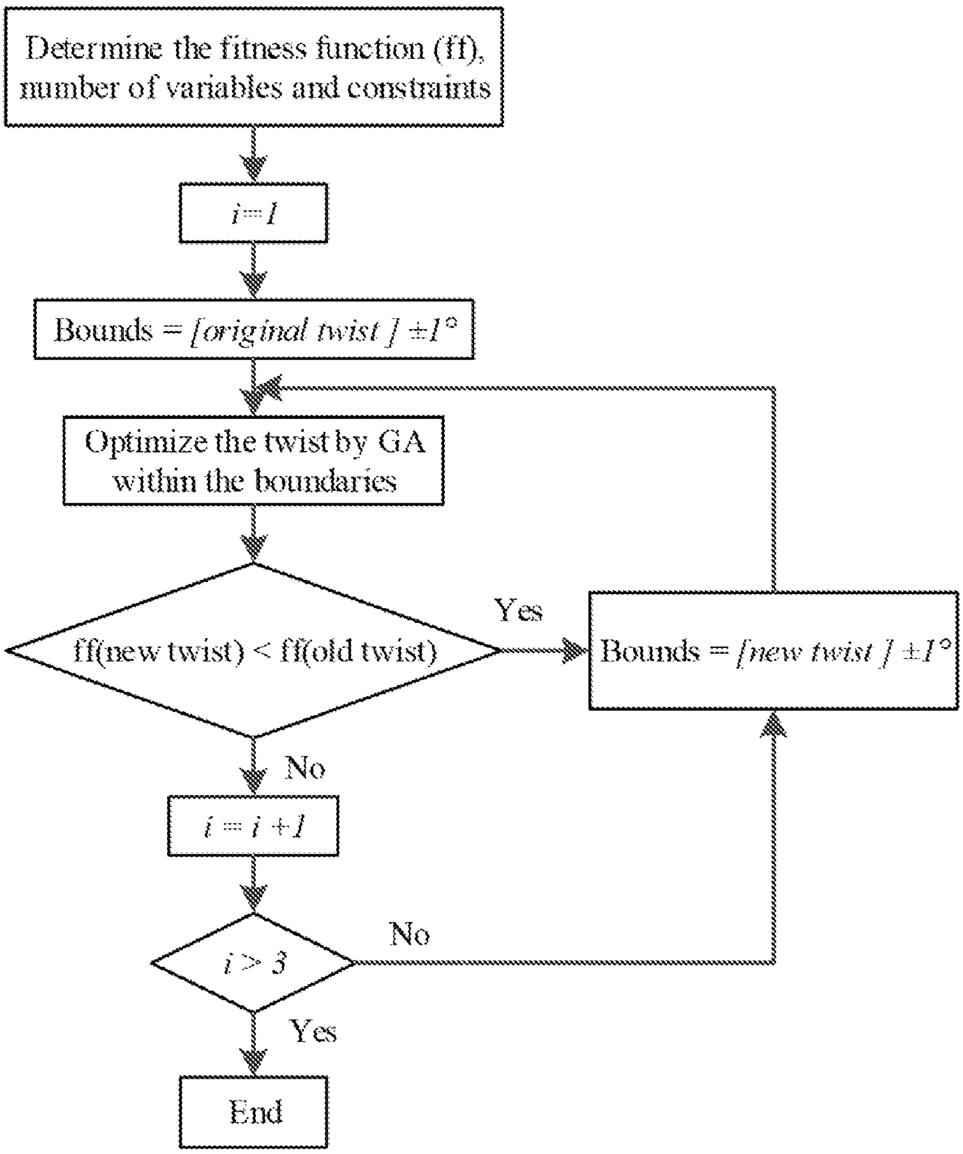
Determine the fitness function (ff), number of variables and constraints
i=1
Bounds = [original twist ] ±1°
Optimize the twist by GA within the boundaries
ff(new twist) < ff(old twist)
Yes
Bounds = [new twist ] ±1°
No
i = i +1
i > 3
No
Yes
End

Fig. 6

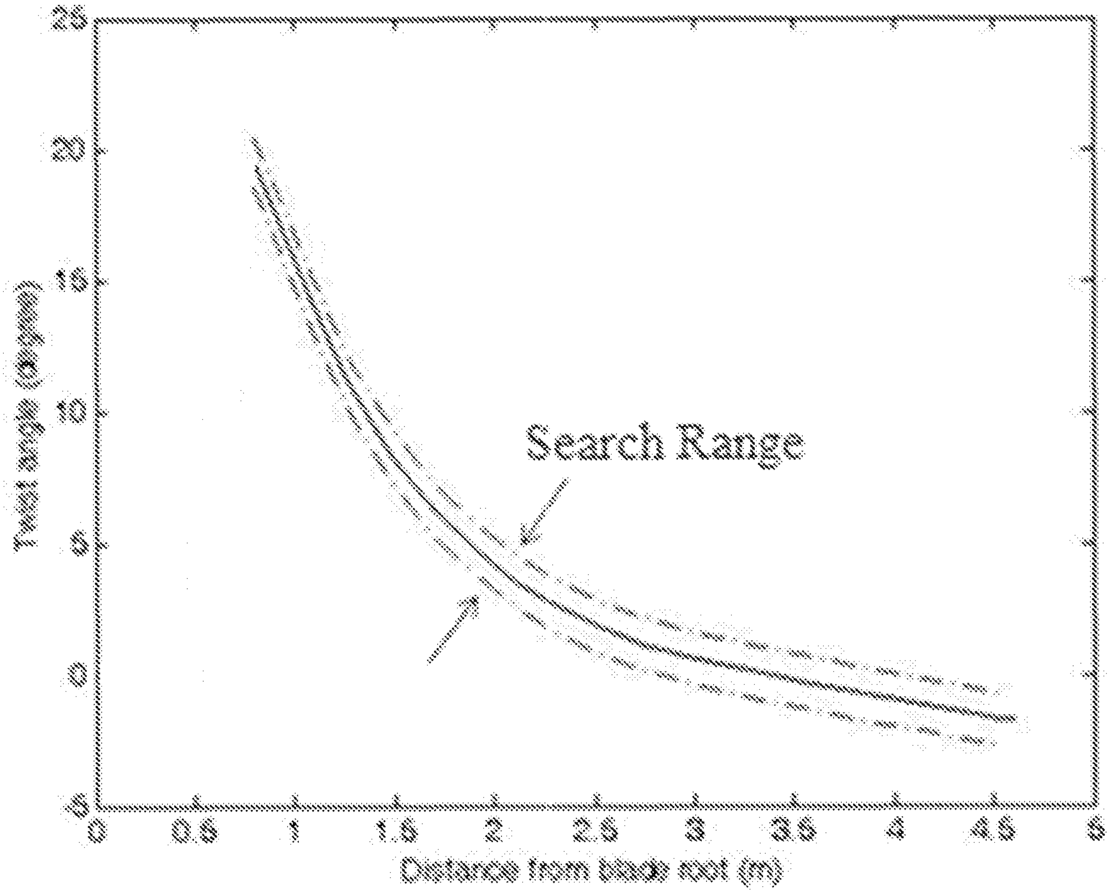
Search Range
Twist angle (degree)
Distance from blade root (m)
25
20
15
10
5
0
-5
0
0.5
1
1.5
2
2.5
3
3.5
4
4.5
5

Fig. 7

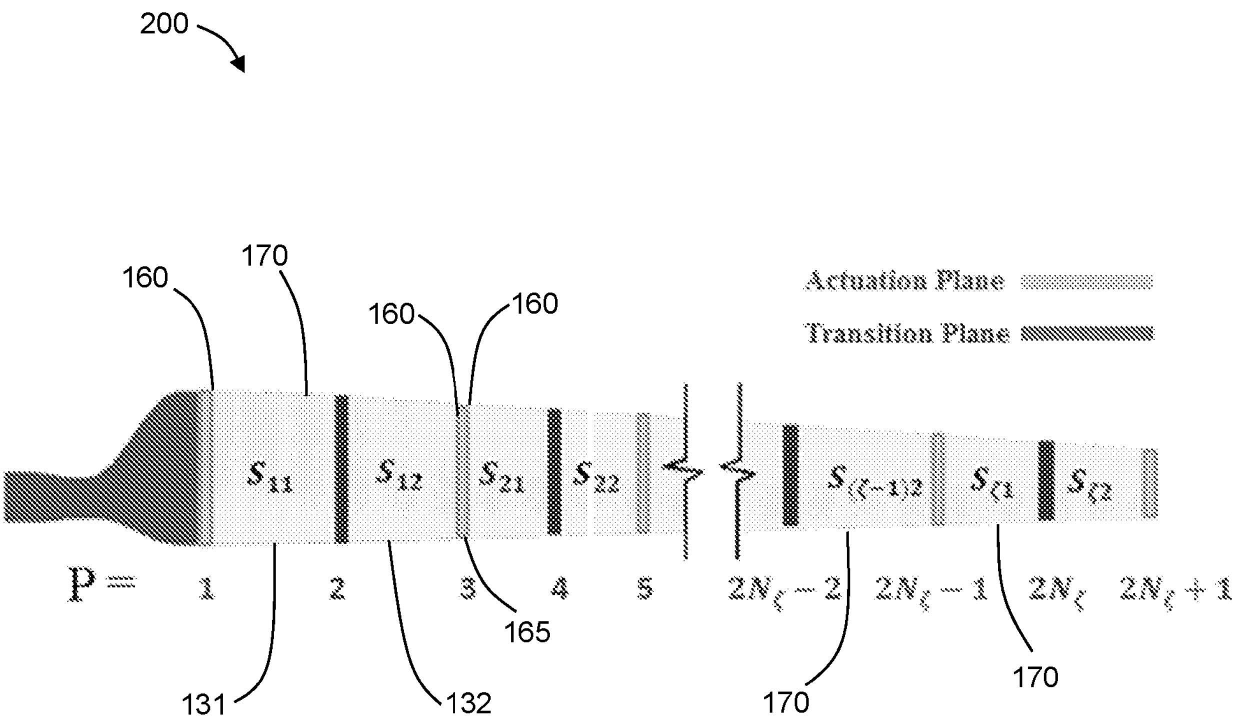
200
160
170
160
160
Actuation Plane
Transition Plane
$s_{11}$
$s_{12}$
$s_{21}$
$s_{22}$
$s_{(\zeta-1)2}$
$s_{\zeta 1}$
$s_{\zeta 2}$
P =
1
2
3
4
5
$2N_\zeta - 2$
$2N_\zeta - 1$
$2N_\zeta$
$2N_\zeta + 1$
165
131
132
170
170

Fig. 8

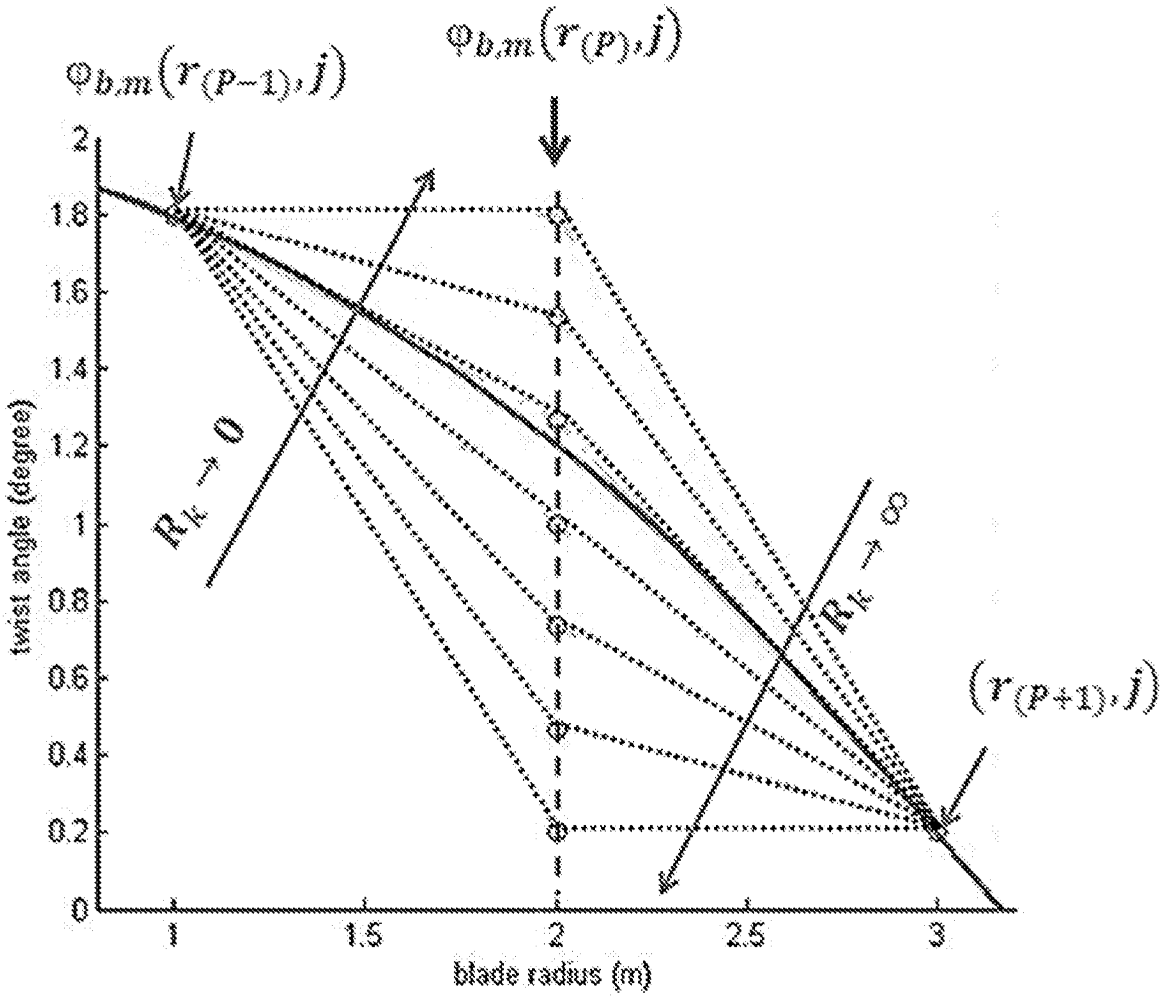
$\varphi_{b,m}(r_{(P-1)},j)$
$\varphi_{b,m}(r_{(P)},j)$
$(r_{(P+1)},j)$
$R_k \to 0$
$R_k \to \infty$
twist angle (degree)
blade radius (m)
0
0.2
0.4
0.6
0.8
1
1.2
1.4
1.6
1.8
2
1
1.5
2
2.5
3

Fig. 9

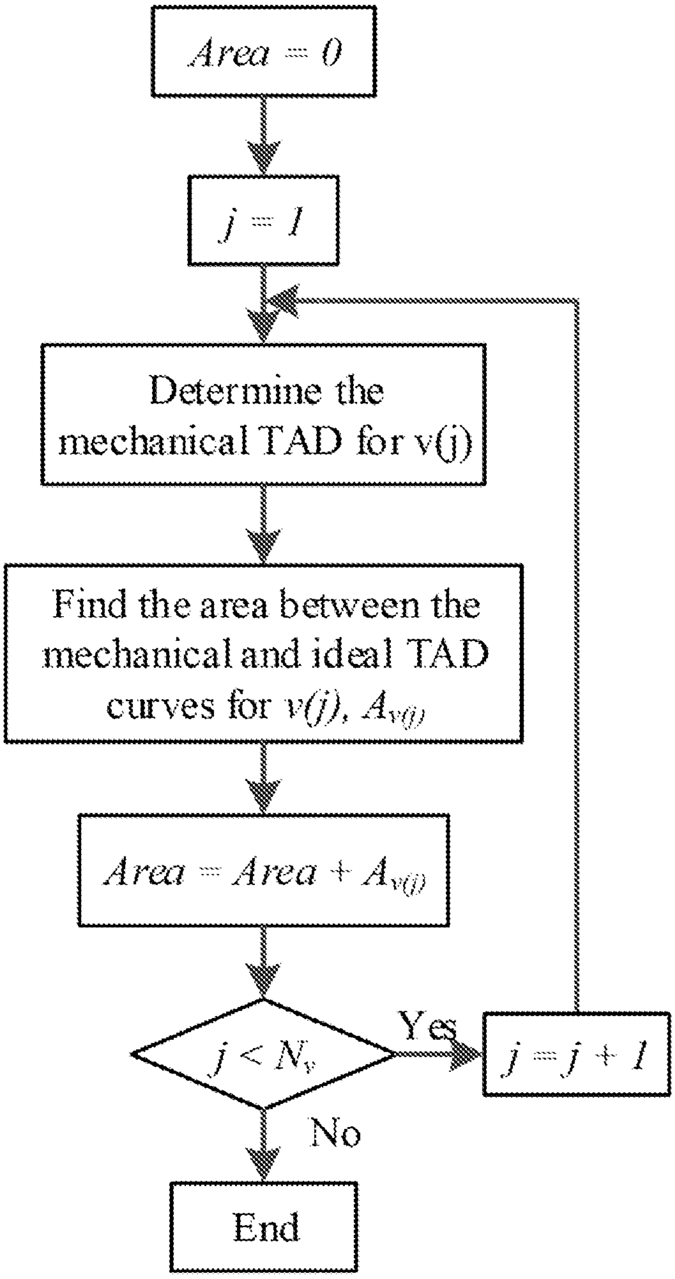

Area = 0
j = 1
Determine the mechanical TAD for v(j)
Find the area between the mechanical and ideal TAD curves for v(j), A_v(j)
Area = Area + A_v(j)
j < N_v
Yes
j = j + 1
No
End


Fig. 10

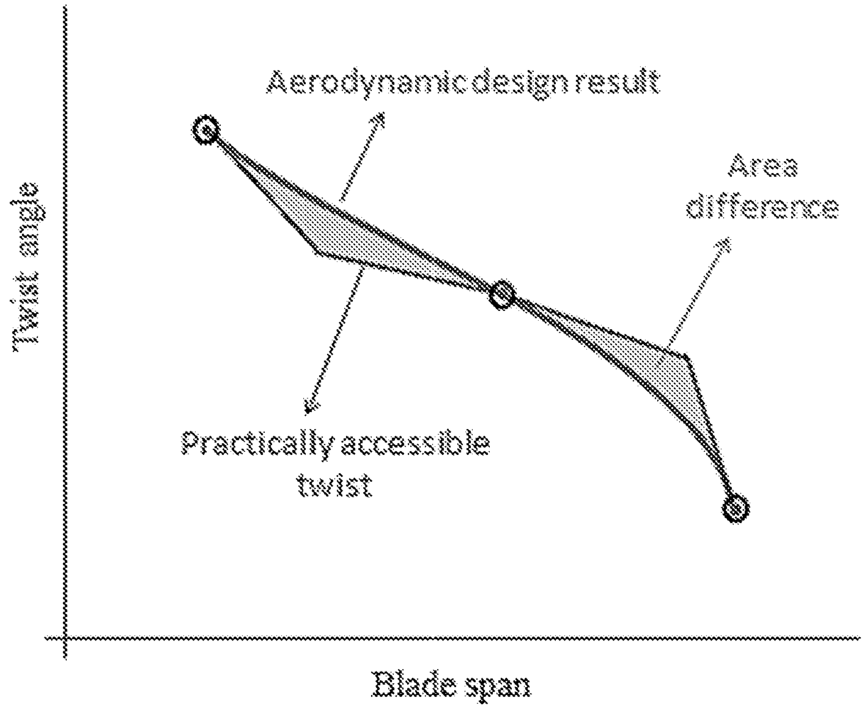
Aerodynamic design result
Area difference
Twist angle
Practically accessible twist
Blade span

Fig. 11

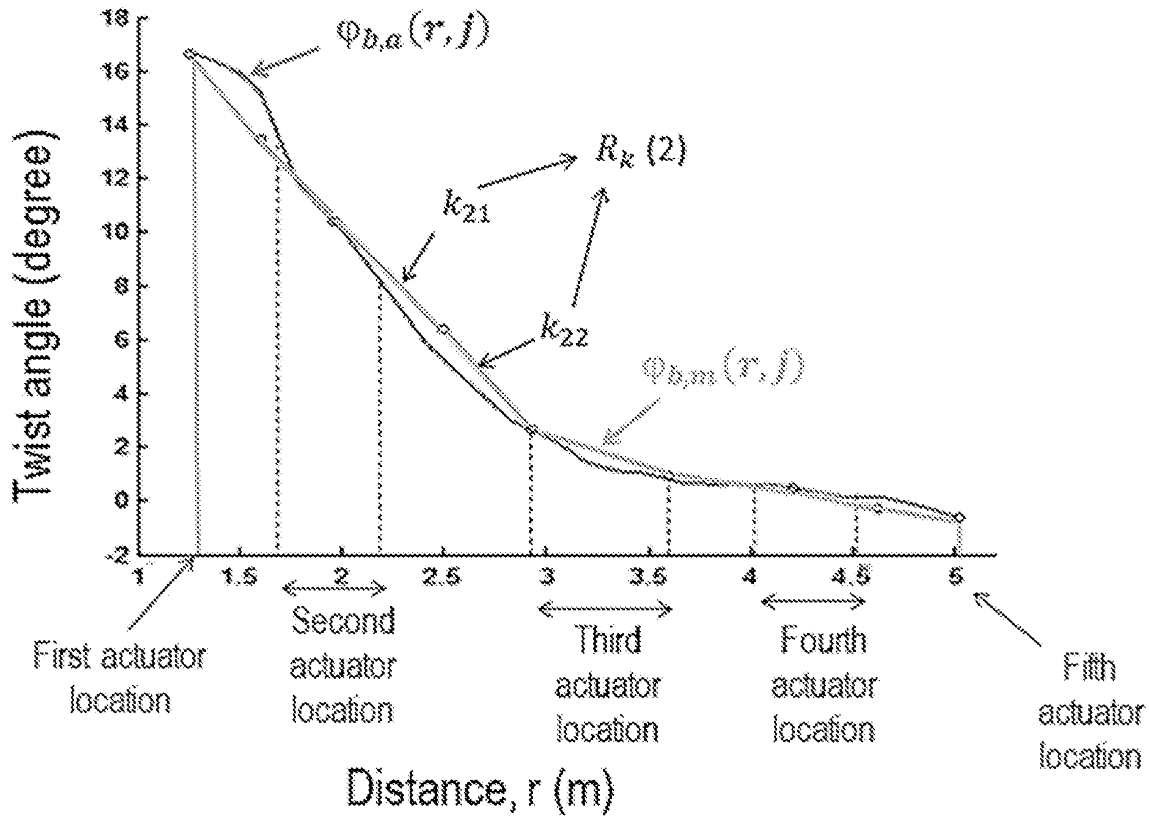
$\varphi_{b,a}(r,j)$
$R_k$ (2)
$k_{21}$
$k_{22}$
$\varphi_{b,m}(r,j)$
Twist angle (degree)
18
16
14
12
10
8
6
4
2
0
-2
1
1.5
2
2.5
3
3.5
4
4.5
5
First actuator location
Second actuator location
Third actuator location
Fourth actuator location
Fifth actuator location
Distance, r (m)

Fig. 12

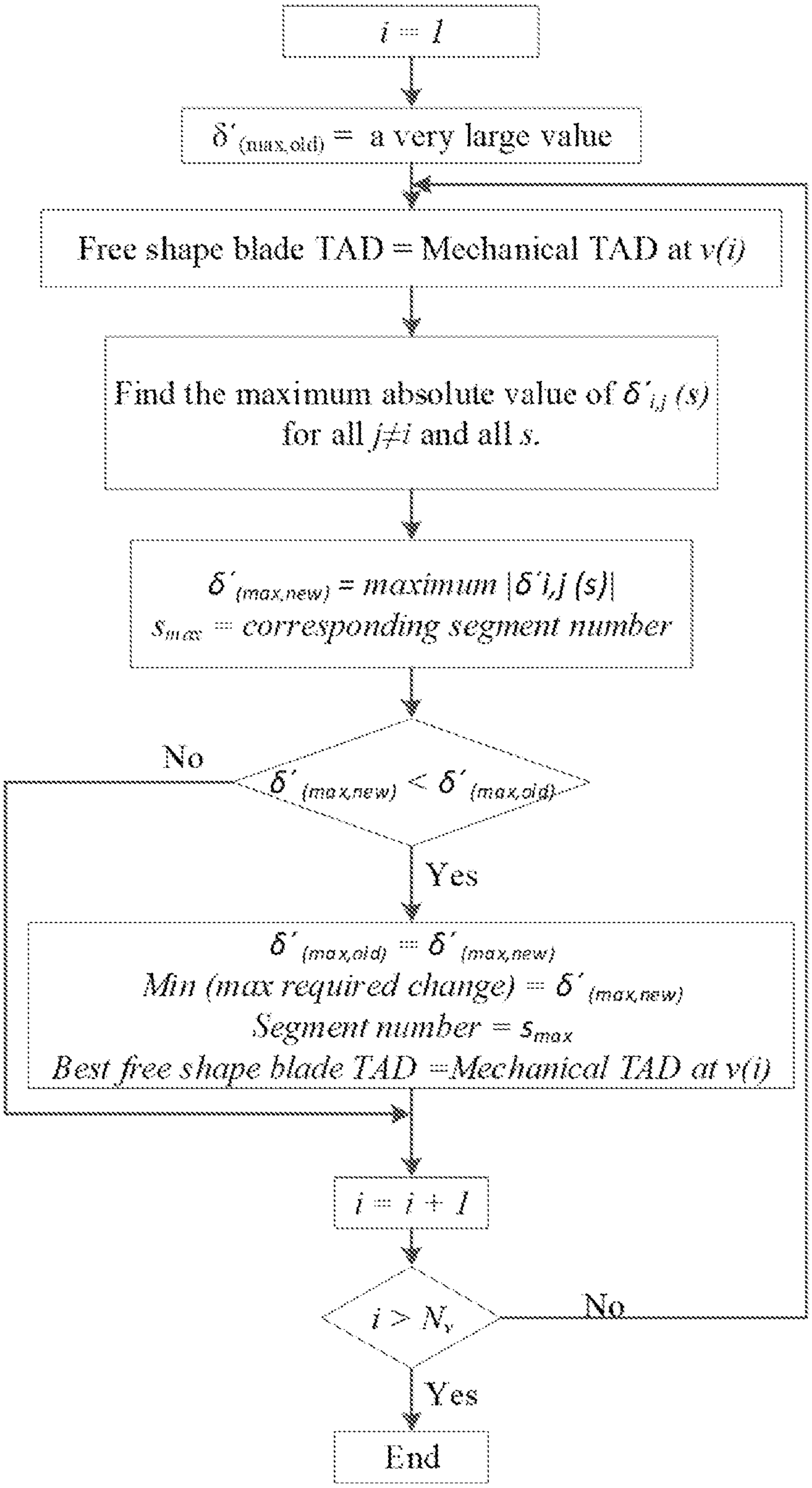
i = 1
δ′(max,old) = a very large value
Free shape blade TAD = Mechanical TAD at v(i)
Find the maximum absolute value of δ′i,j (s) for all j≠i and all s.
δ′(max,new) = maximum |δ′i,j (s)|
smax = corresponding segment number
δ′(max,new) < δ′(max,old)
No
Yes
δ′(max,old) = δ′(max,new)
Min (max required change) = δ′(max,new)
Segment number = smax
Best free shape blade TAD =Mechanical TAD at v(i)
i = i + 1
i > Nv
No
Yes
End

Fig. 13

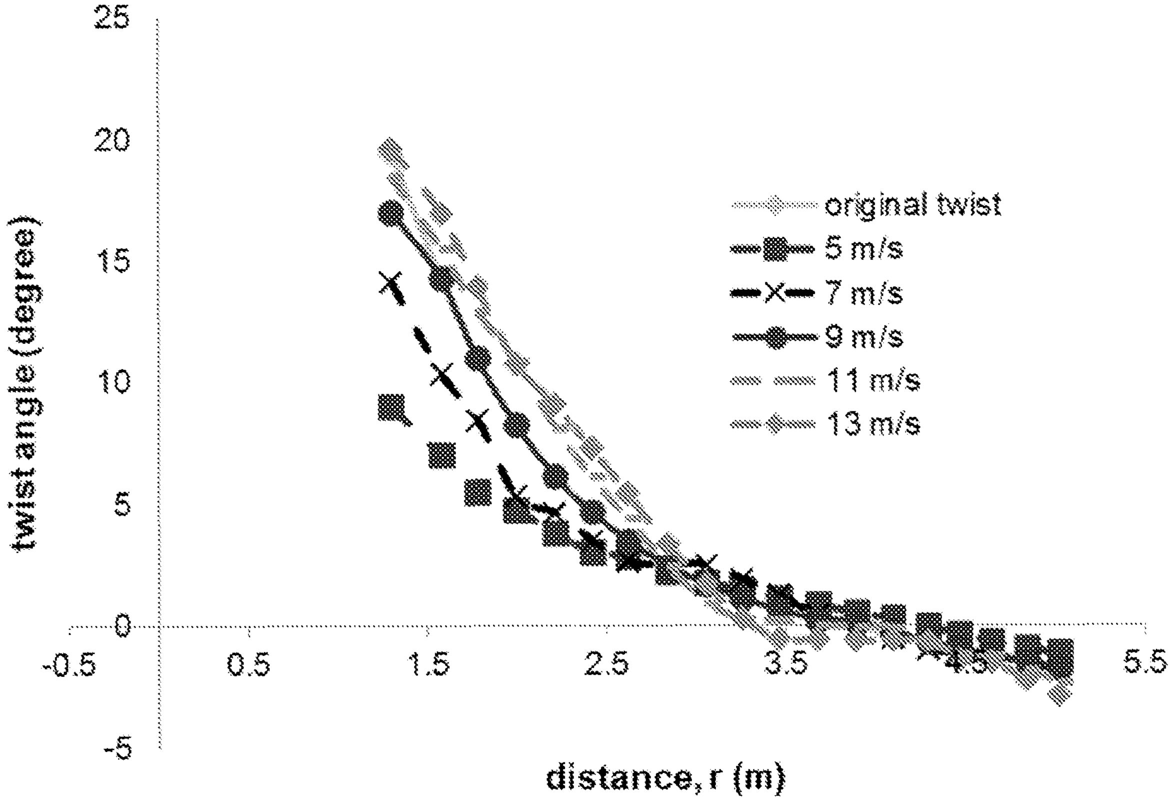
25
20
15
10
5
0
-5
-0.5
0.5
1.5
2.5
3.5
4.5
5.5
twist angle (degree)
distance, r (m)
original twist
5 m/s
7 m/s
9 m/s
11 m/s
13 m/s

Fig. 14

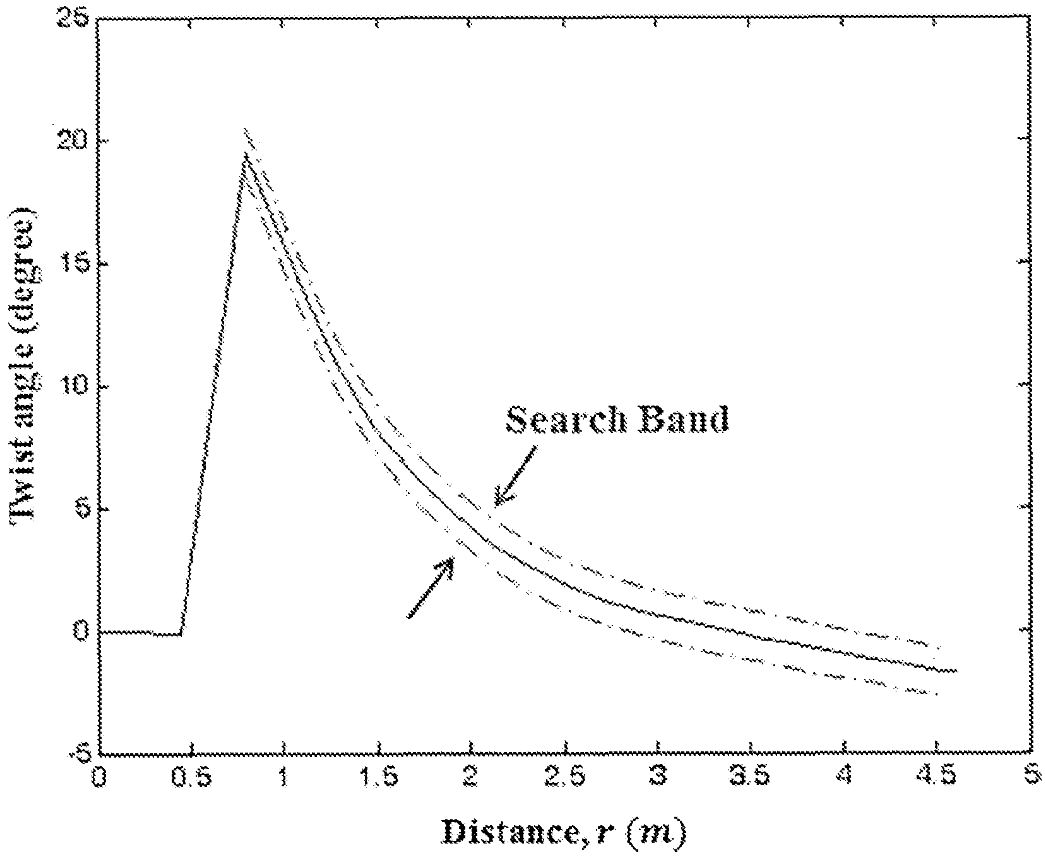
25
20
15
10
5
0
-5
0
0.5
1
1.5
2
2.5
3
3.5
4
4.5
5
Twist angle (degree)
Distance, r (m)
Search Band

Fig. 15

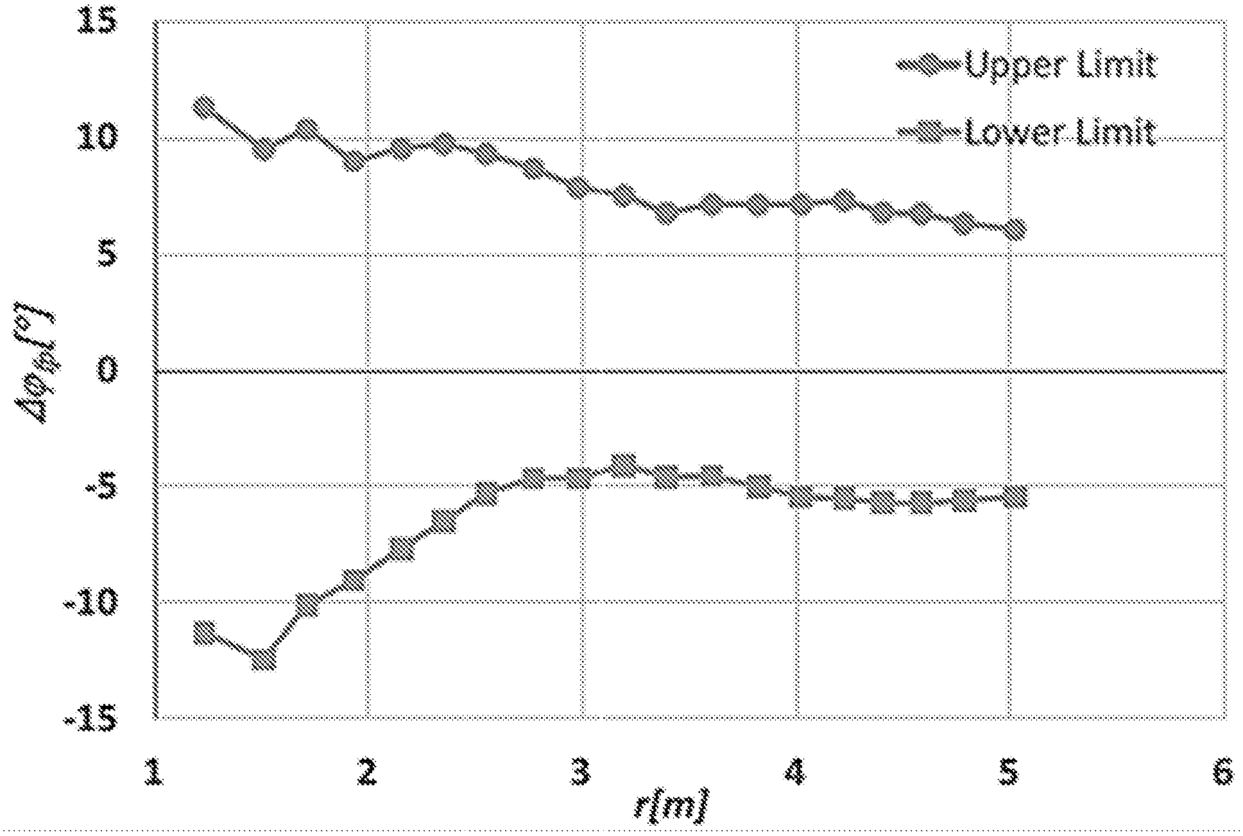
15
10
5
0
-5
-10
-15
1
2
3
4
5
6
$\Delta\varphi_{tp}[°]$
r[m]
Upper Limit
Lower Limit

Fig. 16

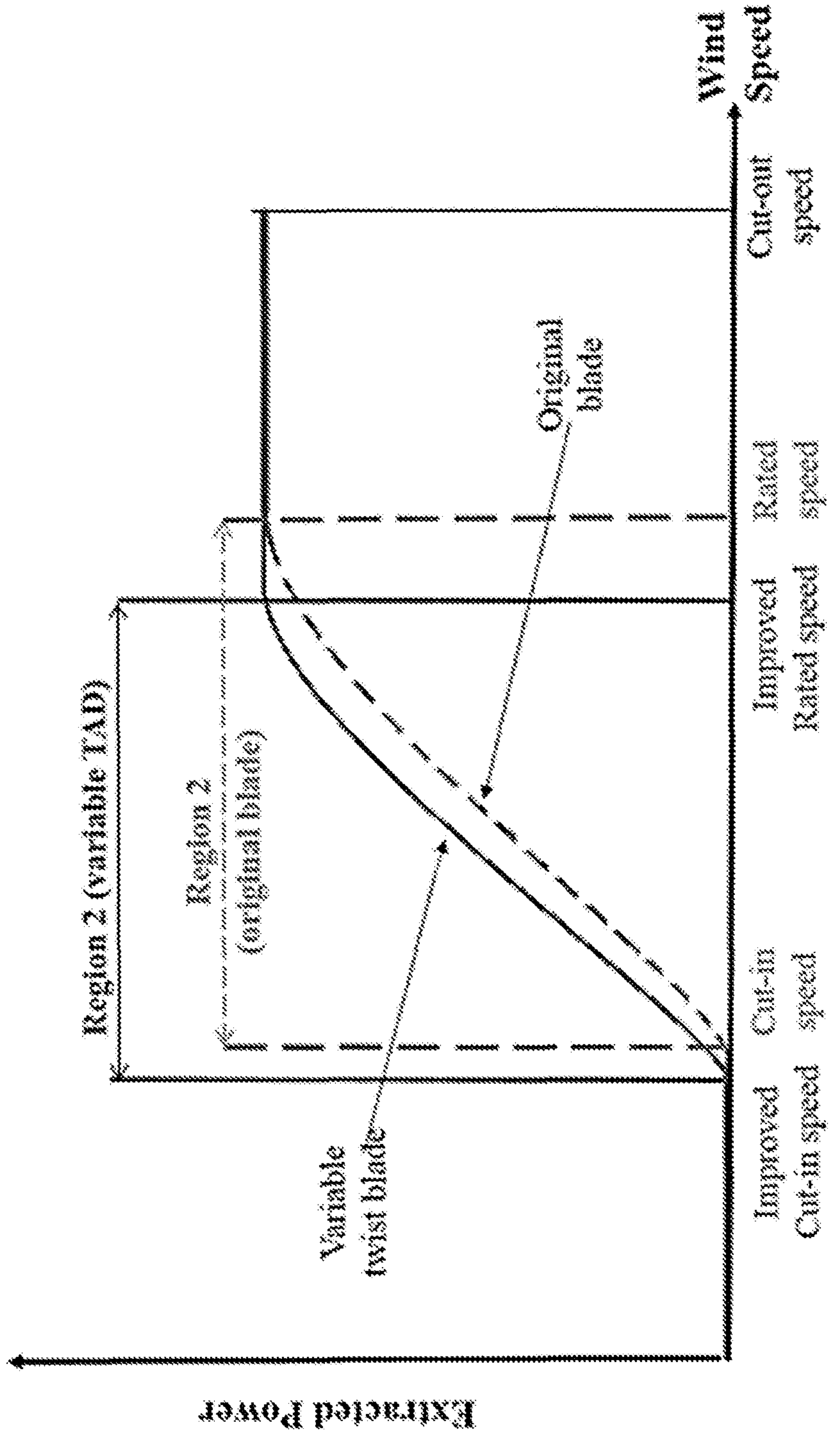
Extracted Power
Wind Speed
Region 2 (variable TAD)
Region 2 (original blade)
Original blade
Variable twist blade
Improved Cut-in speed
Cut-in speed
Improved Rated speed
Rated speed
Cut-out speed

Fig. 17

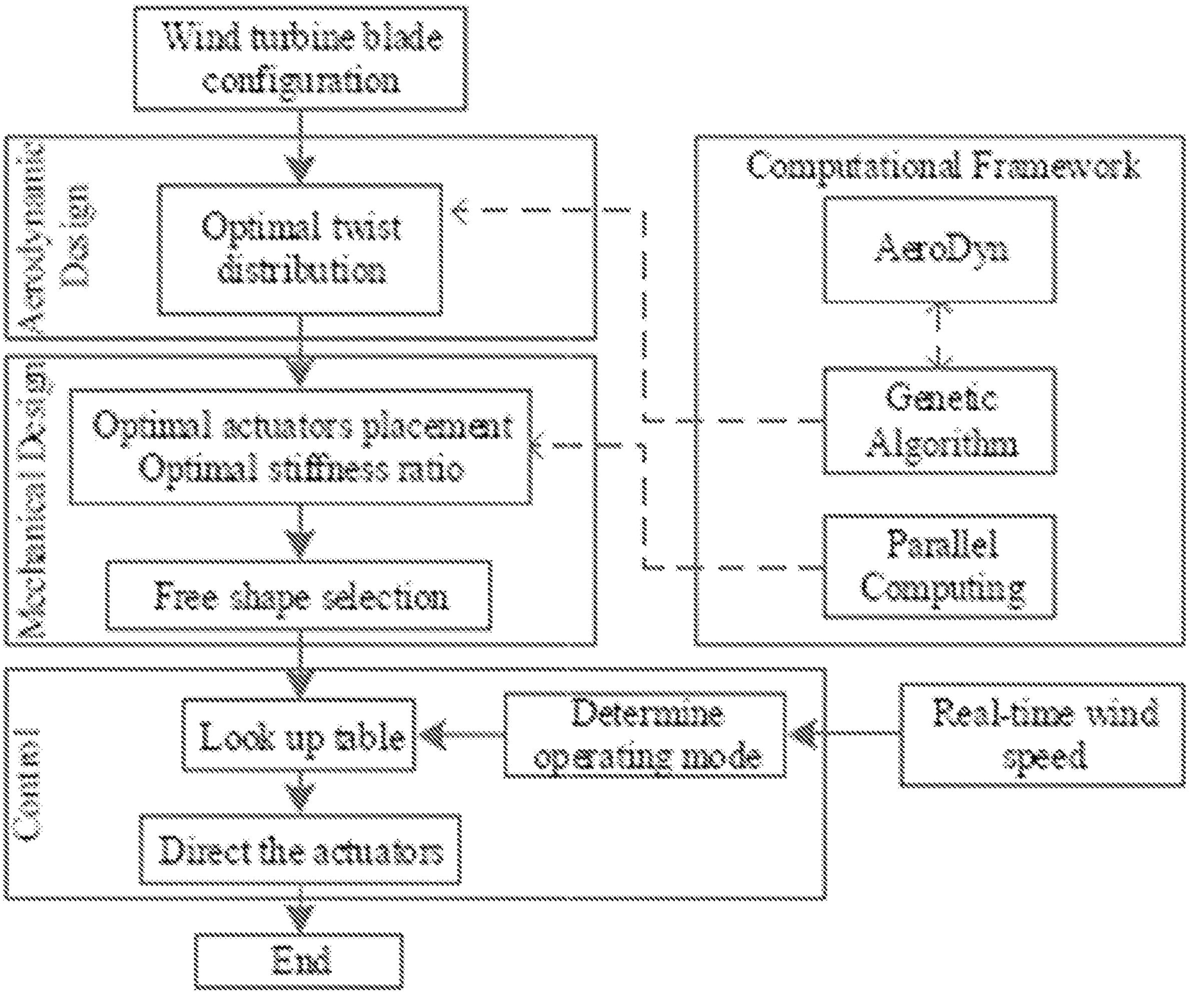
Wind turbine blade configuration
Aerodynamic Design
Optimal twist distribution
Mechanical Design
Optimal actuators placement
Optimal stiffness ratio
Free shape selection
Computational Framework
AeroDyn
Genetic Algorithm
Parallel Computing
Control
Look up table
Determine operating mode
Real-time wind speed
Direct the actuators
End

Fig. 18

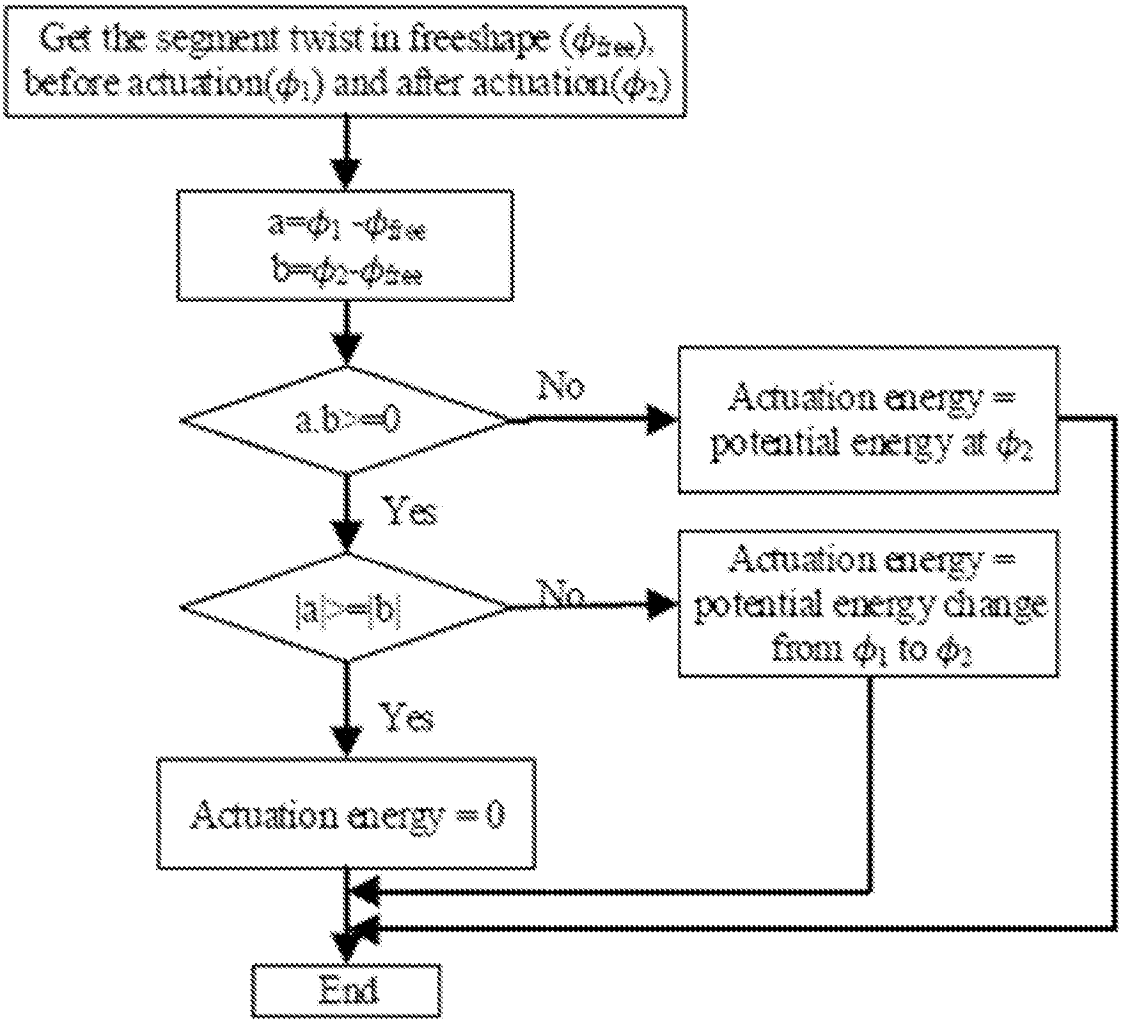
Get the segment twist in freeshape ($\phi_{free}$), before actuation($\phi_1$) and after actuation($\phi_2$)
a=$\phi_1$ -$\phi_{free}$
b=$\phi_2$-$\phi_{free}$
a.b>=0
No
Actuation energy = potential energy at $\phi_2$
Yes
|a|>=|b|
No
Actuation energy = potential energy change from $\phi_1$ to $\phi_2$
Yes
Actuation energy = 0
End

Fig. 19

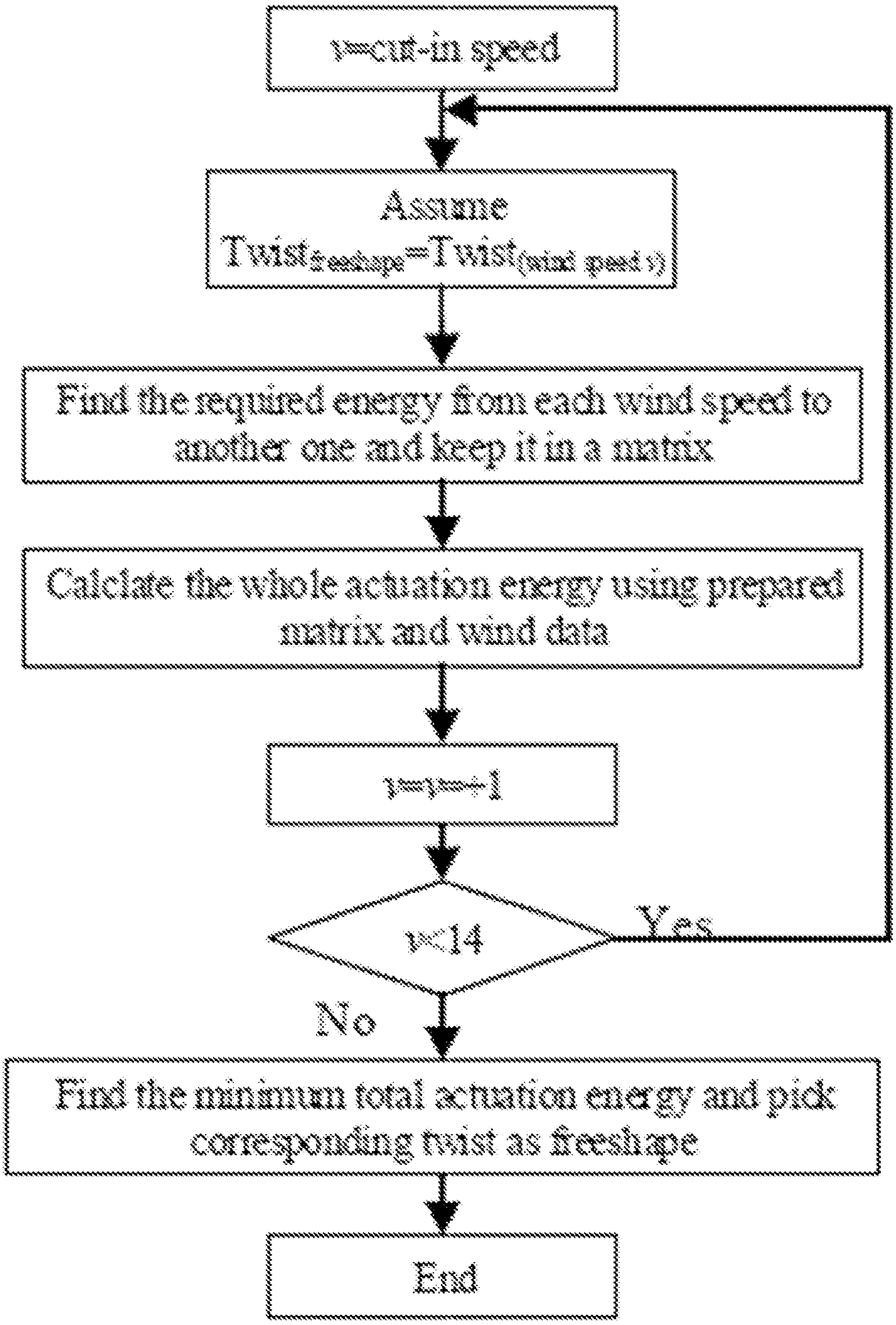
v=cut-in speed
Assume
Twist$_{freeshape}$=Twist$_{(wind\ speed\ v)}$
Find the required energy from each wind speed to another one and keep it in a matrix
Calclate the whole actuation energy using prepared matrix and wind data
v=v=+1
v<14
Yes
No
Find the minimum total actuation energy and pick corresponding twist as freeshape
End

Fig. 20

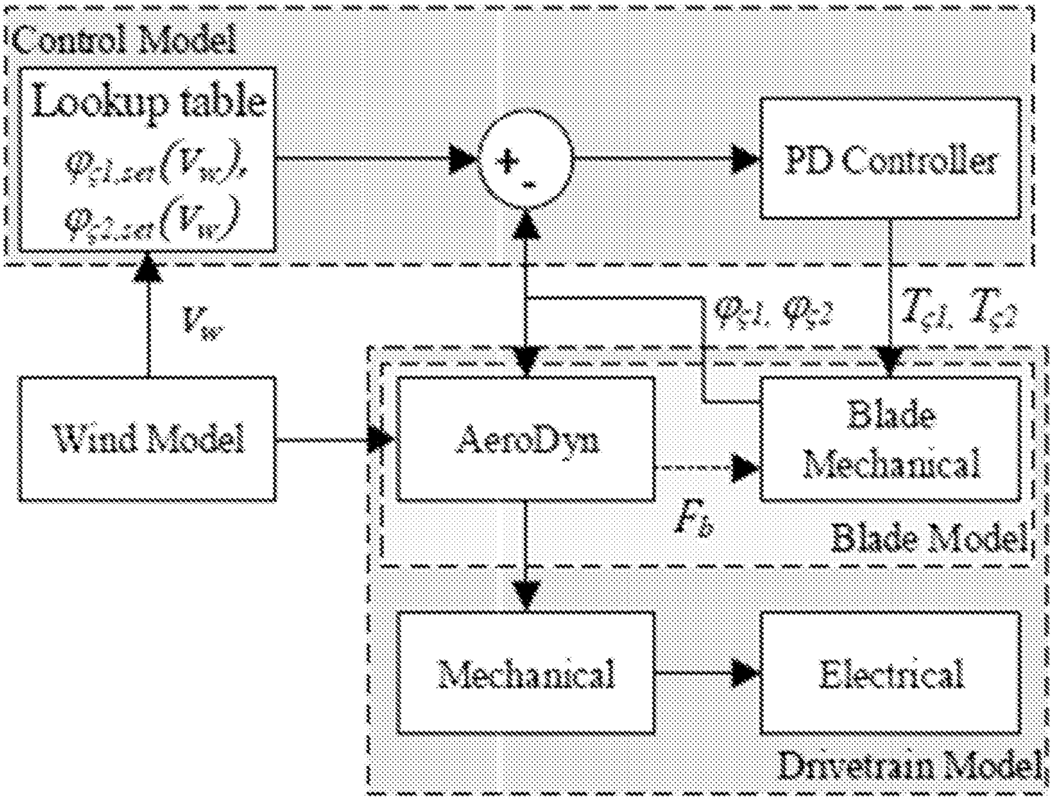
Control Model
Lookup table
$\varphi_{\zeta 1,set}(V_w)$,
$\varphi_{\zeta 2,set}(V_w)$
+
-
PD Controller
$V_w$
$\varphi_{\zeta 1}$, $\varphi_{\zeta 2}$
$T_{\zeta 1}$, $T_{\zeta 2}$
Wind Model
AeroDyn
Blade
Mechanical
$F_b$
Blade Model
Mechanical
Electrical
Drivetrain Model

Fig. 21

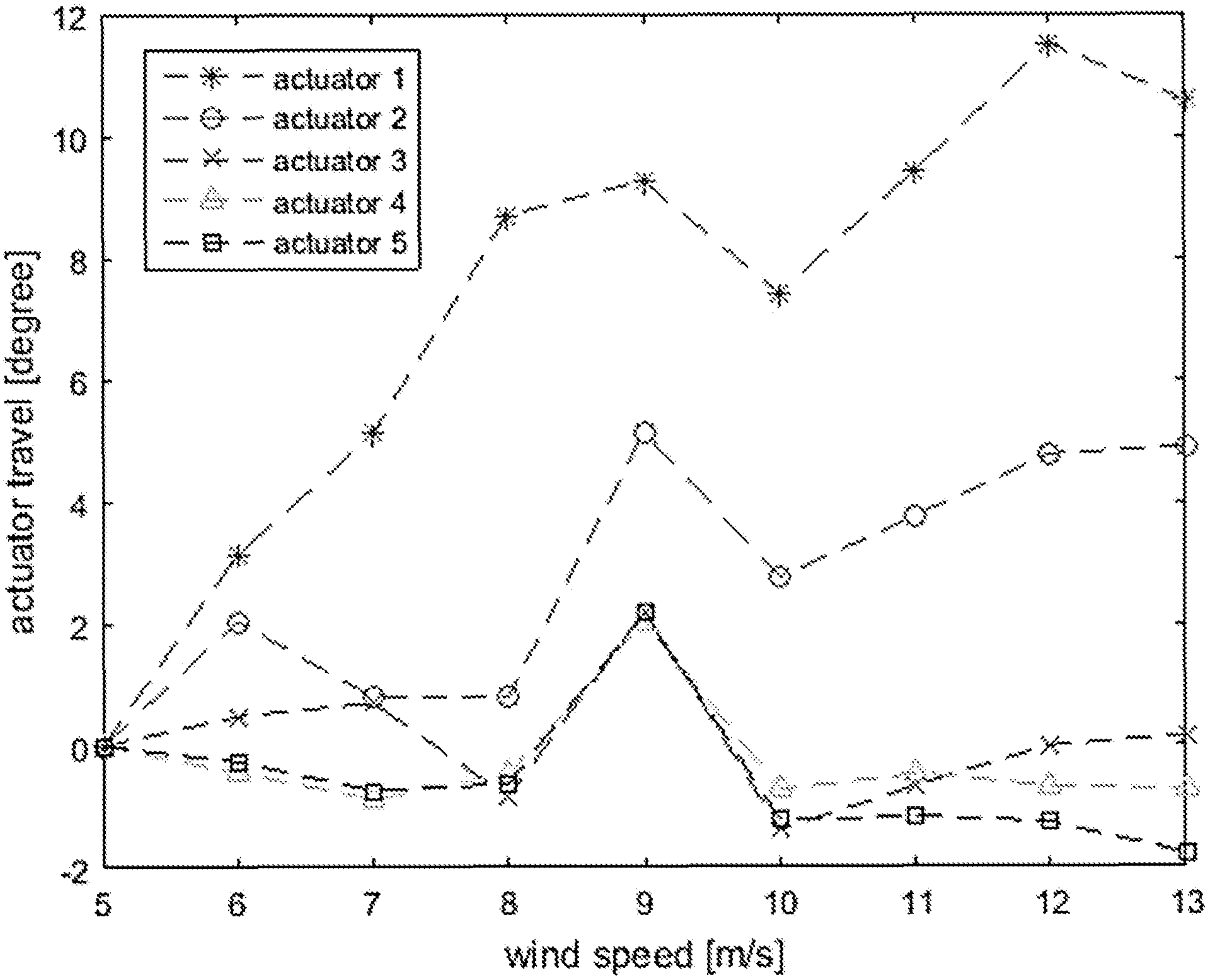

actuator 1
actuator 2
actuator 3
actuator 4
actuator 5
actuator travel [degree]
wind speed [m/s]
12
10
8
6
4
2
0
-2
5
6
7
8
9
10
11
12
13


Fig. 22

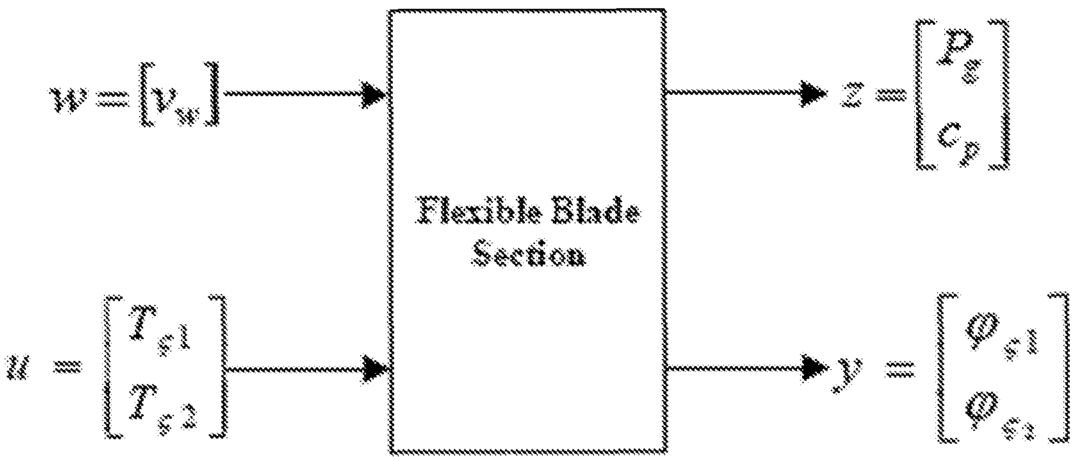

$w = [v_w]$
$u = \begin{bmatrix} T_{\varsigma 1} \\ T_{\varsigma 2} \end{bmatrix}$
Flexible Blade Section
$z = \begin{bmatrix} P_g \\ c_p \end{bmatrix}$
$y = \begin{bmatrix} \varphi_{\varsigma 1} \\ \varphi_{\varsigma 2} \end{bmatrix}$


Fig. 23

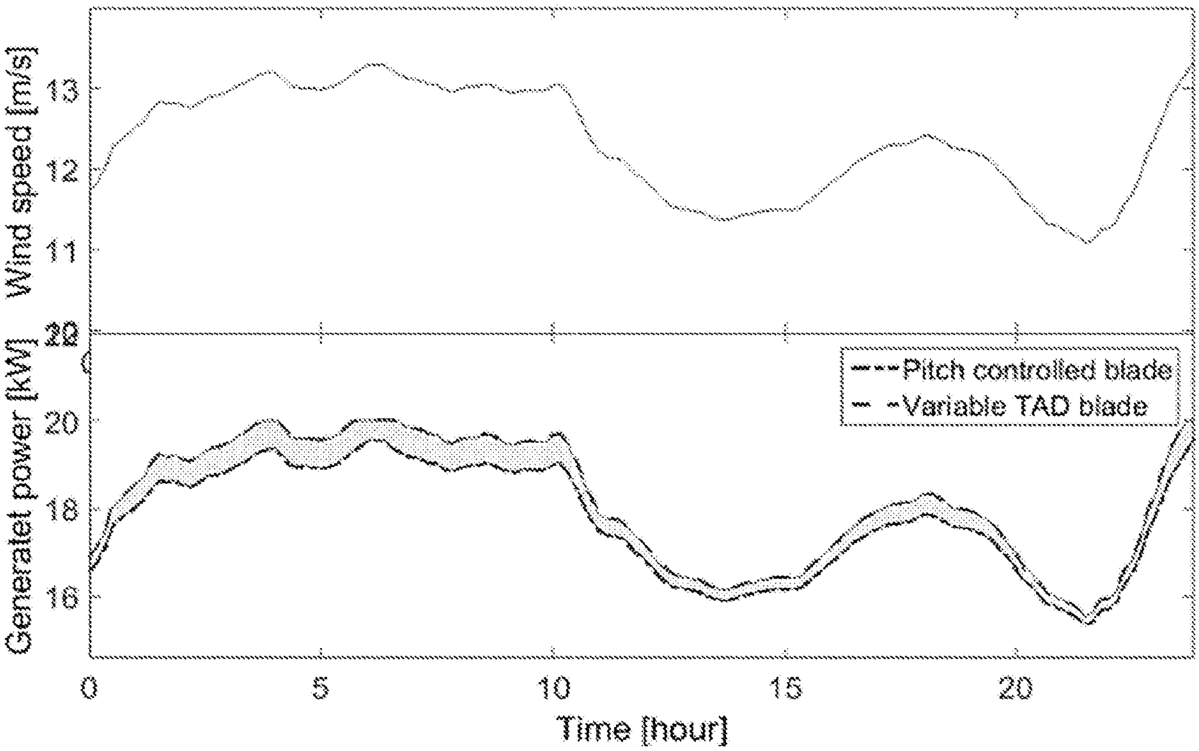
Wind speed [m/s]
13
12
11
10
Generatet power [kW]
22
20
18
16
Pitch controlled blade
Variable TAD blade
0
5
10
15
20
Time [hour]

Fig. 24

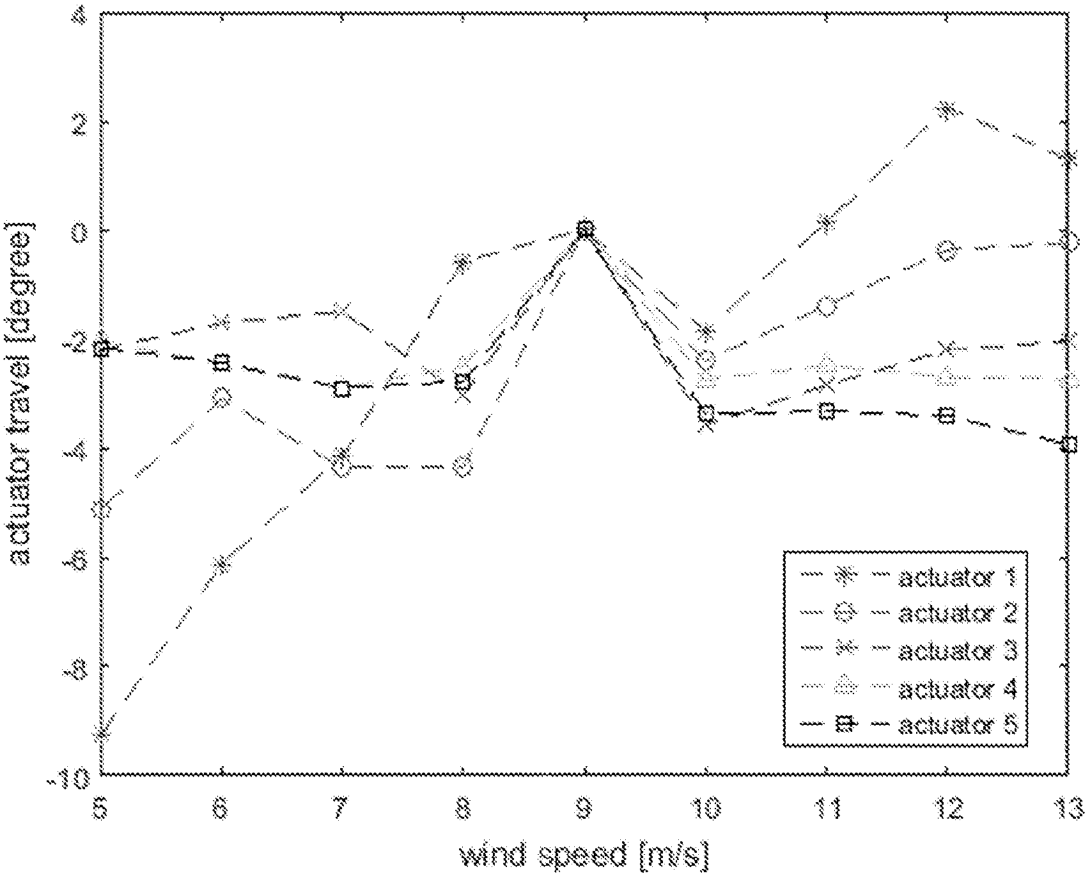
actuator travel [degree]
4
2
0
-2
-4
-6
-8
-10
5
6
7
8
9
10
11
12
13
wind speed [m/s]
actuator 1
actuator 2
actuator 3
actuator 4
actuator 5

Fig. 25

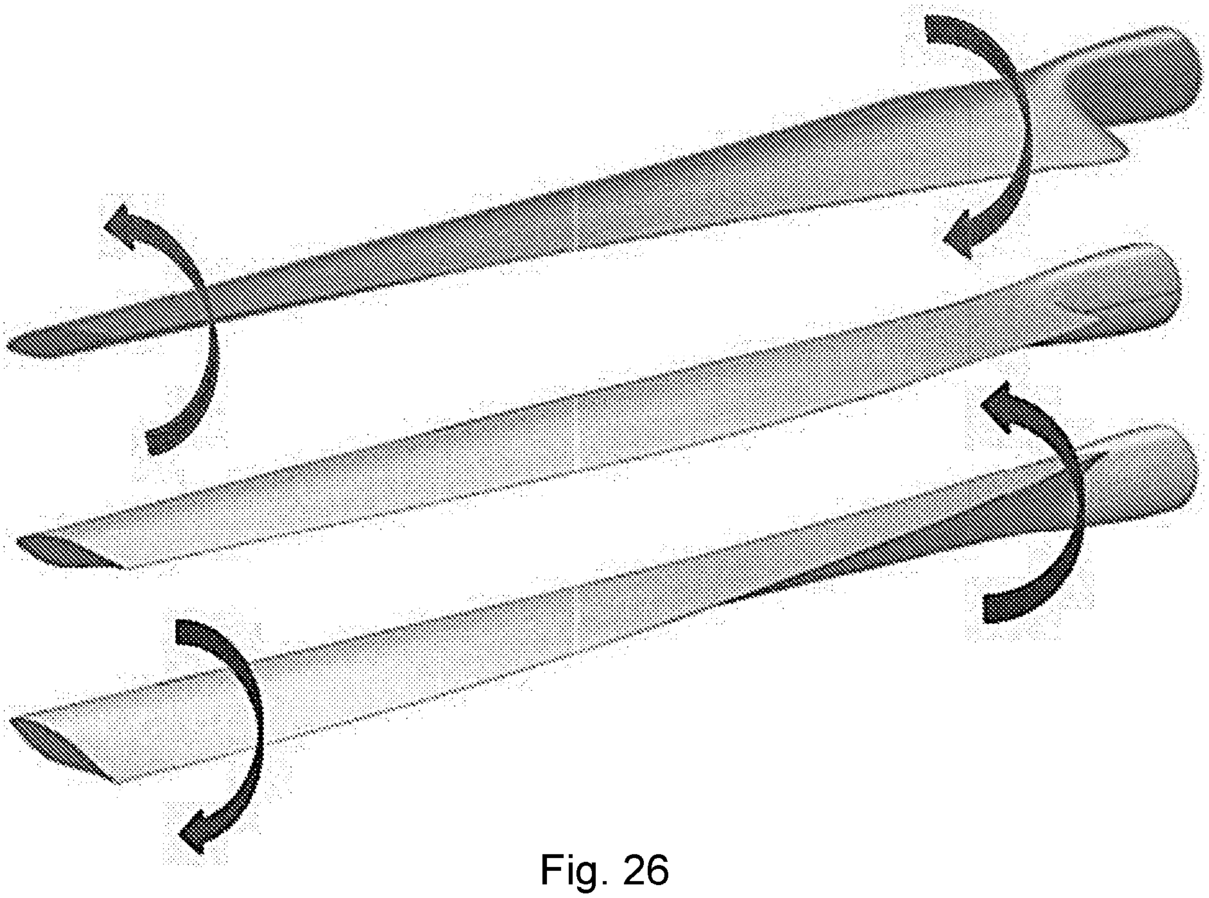

Fig. 26

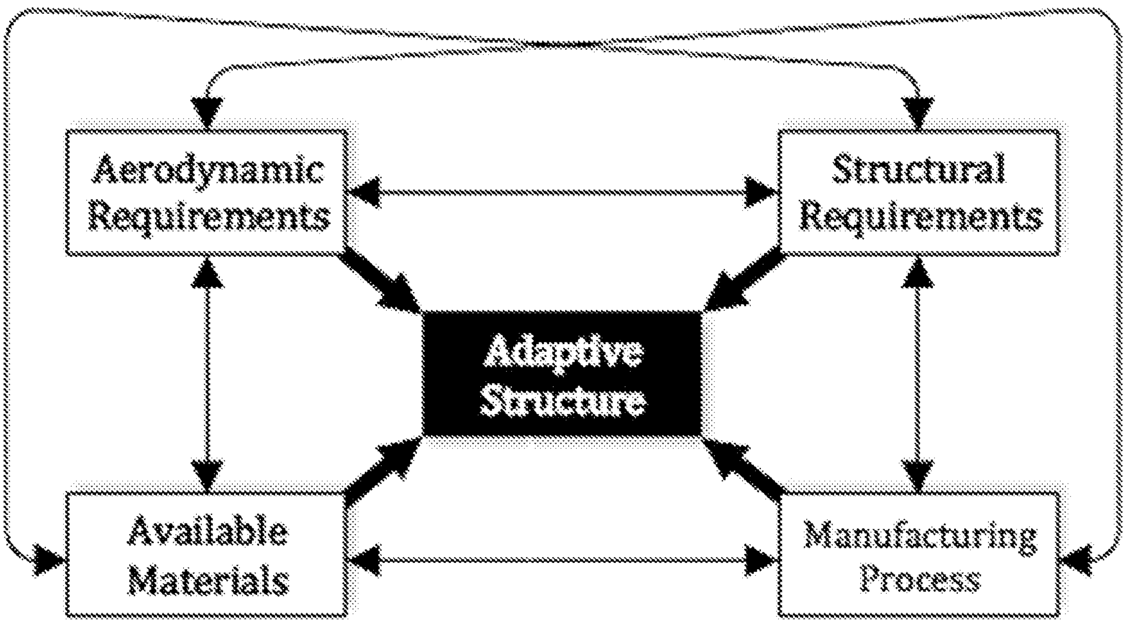
Aerodynamic Requirements
Structural Requirements
Adaptive Structure
Available Materials
Manufacturing Process

Fig. 27

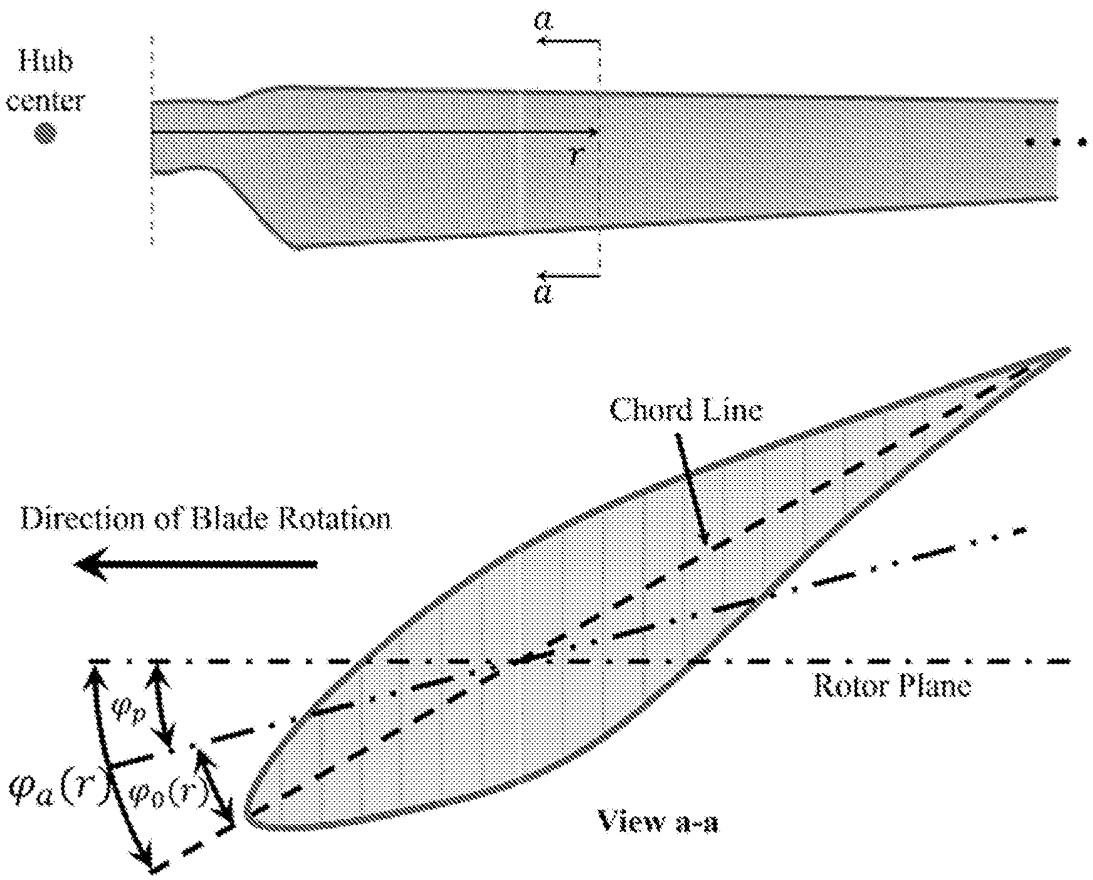
Hub center
a
r
a
Chord Line
Direction of Blade Rotation
Rotor Plane
$\varphi_p$
$\varphi_a(r)$
$\varphi_0(r)$
View a-a

Fig. 28

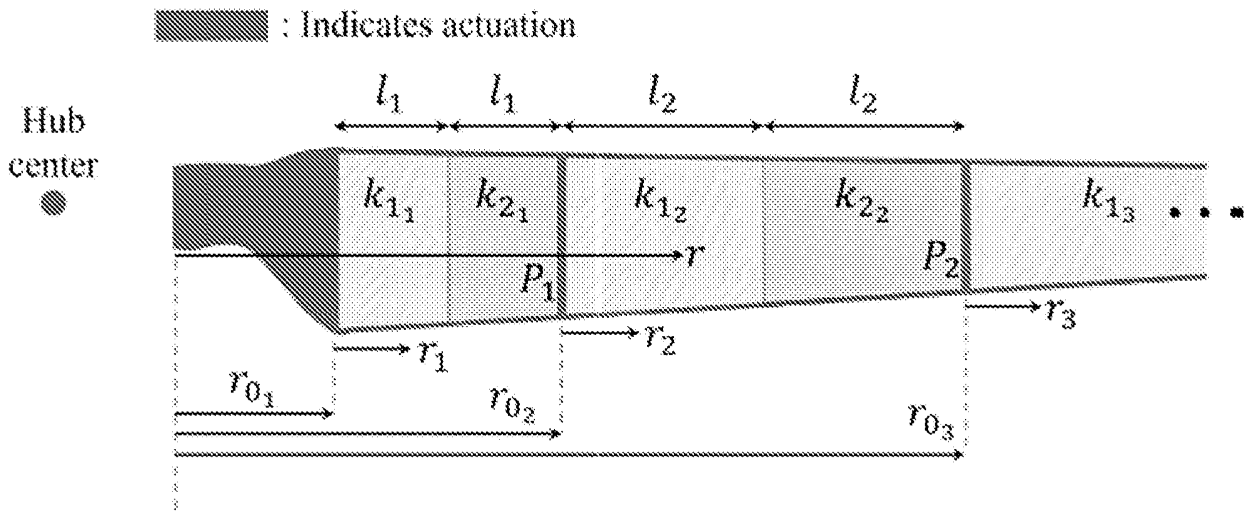
: Indicates actuation
Hub center
$l_1$
$l_1$
$l_2$
$l_2$
$k_{1_1}$
$k_{2_1}$
$k_{1_2}$
$k_{2_2}$
$k_{1_3}$
$r$
$P_1$
$P_2$
$r_1$
$r_2$
$r_3$
$r_{0_1}$
$r_{0_2}$
$r_{0_3}$

Fig. 29

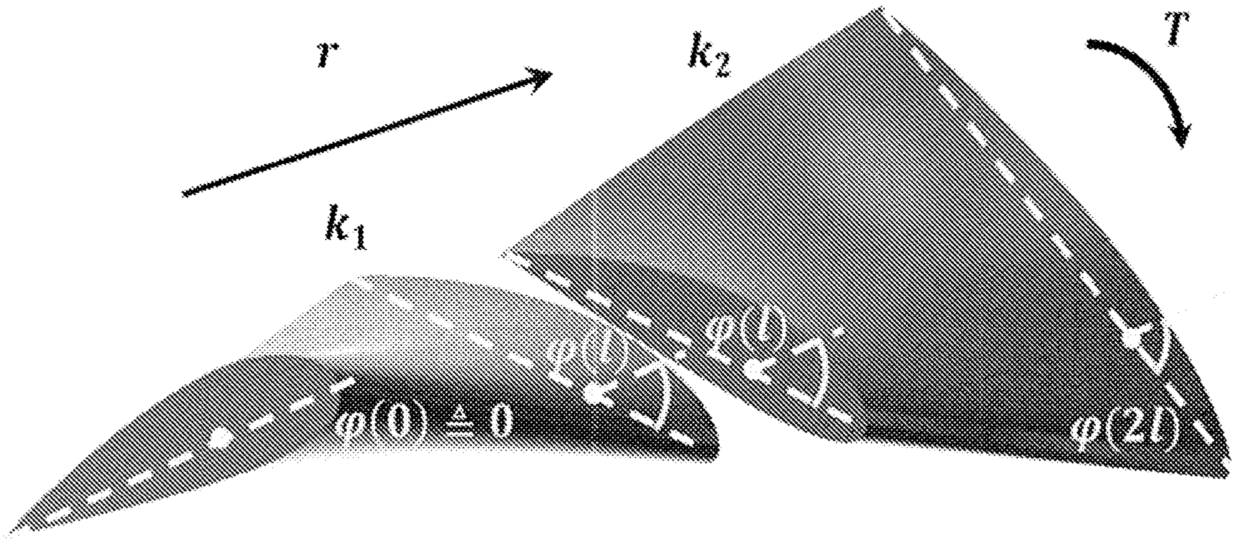
r
$k_2$
T
$k_1$
$\varphi(l)$
$\varphi(l)$
$\varphi(0) \triangleq 0$
$\varphi(2l)$

Fig. 30

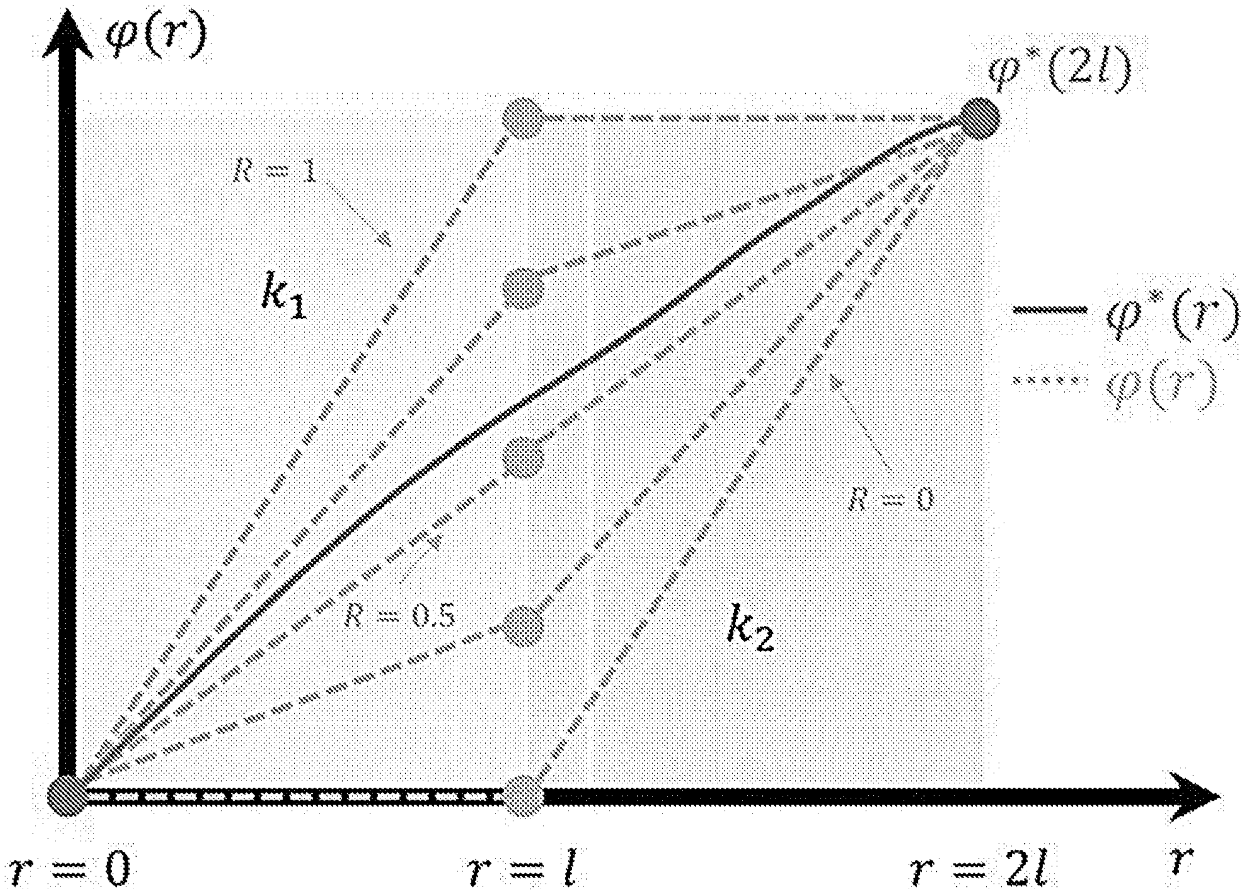
$\varphi(r)$
$\varphi^*(2l)$
$R = 1$
$k_1$
$\varphi^*(r)$
$\varphi(r)$
$R = 0$
$R = 0.5$
$k_2$
$r = 0$
$r = l$
$r = 2l$
r

Fig. 31

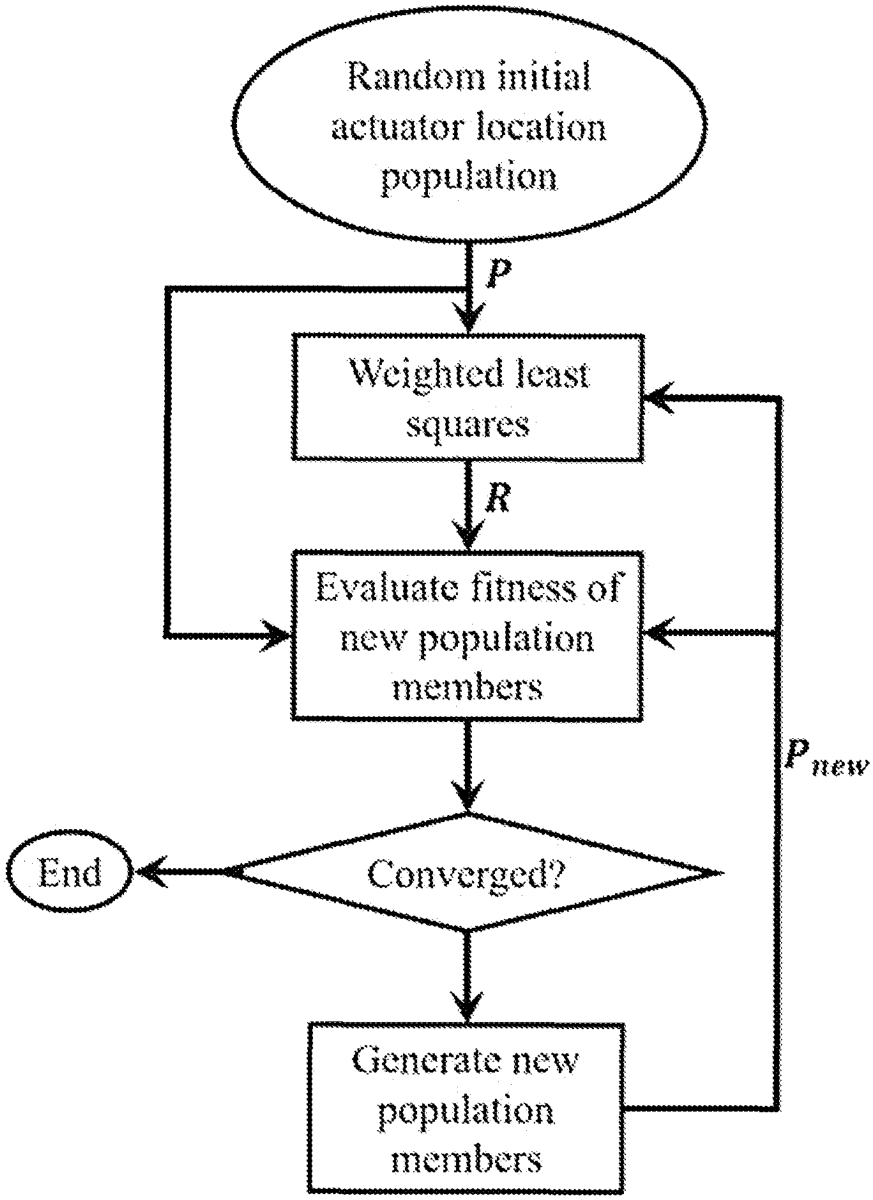
Random initial actuator location population
P
Weighted least squares
R
Evaluate fitness of new population members
Pnew
End
Converged?
Generate new population members

Fig. 32

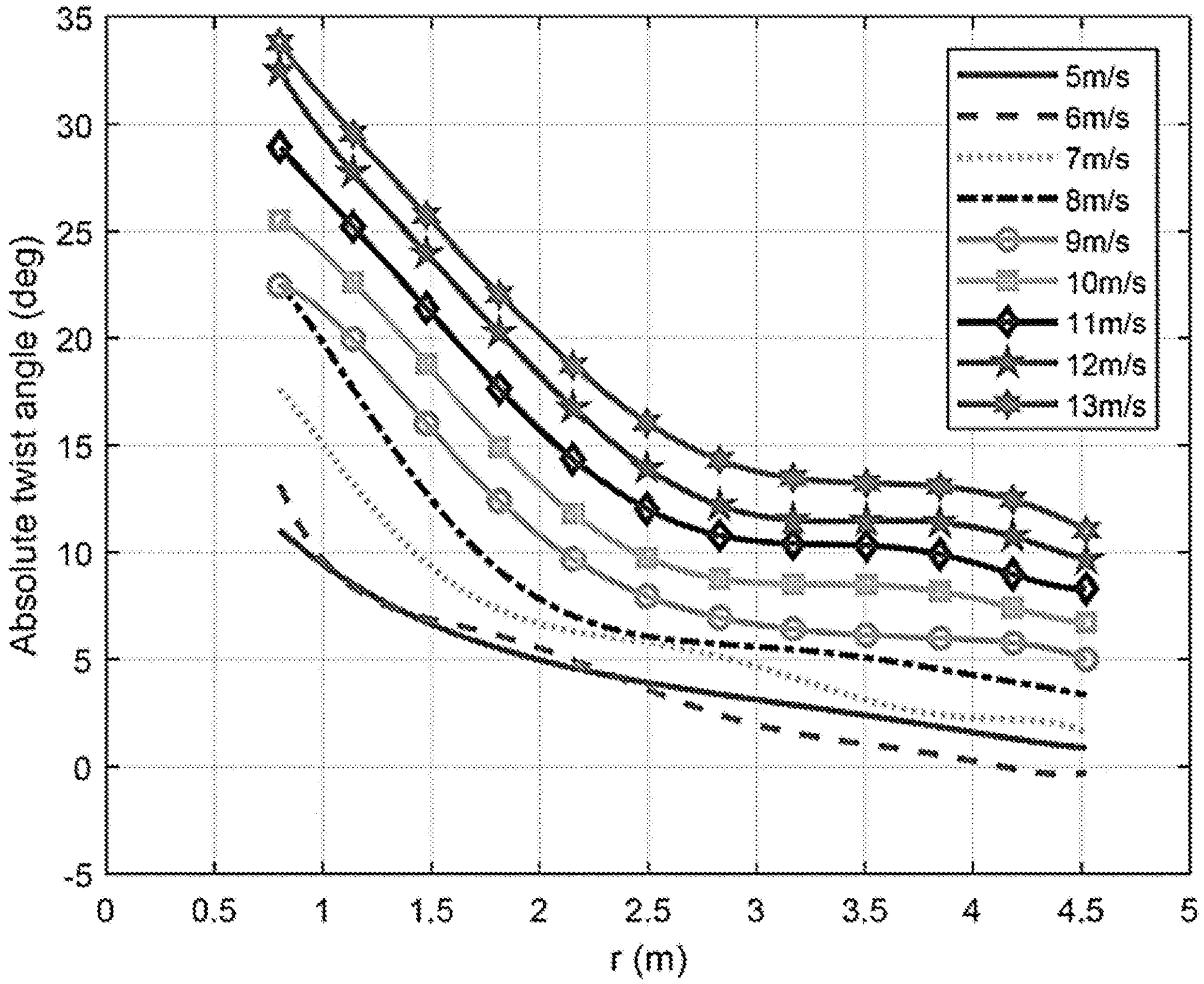

35
30
25
20
15
10
5
0
-5
0
0.5
1
1.5
2
2.5
3
3.5
4
4.5
5
Absolute twist angle (deg)
r (m)
5m/s
6m/s
7m/s
8m/s
9m/s
10m/s
11m/s
12m/s
13m/s


Fig. 33

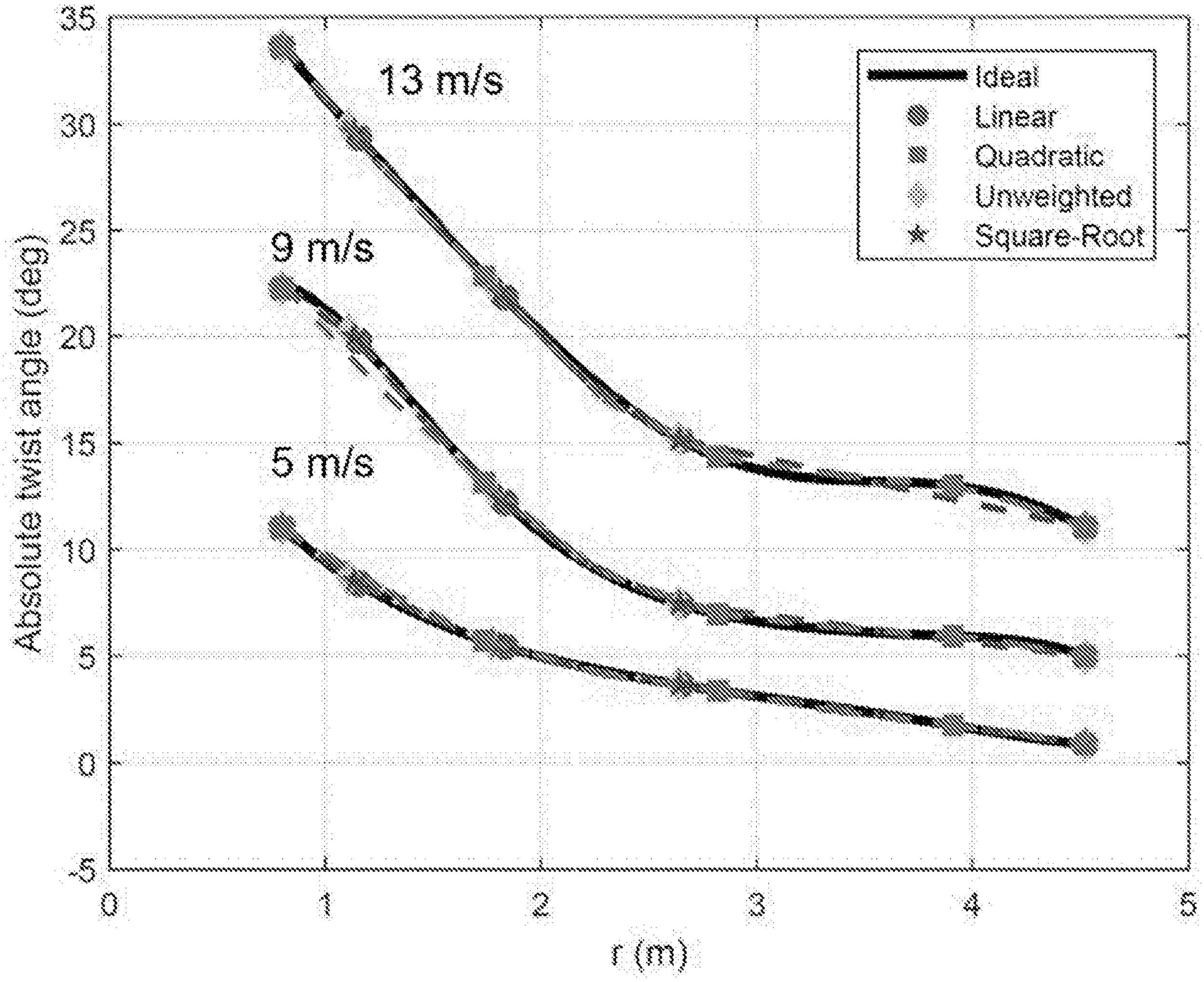
35
30
25
20
15
10
5
0
-5
0
1
2
3
4
5
Absolute twist angle (deg)
r (m)
13 m/s
9 m/s
5 m/s
Ideal
Linear
Quadratic
Unweighted
Square-Root

Fig. 34

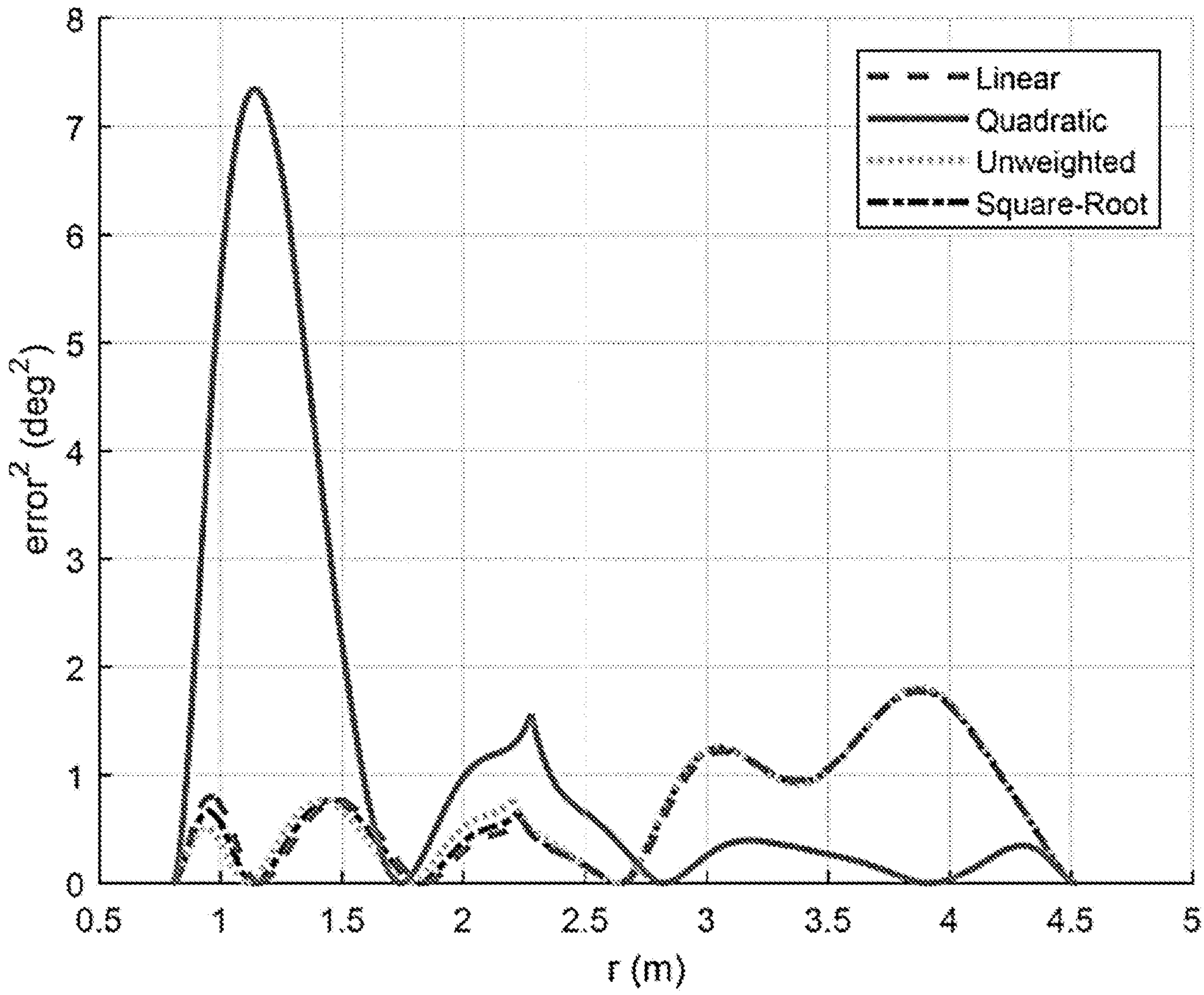
Linear
Quadratic
Unweighted
Square-Root
error$^2$ (deg$^2$)
r (m)
0
1
2
3
4
5
6
7
8
0.5
1
1.5
2
2.5
3
3.5
4
4.5
5

Fig. 35

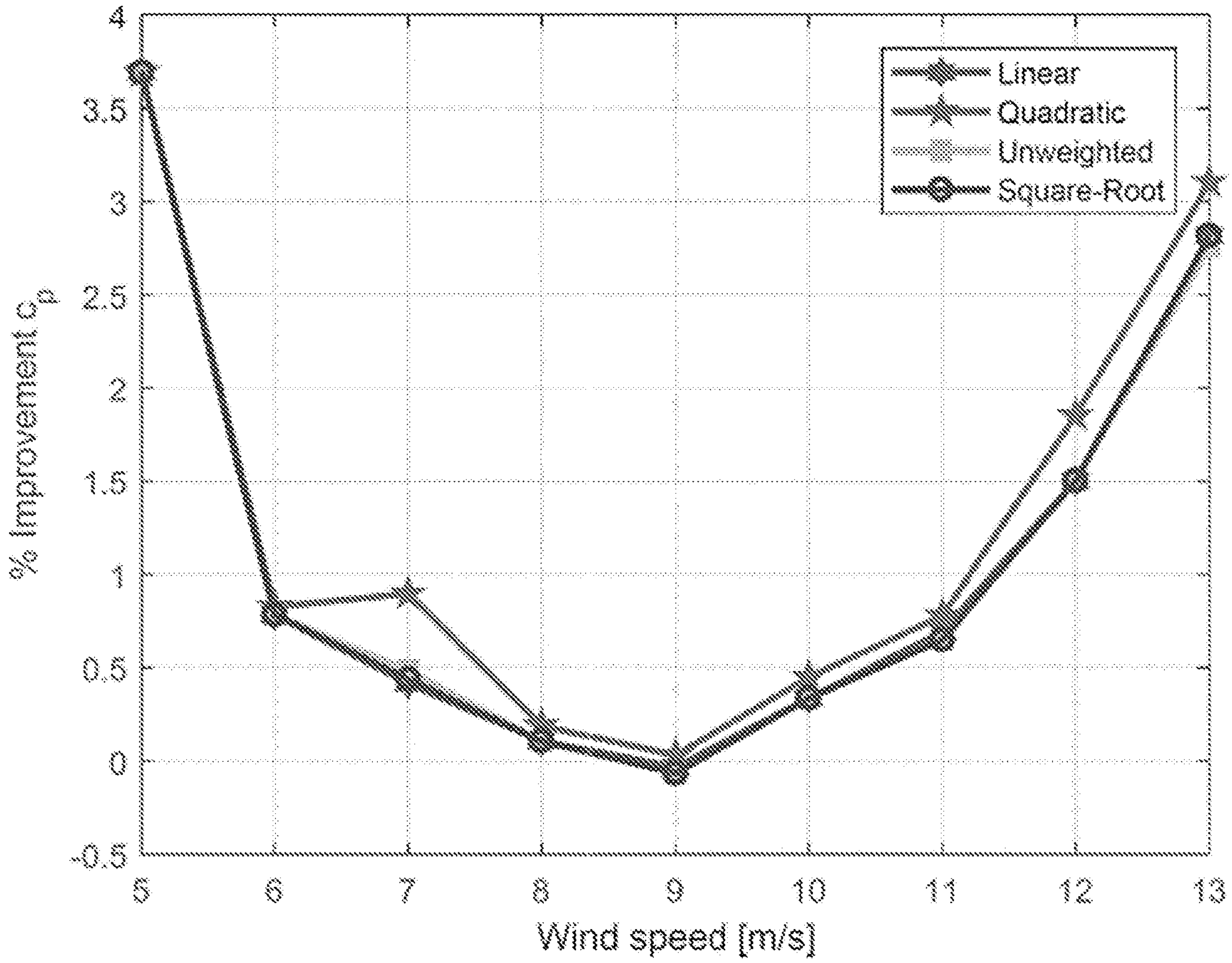


Fig. 36

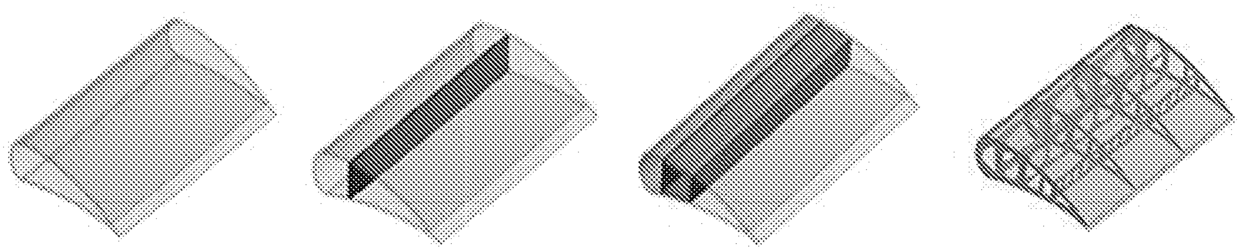

(a) (b) (c) (d)

Fig. 37

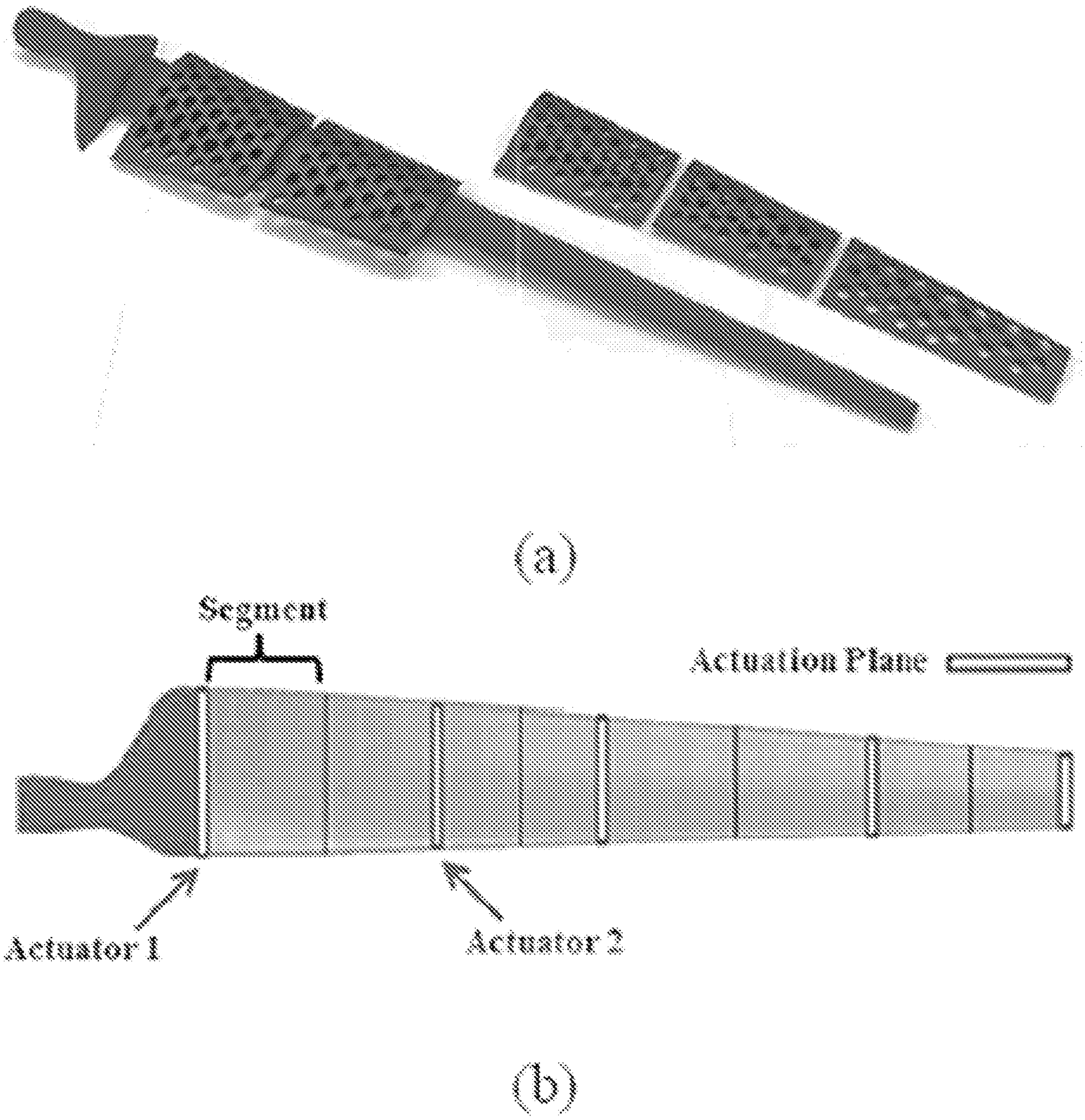


Fig. 38

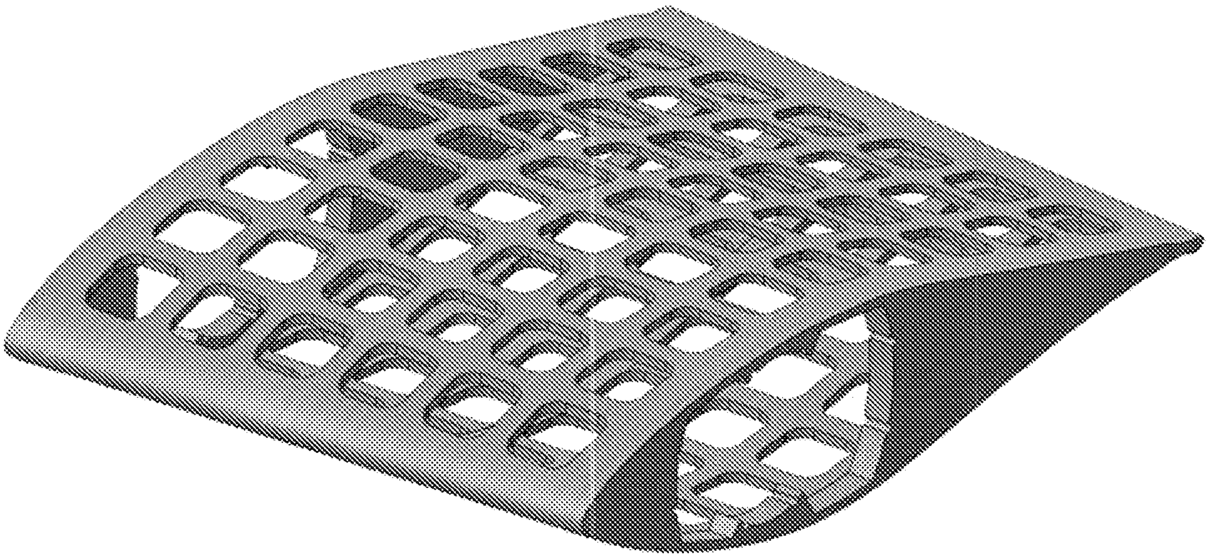

Fig. 39

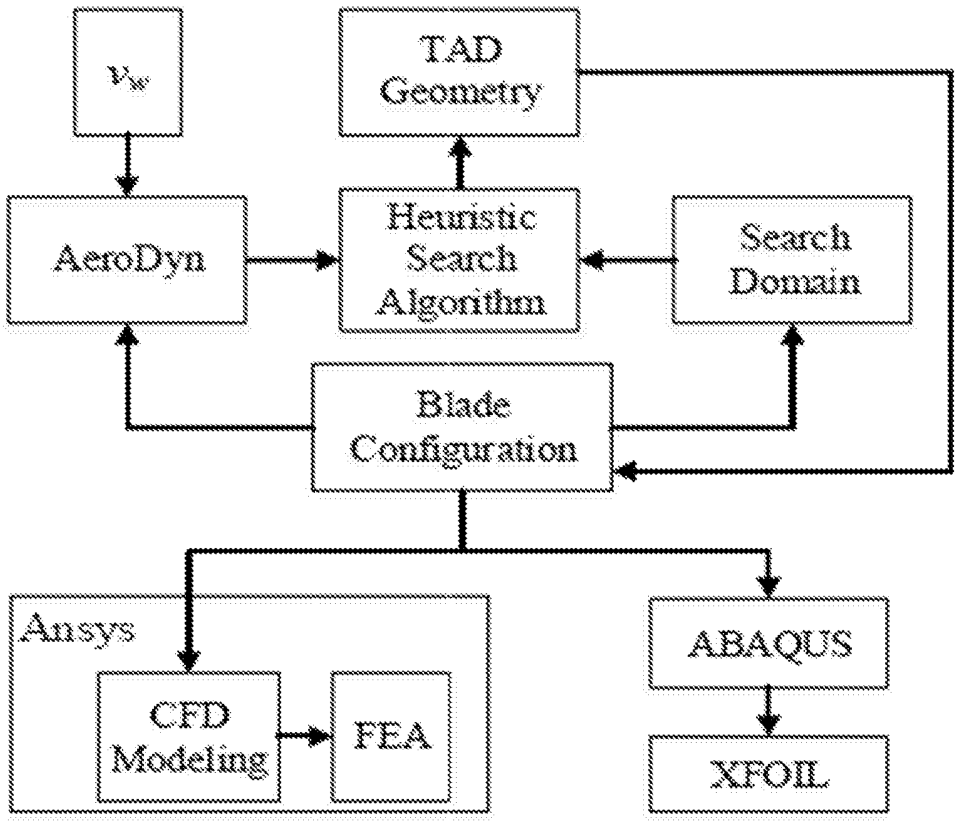
$v_w$
TAD Geometry
AeroDyn
Heuristic Search Algorithm
Search Domain
Blade Configuration
Ansys
CFD Modeling
FEA
ABAQUS
XFOIL

Fig. 40

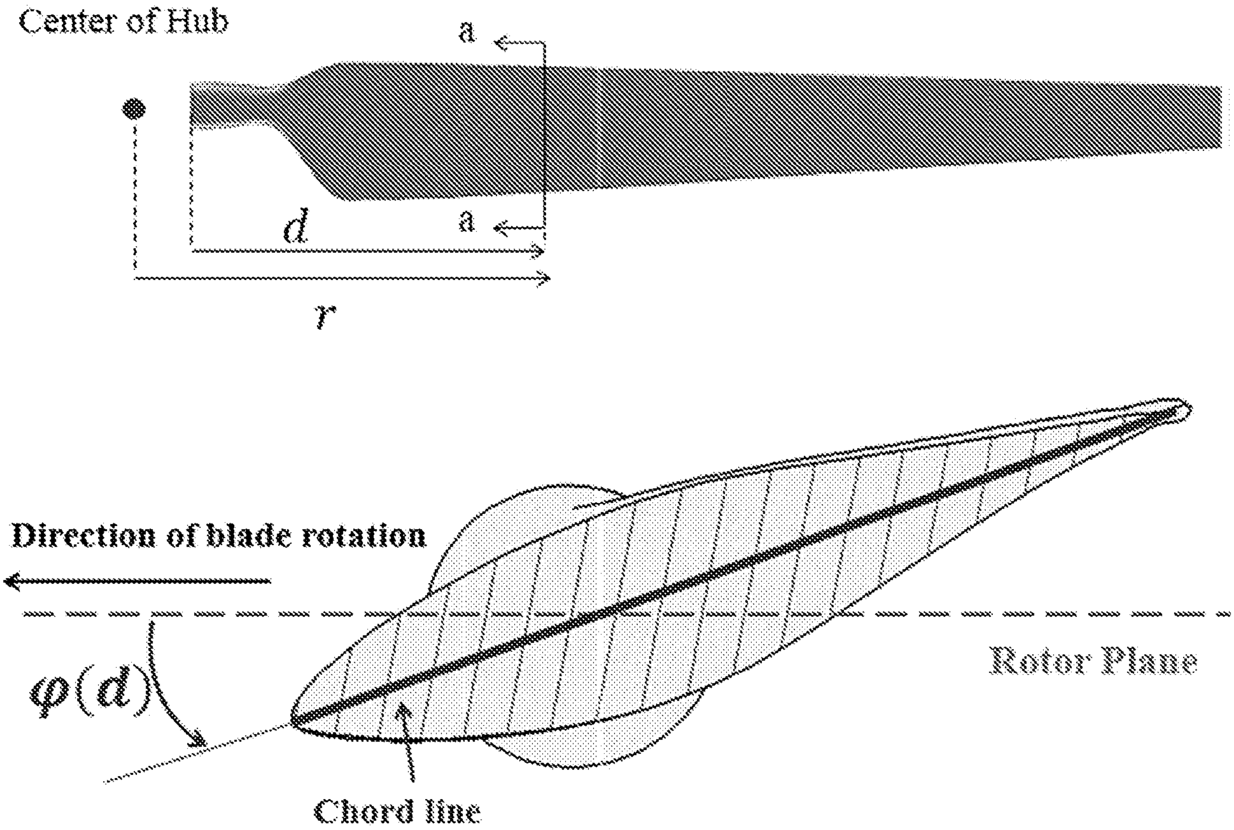
Center of Hub
a
d
a
r
Direction of blade rotation
φ(d)
Rotor Plane
Chord line

Fig. 41

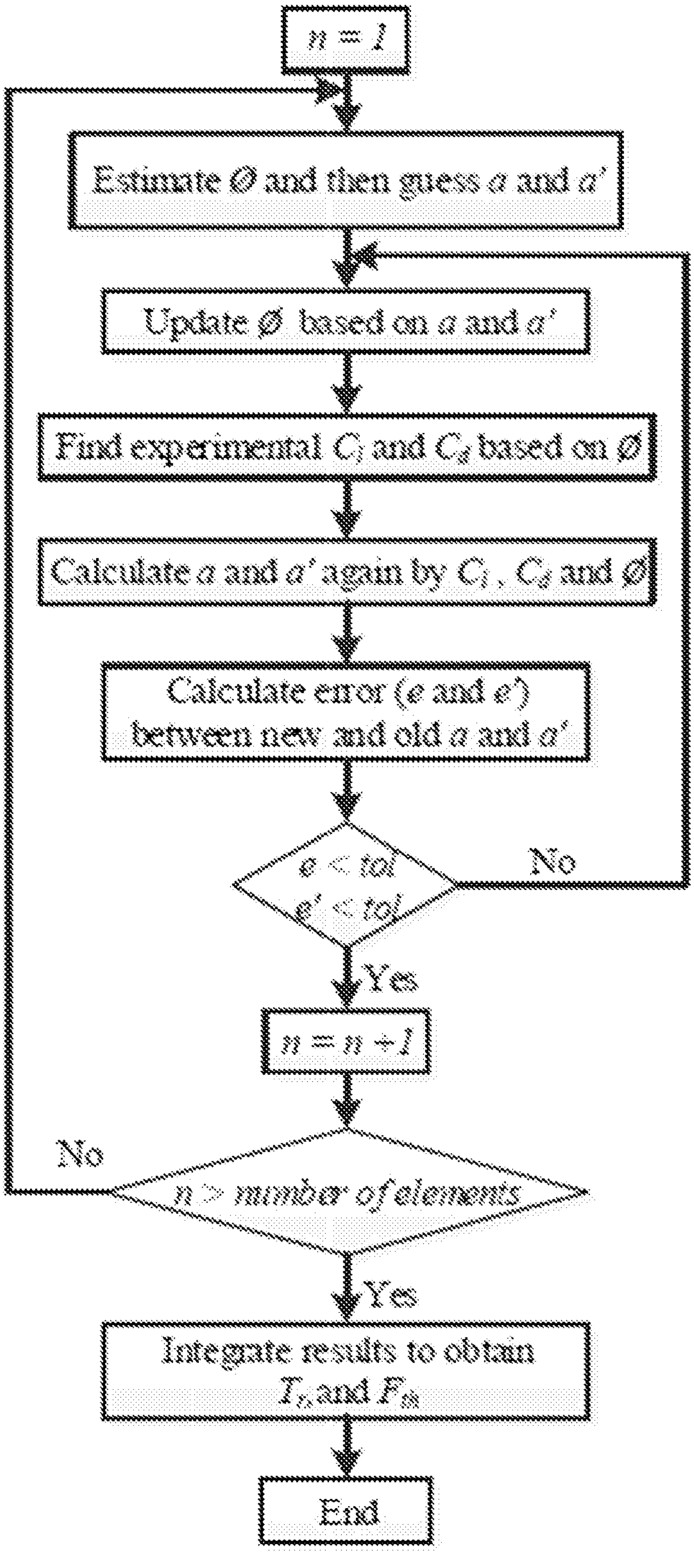
n = 1
Estimate Ø and then guess a and a'
Update Ø based on a and a'
Find experimental $C_l$ and $C_d$ based on Ø
Calculate a and a' again by $C_l$ , $C_d$ and Ø
Calculate error (e and e')
between new and old a and a'
e < tol
e' < tol
No
Yes
n = n + 1
No
n > number of elements
Yes
Integrate results to obtain
$T_r$ and $F_{th}$
End

Fig. 42

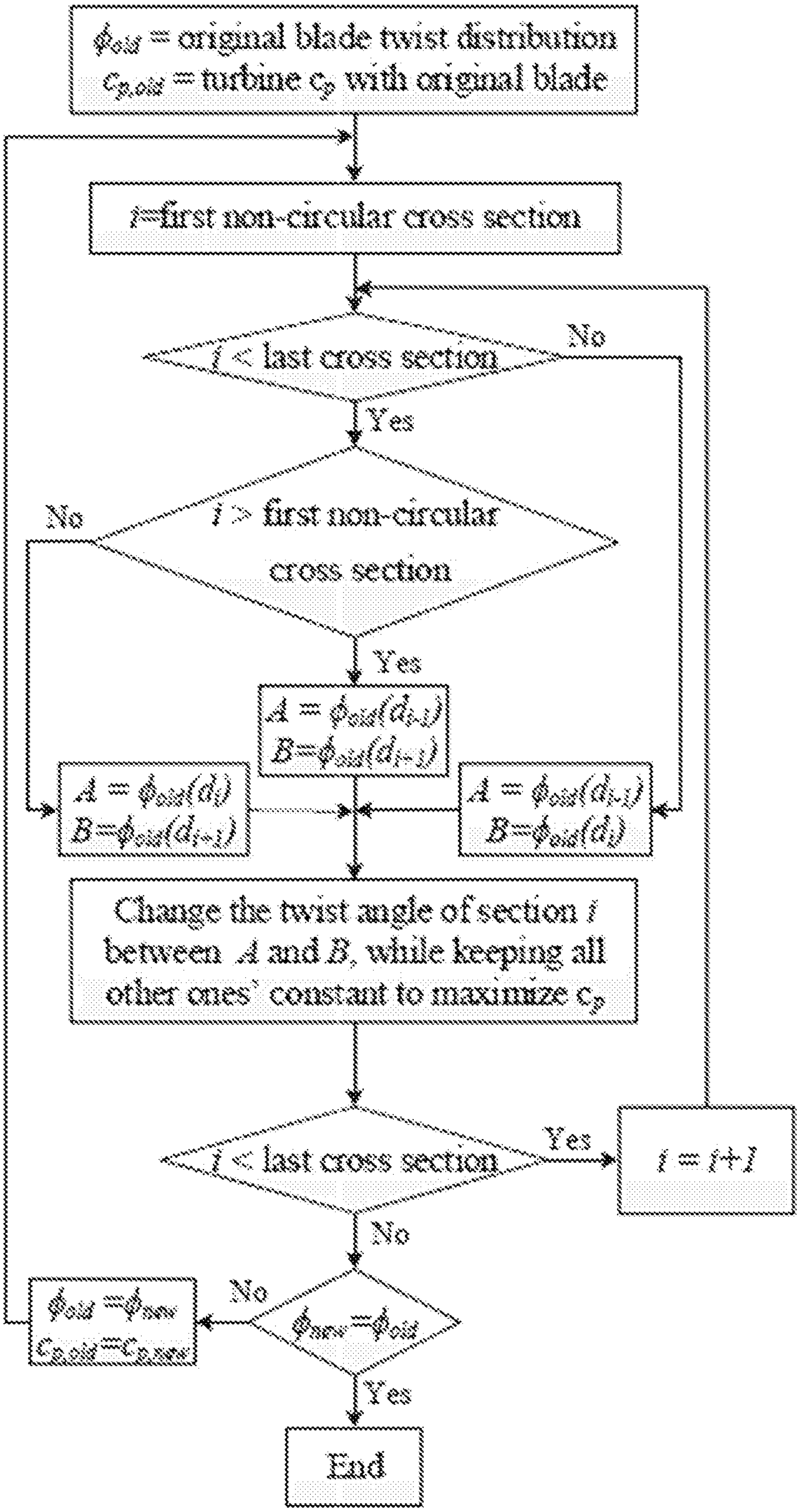

$\phi_{old}$ = original blade twist distribution
$c_{p,old}$ = turbine $c_p$ with original blade
$i$=first non-circular cross section
$i$ < last cross section
No
Yes
$i$ > first non-circular cross section
No
Yes
$A = \phi_{old}(d_{i-1})$
$B=\phi_{old}(d_{i+1})$
$A = \phi_{old}(d_i)$
$B=\phi_{old}(d_{i+1})$
$A = \phi_{old}(d_{i-1})$
$B=\phi_{old}(d_i)$
Change the twist angle of section $i$ between $A$ and $B$, while keeping all other ones' constant to maximize $c_p$
$i$ < last cross section
Yes
$i = i+1$
No
$\phi_{new}=\phi_{old}$
No
$\phi_{old}=\phi_{new}$
$c_{p,old}=c_{p,new}$
Yes
End


Fig. 43

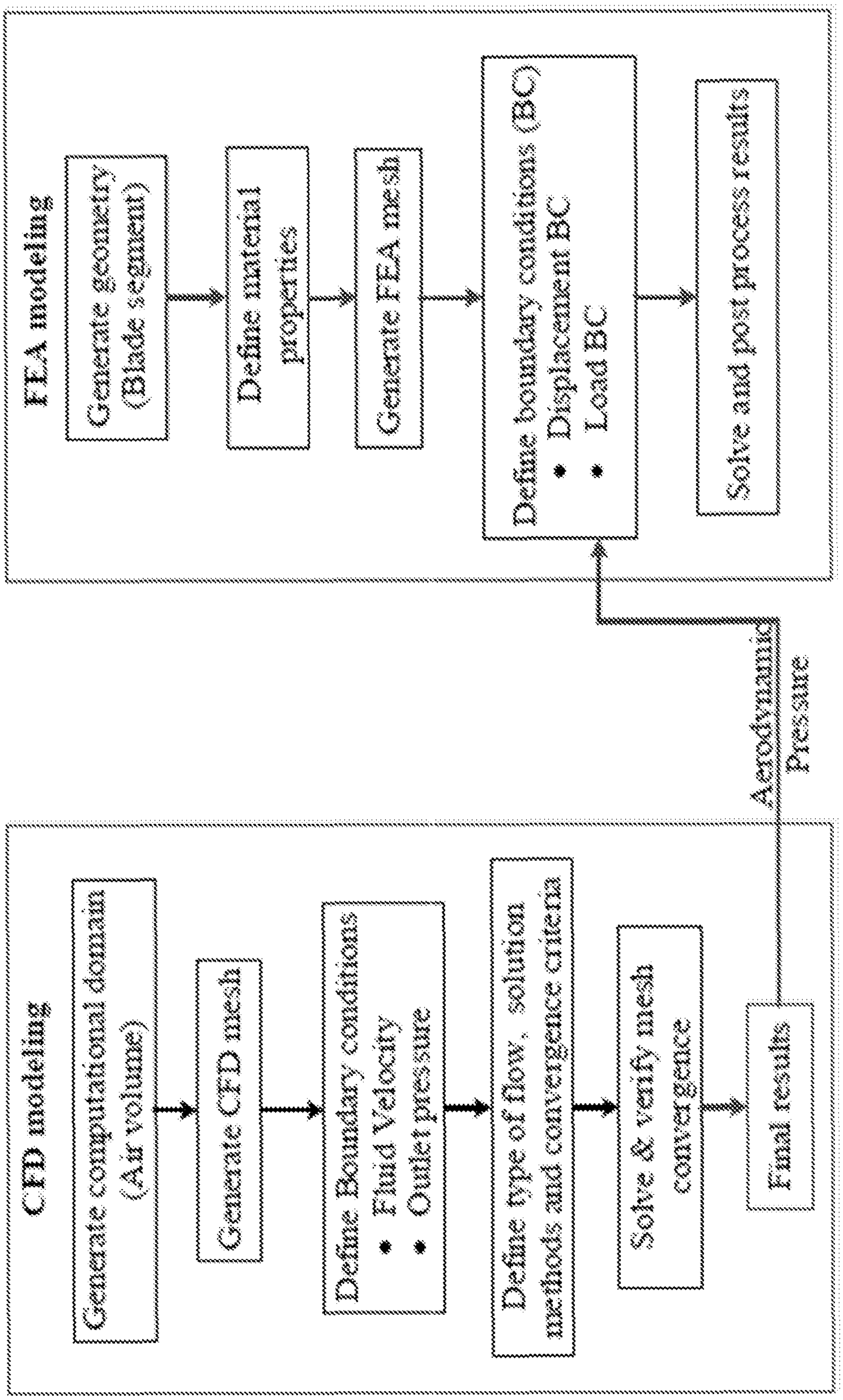
CFD modeling
Generate computational domain (Air volume)
Generate CFD mesh
Define Boundary conditions
• Fluid Velocity
• Outlet pressure
Define type of flow, solution methods and convergence criteria
Solve & verify mesh convergence
Final results
Aerodynamic Pressure
FEA modeling
Generate geometry (Blade segment)
Define material properties
Generate FEA mesh
Define boundary conditions (BC)
• Displacement BC
• Load BC
Solve and post process results

Fig. 44

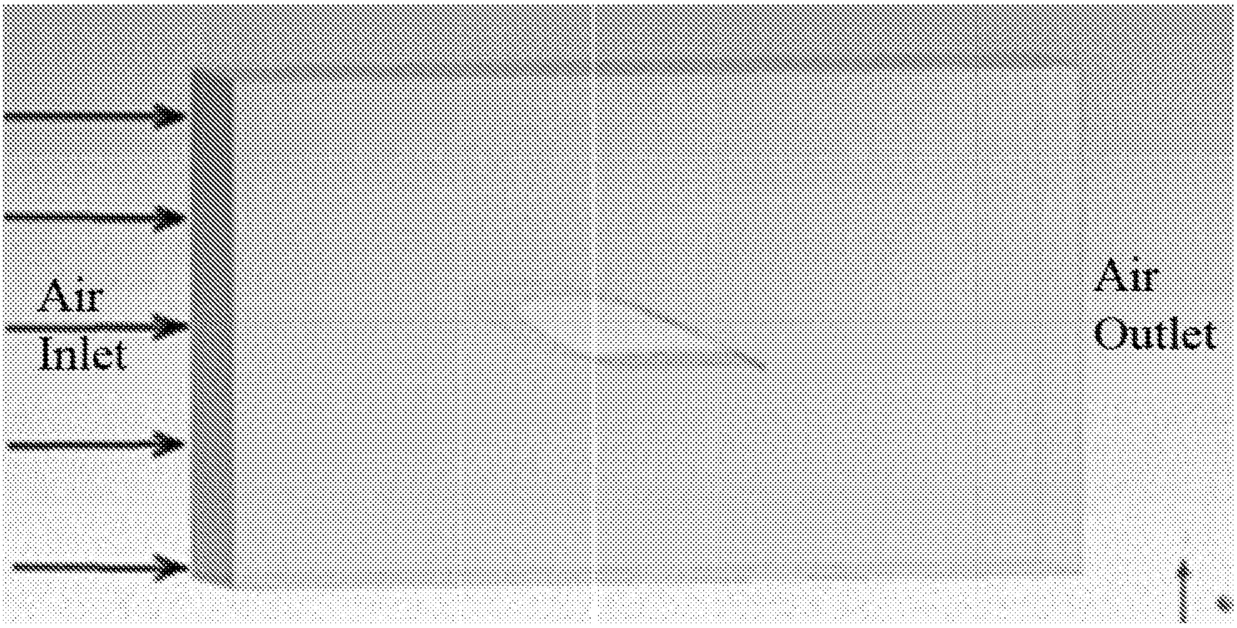


Fig. 45

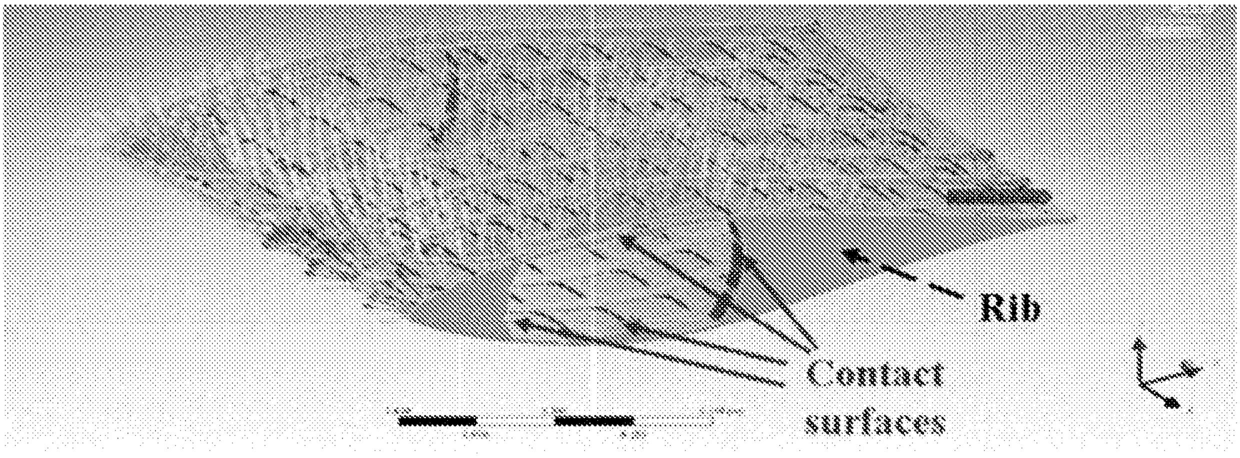
Rib
Contact
surfaces

Fig. 46

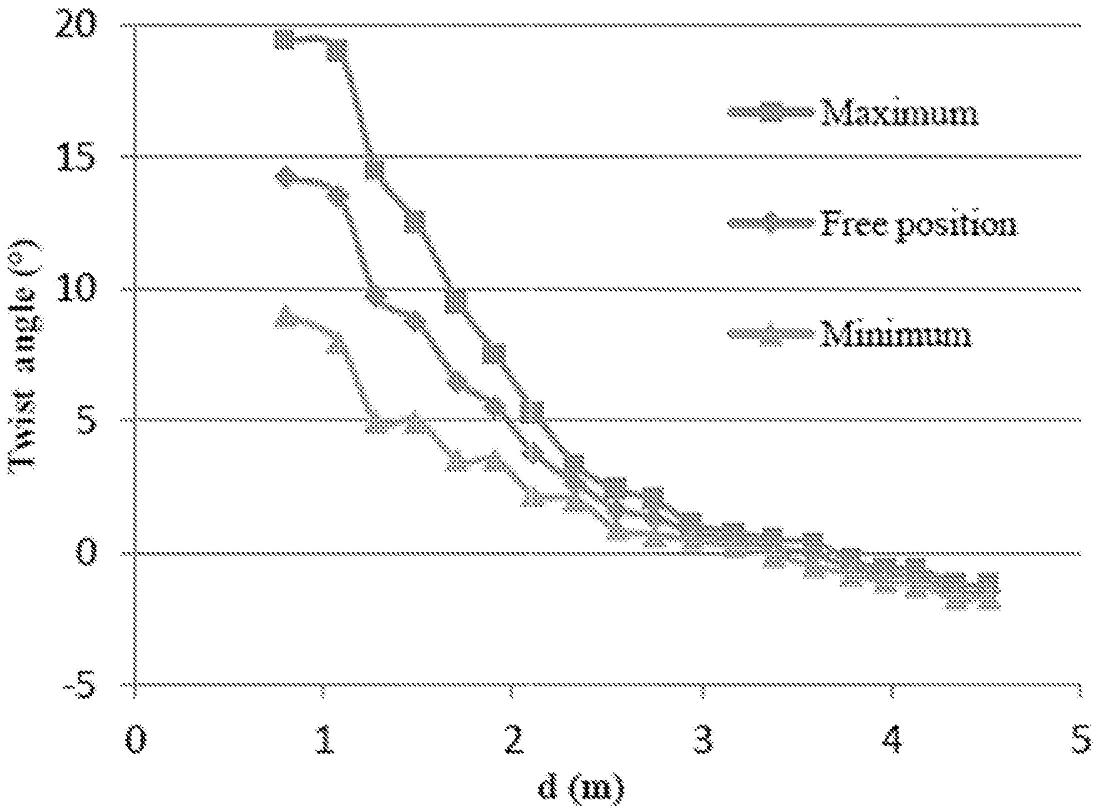
20
15
10
5
0
-5
Twist angle (°)
0
1
2
3
4
5
d (m)
Maximum
Free position
Minimum

Fig. 47

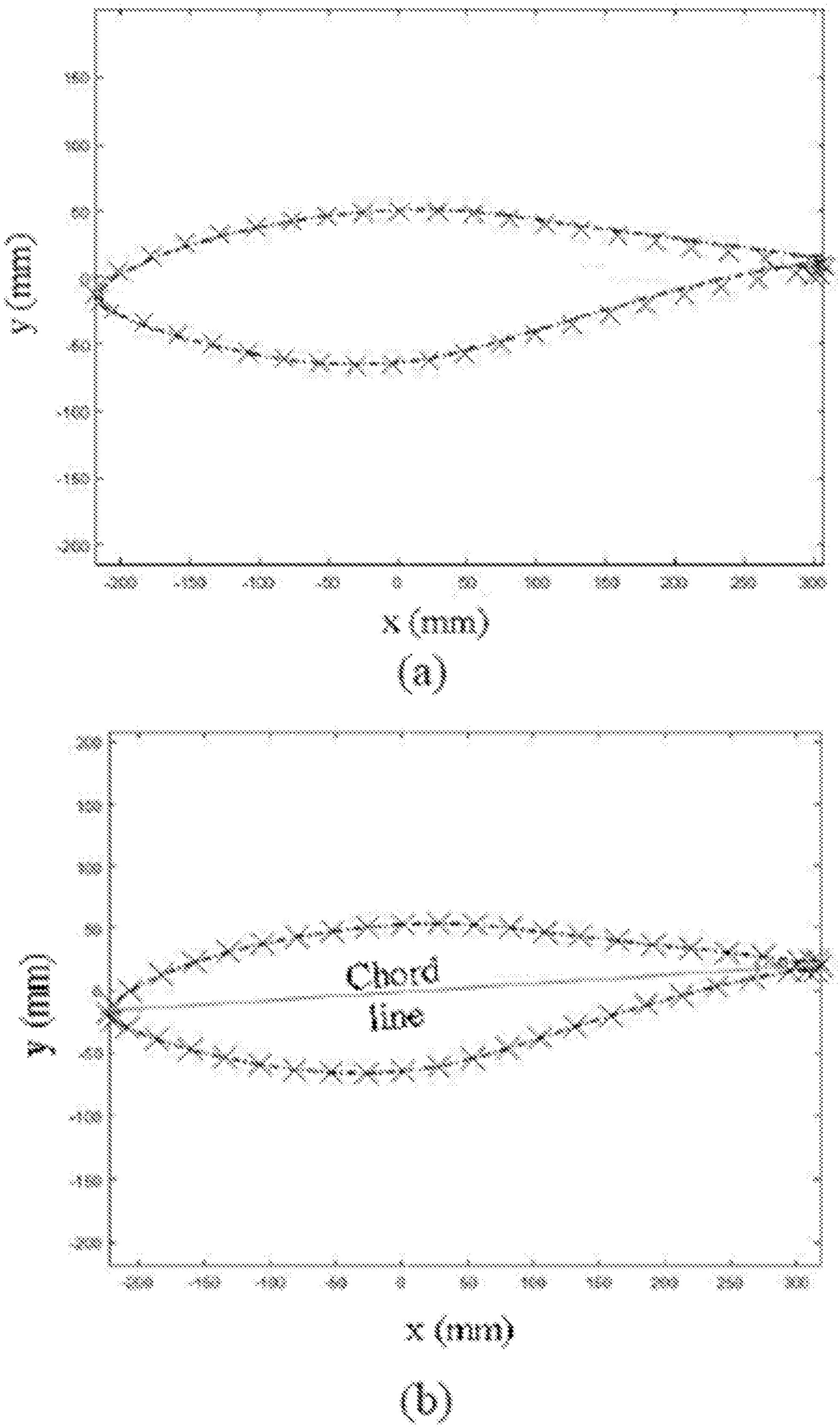


Fig. 48

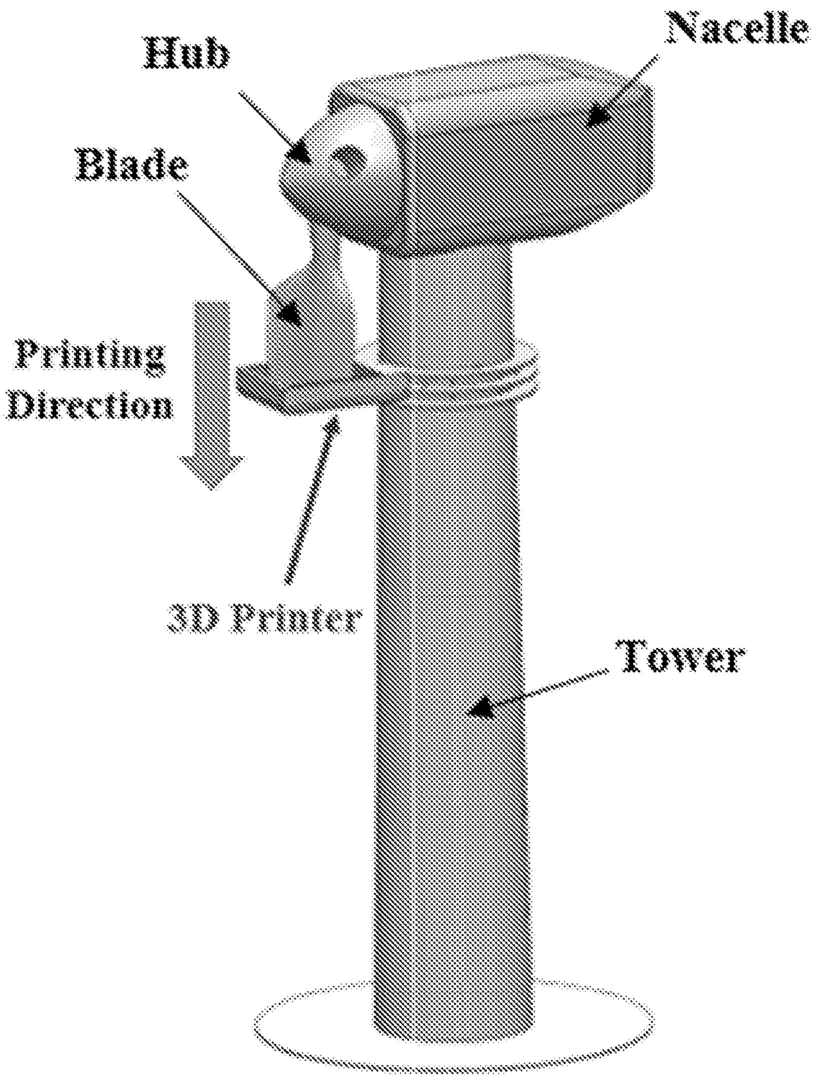


Fig. 49

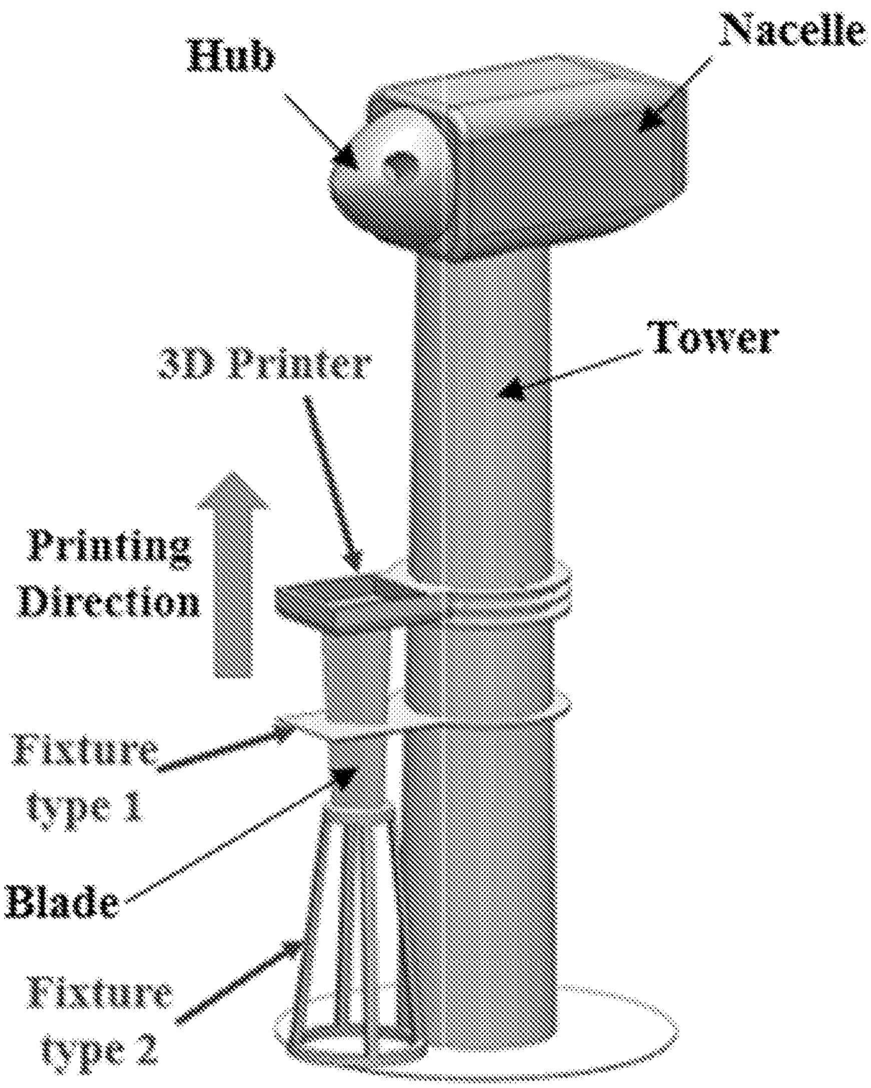
Hub
Nacelle
Tower
3D Printer
Printing Direction
Fixture type 1
Blade
Fixture type 2

Fig. 50

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62644138
- US 20120169060 A1
- GB 2525900 A
- US 7118338 B2
- US 20140037455 A1
- WO 2012103891 A2
- US 20150354536 A1